(19) Europäisches Patentamt
European Patent Office
Office européen des brevets

(11) **EP 4 746 321 A1**

(12) **EUROPEAN PATENT APPLICATION**
published in accordance with Art. 153(4) EPC

(43) Date of publication:
**20.05.2026   Bulletin 2026/21**

(21) Application number: **23947162.6**

(22) Date of filing: **03.08.2023**

(51) International Patent Classification (IPC):
**H04J 13/00** (2011.01)

(52) Cooperative Patent Classification (CPC):
**H04J 13/00**

(86) International application number:
**PCT/CN2023/111043**

(87) International publication number:
**WO 2025/025218 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **FENG, Qi
  Shenzhen, Guangdong 518129 (CN)**
• **WANG, Fan
  Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **CYCLIC SHIFT METHOD FOR ROOT SEQUENCE, AND APPARATUS**

(57)     A cyclic shift method for a root sequence and an apparatus are provided. The method includes: A communication apparatus determines a cyclic shift of the root sequence, where the cyclic shift of the root sequence is associated with a sequence length of the root sequence, a root sequence number, a maximum round-trip time, and a maximum Doppler frequency shift; and the communication apparatus determines a cyclic shift sequence based on the cyclic shift of the root sequence, where an ambiguity function of the cyclic shift sequence is equal to zero within a range of the maximum round-trip time and the maximum Doppler frequency shift. According to the method in this application, the communication apparatus can obtain, based on the root sequence, the cyclic shift sequence whose ambiguity function is equal to zero.

201: A communication apparatus determines a cyclic shift of a root sequence, where the cyclic shift of the root sequence is associated with a sequence length of the root sequence, a root sequence number, a maximum round-trip time, and a maximum Doppler frequency shift

202: The communication apparatus determines a cyclic shift sequence based on the cyclic shift of the root sequence, where an ambiguity function of the cyclic shift sequence is equal to zero within a range of the maximum round-trip time and the maximum Doppler frequency shift

FIG. 2

EP 4 746 321 A1

**Description**

TECHNICAL FIELD

This application relates to the field of communication technologies, and in particular, to a cyclic shift method for a root sequence and an apparatus.

BACKGROUND

Communication sequences widely exist in the long term evolution (long term evolution, LTE)/new radio (new radio, NR) standard protocol. A downlink synchronization signal, uplink random access, and the like may be implemented by using correlation between sequences, and pilot multiplexing may be implemented by using orthogonality between sequences. Common sequence evaluation indicators include: autocorrelation, cross-correlation, sequence capacity, antifrequency offset, peak-to-average power ratio, dual-domain constant modulus, and the like. How to determine a cyclic shift sequence of a root sequence based on the root sequence is a research direction.

SUMMARY

This application provides a cyclic shift method for a root sequence and an apparatus, to determine a cyclic shift of the root sequence.

According to a first aspect, a cyclic shift method for a root sequence is provided. The method is performed by a communication apparatus. For example, the communication apparatus may be a terminal, or a chip, a circuit, or the like used in the terminal. Alternatively, the communication apparatus may be an access network device, or a chip, a circuit, or the like used in the access network device. The method includes: determining a cyclic shift of the root sequence, where the cyclic shift of the root sequence is associated with a sequence length of the root sequence, a root sequence number, a maximum round-trip timeround-trip time, and a maximum Doppler frequency shift; and determining a cyclic shift sequence based on the cyclic shift of the root sequence, where an ambiguity function of the cyclic shift sequence is equal to zero within a range of the maximum round-trip timeround-trip time and the maximum Doppler frequency shift.

According to the foregoing design, the communication apparatus may determine a cyclic shift restricted set for resisting any subcarrier spacing frequency offset. For example, a subcarrier spacing frequency offset that needs to be resisted currently, that is, the maximum Doppler frequency shift $\Delta_F$, is input into the solution of this application, to obtain a corresponding cyclic shift restricted set, or obtain a corresponding cyclic shift sequence. For example, when there is no need to resist a frequency offset, the maximum Doppler frequency shift is $\Delta_F = 1$; when a frequency offset of $\pm 1$ subcarrier spacings is resisted, the maximum Doppler frequency shift is $\Delta_F = 3$; when a frequency offset of $\pm 2$ subcarrier spacings is resisted, the maximum Doppler frequency shift is $\Delta_F = 5$; or when a frequency offset of $\pm f$ subcarrier spacings is resisted, the maximum Doppler frequency shift is $\Delta_F = 2 \cdot f + 1$.

In a design, determining the cyclic shift sequence $s_{u,v}(n)$ based on the cyclic shift $C_v$ of the root sequence satisfies:

$$s_{u,v}(n) = e^{-j\pi u(n+C_v)(n+C_v+1)/N}$$

$N$ represents the sequence length of the root sequence, $N$ is a prime number, $u$ represents the root sequence number, a value range of $u$ is $1 \leq u \leq N - 1$, n represents a symbol index of the cyclic shift sequence, a value range of $n$ is $0 \leq n \leq N - 1$, and $v$ represents an index of the cyclic shift of the root sequence.

In a design, ambiguity functions $A(\tau, v)$ of cyclic shift sequences $s_{u,y1}(n)$ and $s_{u,v2}(n)$ are equal to zero within the range of the maximum round-trip time $\Delta_T$ and the maximum Doppler frequency shift $\Delta_F$, and satisfy:

$$A(\tau, v) = \sum_{n=0}^{N-1} s_{u,v_1}(n) s_{u,v_2}^*(n-\tau) e^{j2\pi n v/N} = \begin{cases} N, & v_1 = v_2, \tau = 0, v = 0 \\ 0, & (v_1 \neq v_2) \vee (\tau \neq 0) \vee (v \neq 0) \end{cases}$$

$N$ represents the sequence length of the root sequence, $u$ represents the root sequence number, $v_1$ and $v_2$ represent indexes of cyclic shifts of the root sequence, $\tau$ represents a delay coordinate of the ambiguity function, a value range of $\tau$ is $0 \leq \tau \leq \Delta_T - 1$, v represents a Doppler coordinate of the ambiguity function, a value range of v is $0 \leq \tau \leq \Delta_F - 1$, an operator $(\cdot)^*$ represents a complex conjugate, and an operator V represents conditional OR.

In a design, the cyclic shift $C_v$ of the root sequence satisfies:

$$C_v = (\tau_v - u^{-1}v_v) \bmod N$$

*N* represents the sequence length of the root sequence, *u* represents the root sequence number, v represents the index of the cyclic shift of the root sequence, $\tau_v$ represents a delay-domain cyclic shift, $v_v$ represents a Doppler-domain cyclic shift, an operator $(\cdot)^{-1}$ represents a multiplicative inverse, and v represents the index of the cyclic shift of the root sequence.

In a design, determining the cyclic shift of the root sequence includes: determining a cyclic shift reference point of the root sequence based on a delay-domain cyclic shift reference point and a Doppler-domain cyclic shift reference point; and determining the cyclic shift of the root sequence based on the cyclic shift reference point of the root sequence.

For example, a cyclic shift reference point with a largest quantity of cyclic shifts is selected from the delay-domain cyclic shift reference point and the Doppler-domain cyclic shift reference point as the cyclic shift reference point of the root sequence. The cyclic shift of the root sequence is determined based on the cyclic shift reference point of the root sequence. In the foregoing design, the cyclic shift reference point with the largest quantity of cyclic shifts is used as the cyclic shift reference point of the root sequence, so that a capacity of the determined cyclic shift sequence is maximum.

In a design, the method further includes: determining a delay restricted area in a delay-Doppler coordinate system, where a horizontal axis of the delay-Doppler coordinate system indicates a delay domain, a vertical axis indicates a Doppler domain, the delay restricted area includes one or more peak points of the root sequence, and the peak point is determined based on an ambiguity function of the root sequence; and determining that the peak point of the root sequence included in the delay restricted area is the delay-domain cyclic shift reference point.

In a design, the delay restricted area satisfies:
a rectangular area including a start coordinate in the delay domain being $\Delta_T$, an end coordinate in the delay domain being $\min_{v\in\{\pm 1,\pm 2,...,\pm(\Delta F-1)\}}\{u^{-1}v \bmod N\}$, a start coordinate in the Doppler domain being 0, and an end coordinate in the Doppler domain being $N$ - 1.

*N* represents the sequence length of the root sequence, *u* represents the root sequence number, $\Delta_T$ represents the maximum round-trip time, $\Delta_F$ represents the maximum Doppler frequency shift, and an operator $(\cdot)^{-1}$ represents a multiplicative inverse. In a design, a set $\mathcal{S}_T$ including coordinates of the delay-domain cyclic shift reference point satisfies:

$$\mathcal{S}_T \triangleq \left\{ \langle \tau_1^T, v_1^T \rangle, \langle \tau_2^T, v_2^T \rangle, ..., \langle \tau_{|\mathcal{S}_T|}^T, v_{|\mathcal{S}_T|}^T \rangle \right\}$$

$$= \left\{ \langle \tau, u\tau \bmod N \rangle \middle| \min\{\pm u\tau \bmod N\} < \min_{n=1,2,...,\tau-1}\{\pm un \bmod N\}, \tau \in \left\{ \Delta_T, \Delta_T + 1, ..., \min_{v\in\{\pm 1,\pm 2,...,\pm(\Delta_F-1)\}}\{u^{-1}v \bmod N\} \right\} \right\}$$

*N* represents the sequence length of the root sequence, *u* represents the root sequence number, $\Delta_T$ represents the maximum round-trip time, $\Delta_F$ represents the maximum Doppler frequency shift, $\langle \tau_i^T, v_i^T \rangle$ represents coordinates of an *i*th delay-domain cyclic shift reference point, a value range of *i* is $1 \le i \le |\mathcal{S}_T|$ an operator $(\cdot)^{-1}$ represents a multiplicative inverse, and an operator $|\cdot|$ represents a cardinality of the set.

In a design, the method further includes: determining a Doppler restricted area in the delay-Doppler coordinate system, where the horizontal axis of the delay-Doppler coordinate system indicates the delay domain, the vertical axis indicates the Doppler domain, the Doppler restricted area includes one or more peak points of the root sequence, and the peak point is determined based on the ambiguity function of the root sequence; and determining that the peak point of the root sequence included in the Doppler restricted area is the Doppler-domain cyclic shift reference point.

In a design, the Doppler restricted area satisfies:
a rectangular area including a start coordinate in the delay domain being 0, an end coordinate in the delay domain being $N$ - 1, a start coordinate in the Doppler domain being $\Delta_F$, and an end coordinate in the Doppler domain being $\min_{\tau\in\{\pm 1,+2,...,\pm(\Delta T-1)\}}\{u\tau \bmod N\}$.

*N* represents the sequence length of the root sequence, *u* represents the root sequence number, $\Delta_T$ represents the maximum round-trip time, and $\Delta_F$ represents the maximum Doppler frequency shift. In a design, a set $\mathcal{S}_F$ including coordinates of the Doppler-domain cyclic shift reference point satisfies:

$$\mathcal{S}_F \triangleq \left\{ \langle \tau_1^F, v_1^F \rangle, \langle \tau_2^F, v_2^F \rangle, ..., \langle \tau_{|\mathcal{S}_F|}^F, v_{|\mathcal{S}_F|}^F \rangle \right\}$$

$$= \left\{ \langle u^{-1}v \bmod N, v \rangle \middle| \min\{\pm u^{-1}v \bmod N\} < \min_{n=1,2,...,v-1}\{\pm u^{-1}n \bmod N\}, v \in \left\{ \Delta_F, \Delta_F + 1, ..., \min_{\tau\in\{\pm 1,\pm 2,...,\pm(\Delta_T-1)\}}\{u\tau \bmod N\} \right\} \right\}$$

*N* represents the sequence length of the root sequence, *u* represents the root sequence number, $\Delta_{\mathrm{T}}$ represents the maximum round-trip time, $\Delta_{\mathrm{F}}$ represents the maximum Doppler frequency shift, $\langle \tau_i^{\mathrm{F}}, v_i^{\mathrm{F}} \rangle$ represents an *i*th Doppler-domain cyclic shift reference point, a value range of *i* is $1 \leq i \leq |\mathcal{S}_{\mathrm{F}}|$, an operator $(\cdot)^{-1}$ represents a multiplicative inverse, and an operator $|\cdot|$ represents a cardinality of the set.

In a design, a quantity $\Omega_\star^\dagger$ of cyclic shifts corresponding to the cyclic shift reference point $\langle \tau_\star^\dagger, v_\star^\dagger \rangle$ of the root sequence satisfies:

$$\Omega_\star^\dagger = \max\left\{\Omega_1^{\mathrm{T}}, \Omega_2^{\mathrm{T}}, \dots \Omega_{|\mathcal{S}_{\mathrm{T}}|}^{\mathrm{T}}, \Omega_1^{\mathrm{F}}, \Omega_2^{\mathrm{F}}, \dots, \Omega_{|\mathcal{S}_{\mathrm{F}}|}^{\mathrm{F}}\right\}$$

$\Omega_1^{\mathrm{T}}, \Omega_2^{\mathrm{T}}, \dots \Omega_{|\mathcal{S}_{\mathrm{T}}|}^{\mathrm{T}}$ represents a quantity of cyclic shifts corresponding to the delay-domain cyclic shift reference point, $\Omega_1^{\mathrm{F}}, \Omega_2^{\mathrm{F}}, \dots, \Omega_{|\mathcal{S}_{\mathrm{F}}|}^{\mathrm{F}}$ represents a quantity of cyclic shifts corresponding to the Doppler-domain cyclic shift reference point, and $\Omega_\star^\dagger$ represents the quantity of cyclic shifts corresponding to the cyclic shift reference point of the root sequence.

In a design, a quantity $\Omega_i^{\mathrm{T}}$ of cyclic shifts corresponding to the delay-domain cyclic shift reference point satisfies:

$$\Omega_i^{\mathrm{T}} = k_i^{\mathrm{T}} \cdot l_i^{\mathrm{T}} + \bar{k}_i^{\mathrm{T}} \cdot \bar{l}_i^{\mathrm{T}} + \bar{\bar{k}}_i^{\mathrm{T}} \cdot \bar{\bar{l}}_i^{\mathrm{T}}$$

$k_i^{\mathrm{T}}$ represents a quantity of delay-domain complete cyclic shifts, $l_i^{\mathrm{T}}$ represents a quantity of Doppler-domain complete cyclic shifts, $\bar{k}_i^{\mathrm{T}}$ represents a quantity of delay-domain near-end residual cyclic shifts, $\bar{l}_i^{\mathrm{T}}$ represents a quantity of Doppler-domain near-end residual cyclic shifts, $\bar{\bar{k}}_i^{\mathrm{T}}$ represents a quantity of delay-domain far-end residual cyclic shifts, $\bar{\bar{l}}_i^{\mathrm{T}}$ represents a quantity of Doppler-domain far-end residual cyclic shifts, and a value range of *i* is $1 \leq i \leq |\mathcal{S}_{\mathrm{T}}|$.

In a design, the quantity $k_i^{\mathrm{T}}$ of delay-domain complete cyclic shifts satisfies:

$$k_i^{\mathrm{T}} = \left\lfloor \tau_i^{\mathrm{T}}/\Delta_{\mathrm{T}} \right\rfloor$$

$\Delta_{\mathrm{T}}$ represents the maximum round-trip time, $\langle \tau_i^{\mathrm{T}}, v_i^{\mathrm{T}} \rangle$ represents the coordinates of the delay-domain cyclic shift reference point, and an operator $\lfloor \cdot \rfloor$ represents rounding down.

The quantity $l_i^{\mathrm{T}}$ of Doppler-domain complete cyclic shifts satisfies:

Restriction coordinates $\langle \bar{\tau}_i^{\mathrm{T}}, \bar{v}_i^{\mathrm{T}} \rangle$ are determined based on the coordinates $\langle \tau_i^{\mathrm{T}}, v_i^{\mathrm{T}} \rangle$ of the delay-domain cyclic shift reference point, and satisfy:

$$\begin{cases} \bar{\tau}_i^{\mathrm{T}} = \min\limits_{v \in \{1,2,\dots,\max\{\Delta_{\mathrm{F}}-1,\min\{v_i^{\mathrm{T}}, N-v_i^{\mathrm{T}}\}-1\}} \left\{ \mathrm{sgn}\left(v_i^{\mathrm{T}} - N/2\right) u^{-1} v \bmod N \right\} \\ \bar{v}_i^{\mathrm{T}} = u\bar{\tau}_i^{\mathrm{T}} \bmod N \end{cases}$$

$N$ represents the sequence length of the root sequence, $u$ represents the root sequence number, $\Delta_F$ represents the maximum Doppler frequency shift, and an operator $(\cdot)^{-1}$ represents a multiplicative inverse.

A Doppler spacing $d_i^T$ is determined based on the coordinates $\langle \tau_i^T, v_i^T \rangle$ of the delay-domain cyclic shift reference point and the restriction coordinates $\langle \bar{\tau}_i^T, \bar{v}_i^T \rangle$, and satisfies:

$$d_i^T = \min\left\{ d \left| \tau_i^T - \left( \left\lfloor \frac{d/\Delta_F}{\lceil \min\{v_i^T, N - v_i^T\}/\Delta_F \rceil} \right\rfloor + 1 \right) \cdot \tau_i^T \bmod \Delta_T \geq \bar{\tau}_i^T - \left\lfloor \frac{d - \min\{\bar{v}_i^T, N - \bar{v}_i^T\}}{\min\{v_i^T, N - v_i^T\}} \right\rfloor \cdot \tau_i^T \right. \right\}$$

N represents the sequence length of the root sequence, $\Delta_T$ represents the maximum round-trip time, $\Delta_F$ represents the maximum Doppler frequency shift, an operator $\lfloor \cdot \rfloor$ represents rounding down, and an operator $\lceil \cdot \rceil$ represents rounding up.

The quantity $l_i^T$ of Doppler-domain complete cyclic shifts is determined based on the Doppler spacing $d_i^T$, and satisfies:

$$l_i^T = \left\lfloor d_i^T / \Delta_F \right\rfloor$$

$\Delta_F$ represents the maximum Doppler frequency shift, $d_i^T$ represents the Doppler spacing, and an operator $\lfloor \cdot \rfloor$ represents rounding down.

The quantity $\bar{k}_i^T$ of delay-domain near-end residual cyclic shifts satisfies:

$$\bar{k}_i^T = \max\left\{ \left\lfloor \left( \bar{\tau}_i^T - \left\lfloor \frac{d_i^T - \min\{\bar{v}_i^T, N - \bar{v}_i^T\}}{\min\{v_i^T, N - v_i^T\}} \right\rfloor \cdot \tau_i^T + \left( \left\lfloor \frac{l_i^T - 1}{\lceil \min\{v_i^T, N - v_i^T\}/\Delta_F \rceil} \right\rfloor + 1 \right) \cdot \tau_i^T \bmod \Delta_T \right) / \Delta_T \right\rfloor, 0 \right\}$$

$N$ represents the sequence length of the root sequence, $\Delta_T$ represents the maximum round-trip time, $\Delta_F$ represents the maximum Doppler frequency shift, $\langle \tau_i^T, v_i^T \rangle$ represents the coordinates of the delay-domain cyclic shift reference point, $\langle \bar{\tau}_i^T, \bar{v}_i^T \rangle$ represents the restriction coordinates, $l_i^T$ represents the quantity of Doppler-domain complete cyclic shifts, an operator $\lfloor \cdot \rfloor$ represents rounding down, and an operator $\lceil \cdot \rceil$ represents rounding up.

The quantity $\bar{l}_i^T$ of Doppler-domain near-end residual cyclic shifts satisfies:

$$\bar{l}_i^T = l_i^T - \lceil \min\{v_i^T, N - v_i^T\}/\Delta_F \rceil \cdot \left\lfloor \frac{l_i^T}{\lceil \min\{v_i^T, N - v_i^T\}/\Delta_F \rceil} \right\rfloor$$

$N$ represents the sequence length of the root sequence, $\Delta_F$ represents the maximum Doppler frequency shift, $\langle \tau_i^T, v_i^T \rangle$ represents the coordinates of the delay-domain cyclic shift reference point, $l_i^T$ represents the quantity of Doppler-domain complete cyclic shifts, an operator $\lfloor \cdot \rfloor$ represents rounding down, and an operator $\lceil \cdot \rceil$ represents rounding up.

The quantity $\bar{\bar{k}}_i^T$ of delay-domain far-end residual cyclic shifts satisfies:

$$\bar{\bar{k}}_i^T = \max\left\{ \left\lfloor \left( \bar{\tau}_i^T - \left\lfloor \frac{d_i^T - \min\{\bar{v}_i^T, N - \bar{v}_i^T\}}{\min\{v_i^T, N - v_i^T\}} \right\rfloor \cdot \tau_i^T + \left( \left\lfloor \frac{2l_i^T - \lfloor (d_i^T + \min\{v_i^T, N - v_i^T\})/\Delta_F \rfloor}{\lceil \min\{v_i^T, N - v_i^T\}/\Delta_F \rceil} \right\rfloor + 1 \right) \cdot \tau_i^T \bmod \Delta_T \right) / \Delta_T \right\rfloor, 0 \right\}$$

$N$ represents the sequence length of the root sequence, $\Delta_T$ represents the maximum round-trip time, $\Delta_F$

represents the maximum Doppler frequency shift, $\langle \tau_i^{\mathrm{T}}, v_i^{\mathrm{T}} \rangle$ represents the coordinates of the delay-domain cyclic shift reference point, $\langle \bar{\tau}_i^{\mathrm{T}}, \bar{v}_i^{\mathrm{T}} \rangle$ represents the restriction coordinates, $l_i^{\mathrm{T}}$ represents the quantity of Doppler-domain complete cyclic shifts, an operator $\lfloor \cdot \rfloor$ represents rounding down, and an operator $\lceil \cdot \rceil$ represents rounding up.

The quantity $\bar{\bar{l}}_i^{\mathrm{T}}$ of Doppler-domain far-end residual cyclic shifts satisfies:

$$\bar{\bar{l}}_i^{\mathrm{T}} = \left\lfloor \left( d_i^{\mathrm{T}} + \min\{v_i^{\mathrm{T}}, N - v_i^{\mathrm{T}}\} \right)/\Delta_{\mathrm{F}} \right\rfloor - l_i^{\mathrm{T}} - \bar{l}_i^{\mathrm{T}}$$

$N$ represents the sequence length of the root sequence, $\Delta_{\mathrm{F}}$ represents the maximum Doppler frequency shift, $\langle \tau_i^{\mathrm{T}}, v_i^{\mathrm{T}} \rangle$ represents the coordinates of the delay-domain cyclic shift reference point, $l_i^{\mathrm{T}}$ represents the quantity of Doppler-domain complete cyclic shifts, $\bar{l}_i^{\mathrm{T}}$ represents the quantity of Doppler-domain near-end residual cyclic shifts, and an operator $\lceil \cdot \rceil$ represents rounding up.

In a design, a quantity $\Omega_i^{\mathrm{F}}$ of cyclic shifts corresponding to the Doppler-domain cyclic shift reference point satisfies:

$$\Omega_i^{\mathrm{F}} = l_i^{\mathrm{F}} \cdot k_i^{\mathrm{F}} + \bar{l}_i^{\mathrm{F}} \cdot \bar{k}_i^{\mathrm{F}} + \bar{\bar{l}}_i^{\mathrm{F}} \cdot \bar{\bar{k}}_i^{\mathrm{F}}$$

$l_i^{\mathrm{F}}$ represents a quantity of Doppler-domain complete cyclic shifts, $k_i^{\mathrm{F}}$ represents a quantity of delay-domain complete cyclic shifts, $\bar{l}_i^{\mathrm{F}}$ represents a quantity of Doppler-domain near-end residual cyclic shifts, $\bar{k}_i^{\mathrm{F}}$ represents a quantity of delay-domain near-end residual cyclic shifts, $\bar{\bar{l}}_i^{\mathrm{F}}$ represents a quantity of Doppler-domain far-end residual cyclic shifts, $\bar{\bar{k}}_i^{\mathrm{F}}$ represents a quantity of delay-domain far-end residual cyclic shifts, and a value range of $i$ is $1 \leq i \leq |\mathcal{S}_{\mathrm{F}}|$.

In a design, the quantity $l_i^{\mathrm{F}}$ of Doppler-domain complete cyclic shifts satisfies:

$$l_i^{\mathrm{F}} = \left\lfloor v_i^{\mathrm{F}}/\Delta_{\mathrm{F}} \right\rfloor$$

$\Delta_{\mathrm{F}}$ represents the maximum Doppler frequency shift, $\langle \tau_i^{\mathrm{F}}, v_i^{\mathrm{F}} \rangle$ represents the coordinates of the Doppler-domain cyclic shift reference point, and an operator $\lfloor \cdot \rfloor$ represents rounding down.

The quantity $k_i^{\mathrm{F}}$ of delay-domain complete cyclic shifts satisfies:

Restriction coordinates $\langle \bar{\tau}_i^{\mathrm{F}}, \bar{v}_i^{\mathrm{F}} \rangle$ are determined based on the coordinates $\langle \tau_i^{\mathrm{F}}, v_i^{\mathrm{F}} \rangle$ of the Doppler-domain cyclic shift reference point, and satisfy:

$$\begin{cases} \bar{v}_i^{\mathrm{F}} = \min_{\tau \in \{1,2,\ldots,\max\{\Delta_{\mathrm{T}}-1,\min\{\tau_i^{\mathrm{F}}, N-\tau_i^{\mathrm{F}}\}-1\}\}} \left\{ \mathrm{sgn}\left(\tau_i^{\mathrm{F}} - N/2\right) u\tau \bmod N \right\} \\ \bar{\tau}_i^{\mathrm{F}} = u^{-1} \bar{v}_i^{\mathrm{F}} \bmod N \end{cases}$$

$N$ represents the sequence length of the root sequence, $u$ represents the root sequence number, $\Delta_{\mathrm{T}}$ represents the maximum round-trip time, $\langle \tau_i^{\mathrm{F}}, v_i^{\mathrm{F}} \rangle$ represents the coordinates of the Doppler-domain cyclic shift reference point, and an operator $(\cdot)^{-1}$ represents a multiplicative inverse.

A delay spacing $d_i^F$ is determined based on the coordinates $\langle \tau_i^F, v_i^F \rangle$ of the Doppler-domain cyclic shift reference point and the restriction coordinates $\langle \bar{\tau}_i^F, \bar{v}_i^F \rangle$:

$$d_i^F = \min\left\{ d \left| v_i^F - \left( \left\lfloor \frac{d/\Delta_T}{\lceil \min\{\tau_i^F, N - \tau_i^F\}/\Delta_T \rceil} \right\rfloor + 1 \right) \cdot v_i^F \bmod \Delta_F \geq \bar{v}_i^F - \left\lfloor \frac{d - \min\{\bar{\tau}_i^F, N - \bar{\tau}_i^F\}}{\min\{\tau_i^F, N - \tau_i^F\}} \right\rfloor \cdot v_i^F \right. \right\}$$

$N$ represents the sequence length of the root sequence, $\Delta_T$ represents the maximum round-trip time, $\Delta_F$ represents the maximum Doppler frequency shift, $\langle \tau_i^F, v_i^F \rangle$ represents the coordinates of the Doppler-domain cyclic shift reference point, $\langle \bar{\tau}_i^F, \bar{v}_i^F \rangle$ represents the restriction coordinates, an operator $\lfloor \cdot \rfloor$ represents rounding down, and an operator $\lceil \cdot \rceil$ represents rounding up.

The quantity $k_i^F$ of delay-domain complete cyclic shifts is determined based on the delay spacing $d_i^F$, and satisfies:

$$k_i^F = \lfloor d_i^F / \Delta_T \rfloor$$

$\Delta_T$ represents the maximum round-trip time, $d_i^F$ represents the delay spacing, and an operator $\lfloor \cdot \rfloor$ represents rounding down.

The quantity $\bar{l}_i^F$ of Doppler-domain near-end residual cyclic shifts satisfies:

$$\bar{l}_i^F = \max\left\{ \left\lfloor \left( \bar{v}_i^F - \left\lfloor \frac{d_i^F - \min\{\bar{\tau}_i^F, N - \bar{\tau}_i^F\}}{\min\{\tau_i^F, N - \tau_i^F\}} \right\rfloor \cdot v_i^F + \left( \left\lfloor \frac{k_i^F - 1}{\lceil \min\{\tau_i^F, N - \tau_i^F\}/\Delta_T \rceil} \right\rfloor + 1 \right) \cdot v_i^F \bmod \Delta_F \right) / \Delta_F \right\rfloor, 0 \right\}$$

$N$ represents the sequence length of the root sequence, $\Delta_T$ represents the maximum round-trip time, $\Delta_F$ represents the maximum Doppler frequency shift, $\langle \tau_i^F, v_i^F \rangle$ represents the coordinates of the Doppler-domain cyclic shift reference point, $\langle \bar{\tau}_i^T, \bar{v}_i^T \rangle$ represents the restriction coordinates, $k_i^F$ represents the quantity of delay-domain complete cyclic shifts, an operator $\lfloor \cdot \rfloor$ represents rounding down, and an operator $\lceil \cdot \rceil$ represents rounding up.

The quantity $\bar{k}_i^F$ of delay-domain near-end residual cyclic shifts satisfies:

$$\bar{k}_i^F = k_i^F - \lceil \min\{\tau_i^F, N - \tau_i^F\}/\Delta_T \rceil \cdot \left\lfloor \frac{k_i^F}{\lceil \min\{\tau_i^F, N - \tau_i^F\}/\Delta_T \rceil} \right\rfloor$$

$N$ represents the sequence length of the root sequence, $\Delta_T$ represents the maximum round-trip time, $\langle \tau_i^F, v_i^F \rangle$ represents the coordinates of the Doppler-domain cyclic shift reference point, $k_i^F$ represents the quantity of delay-domain complete cyclic shifts, an operator $\lfloor \cdot \rfloor$ represents rounding down, and an operator $\lceil \cdot \rceil$ represents rounding up.

The quantity $\bar{\bar{l}}_i^F$ of Doppler-domain far-end residual cyclic shifts satisfies:

$$\bar{\bar{l}}_i^F = \max\left\{ \left\lfloor \left( \bar{v}_i^F - \left\lfloor \frac{d_i^F - \min\{\bar{\tau}_i^F, N - \bar{\tau}_i^F\}}{\min\{\tau_i^F, N - \tau_i^F\}} \right\rfloor \cdot v_i^F + \left( \left\lfloor \frac{2k_i^F - \lfloor (d_i^F + \min\{\tau_i^F, N - \tau_i^F\})/\Delta_T \rfloor}{\lceil \min\{\tau_i^F, N - \tau_i^F\}/\Delta_T \rceil} \right\rfloor + 1 \right) \cdot v_i^F \bmod \Delta_F \right) / \Delta_F \right\rfloor, 0 \right\}$$

$N$ represents the sequence length of the root sequence, $\Delta_T$ represents the maximum round-trip time, $\Delta_F$

represents the maximum Doppler frequency shift, $\langle \tau_i^F, v_i^F \rangle$ represents the coordinates of the Doppler-domain cyclic shift reference point, $\langle \bar{\tau}_i^F, \bar{v}_i^F \rangle$ represents the restriction coordinates, $k_i^F$ represents the quantity of delay-domain complete cyclic shifts, an operator $\lfloor \cdot \rfloor$ represents rounding down, and an operator $\lceil \cdot \rceil$ represents rounding up.

The quantity $\bar{\bar{k}}_i^F$ of delay-domain far-end residual cyclic shifts satisfies:

$$\bar{\bar{k}}_i^F = \left\lfloor \left( d_i^F + \min\{\tau_i^F, N - \tau_i^F\} \right)/\Delta_T \right\rfloor - k_i^F - \bar{k}_i^F$$

$N$ represents the sequence length of the root sequence, $\Delta_T$ represents the maximum round-trip time, $\langle \tau_i^F, v_i^F \rangle$ represents the coordinates of the Doppler-domain cyclic shift reference point, $k_i^F$ represents the quantity of delay-domain complete cyclic shifts, $\bar{k}_i^F$ represents the quantity of delay-domain near-end residual cyclic shifts, and an operator $\lfloor \cdot \rfloor$ represents rounding down.

In a design, determining the cyclic shift of the root sequence includes:

determining the delay-domain cyclic shift $\tau_v$ and the Doppler-domain cyclic shift $v_v$ based on the quantity of delay-domain complete cyclic shifts and the quantity of Doppler-domain complete cyclic shifts that correspond to the cyclic shift reference point of the root sequence; and
determining the cyclic shift $C_v$ of the root sequence based on the delay-domain cyclic shift $\tau_v$ and the Doppler-domain cyclic shift $v_v$.

v represents the index of the cyclic shift of the root sequence, and a value range of $v$ is $0 \leq v \leq \Omega_\star^\dagger - 1$.

In a design, the cyclic shift reference point of the root sequence is the delay-domain cyclic shift reference point, and the delay-domain cyclic shift $\tau_{k_\star^T \cdot l + k}$ and the Doppler-domain cyclic shift $v_{k_\star^T \cdot l + k}$ satisfy:

$$\begin{cases} \tau_{k_\star^T \cdot l + k} = k\Delta_T - \left\lfloor \dfrac{l}{\lceil \min\{v_\star^T, N - v_\star^T\}/\Delta_F \rceil} \right\rfloor \cdot \tau_\star^T \bmod \Delta_T \\ v_{k_\star^T \cdot l + k} = \text{sgn}(v_\star^T - N/2) \cdot l\Delta_F \end{cases}$$

where $N$ represents the sequence length of the root sequence, $\Delta_T$ represents the maximum round-trip time, $\Delta_F$ represents the maximum Doppler frequency shift, $\langle \tau_\star^T, v_\star^T \rangle$ represents coordinates of the cyclic shift reference point of the root sequence, $k_\star^T$ represents the quantity of delay-domain complete cyclic shifts, $l_\star^T$ represents the quantity of Doppler-domain complete cyclic shifts, value ranges of $k$ and $l$ are $\{0 \leq k < k_\star^T, 0 \leq l < l_\star^T\}$, an operator sgn($\cdot$) represents a sign function, an operator $\lfloor \cdot \rfloor$ represents rounding down, and an operator $\lceil \cdot \rceil$ represents rounding up; and/or
the cyclic shift reference point of the root sequence is the Doppler-domain cyclic shift reference point, and the delay-domain cyclic shift $\tau_{l_\star^F \cdot k + l}$ and the Doppler-domain cyclic shift $v_{l_\star^F \cdot k + l}$ satisfy:

$$\begin{cases} \tau_{l_\star^F \cdot k + l} = \text{sgn}(\tau_\star^F - N/2) \cdot k\Delta_T \\ v_{l_\star^F \cdot k + l} = l\Delta_F - \left\lfloor \dfrac{k}{\lceil \min\{\tau_\star^F, N - \tau_\star^F\}/\Delta_T \rceil} \right\rfloor \cdot v_\star^F \bmod \Delta_F \end{cases}$$

where N represents the sequence length of the root sequence, $\Delta_T$ represents the maximum round-trip time, $\Delta_F$ represents the maximum Doppler frequency shift, $\langle \tau_\star^F, v_\star^F \rangle$ represents coordinates of the cyclic shift reference point of the root sequence, $l_\star^F$ represents the quantity of Doppler-domain complete cyclic shifts, $k_\star^F$ represents the quantity of delay-domain complete cyclic shifts, value ranges of $k$ and $l$ are $\{0 \leq k < k_\star^F, 0 \leq l < l_\star^F\}$, an operator sgn($\cdot$) represents a sign function, an operator $\lfloor \cdot \rfloor$ represents rounding down, and an operator $\lceil \cdot \rceil$ represents rounding up.

In a design, determining the cyclic shift of the root sequence includes:

determining the delay-domain cyclic shift $\tau_v$ and the Doppler-domain cyclic shift $v_v$ based on the quantity of delay-domain complete cyclic shifts, the quantity of Doppler-domain complete cyclic shifts, the quantity of delay-domain near-end residual cyclic shifts, and the quantity of Doppler-domain near-end residual cyclic shifts that correspond to the cyclic shift reference point of the root sequence; and
determining the cyclic shift $C_v$ of the root sequence based on the delay-domain cyclic shift $\tau_v$ and the Doppler-domain cyclic shift $v_v$.

$v$ represents the index of the cyclic shift of the root sequence, and a value range of $v$ is $0 \leq v \leq \Omega_\star^\dagger - 1$.

In a design, the cyclic shift reference point of the root sequence is the delay-domain cyclic shift reference point, and the delay-domain cyclic shift $\tau_{k_\star^T \cdot l_\star^T + \overline{k}_\star^T \cdot (\overline{l}_\star^T + l) + \overline{k}_\star^T - k}$ and the Doppler-domain cyclic shift $v_{k_\star^T \cdot l_\star^T + \overline{k}_\star^T \cdot (\overline{l}_\star^T + l) + \overline{k}_\star^T - k}$ satisfy:

$$\begin{cases} \tau_{k_\star^T \cdot l_\star^T + \overline{k}_\star^T \cdot (\overline{l}_\star^T + l) + \overline{k}_\star^T - k} = \tau_\star^T - k\Delta_T \\ v_{k_\star^T \cdot l_\star^T + \overline{k}_\star^T \cdot (\overline{l}_\star^T + l) + \overline{k}_\star^T - k} = \text{sgn}(v_\star^T - N/2) \cdot l\Delta_F \end{cases}$$

where $N$ represents the sequence length of the root sequence, $\Delta_T$ represents the maximum round-trip time, $\Delta_F$ represents the maximum Doppler frequency shift, $\langle \tau_\star^T, v_\star^T \rangle$ represents coordinates of the cyclic shift reference point of the root sequence, $k_\star^T$ represents the quantity of delay-domain complete cyclic shifts, $l_\star^T$ represents the quantity of Doppler-domain complete cyclic shifts, $\overline{k}_\star^T$ represents the quantity of delay-domain near-end residual cyclic shifts, $\overline{l}_\star^T$ represents the quantity of Doppler-domain near-end residual cyclic shifts, value ranges of $k$ and $l$ are $\{0 < k \leq \overline{k}_\star^T, -\overline{l}_\star^T \leq l < 0\}$, and an operator sgn($\cdot$) represents a sign function; and/or
the cyclic shift reference point of the root sequence is the Doppler-domain cyclic shift reference point, and the delay-domain cyclic shift $\tau_{l_\star^F \cdot k_\star^F + \overline{l}_\star^F \cdot (\overline{k}_\star^F + k) + \overline{l}_\star^F - l}$ and the Doppler-domain cyclic shift $v_{l_\star^F \cdot k_\star^F + \overline{l}_\star^F \cdot (\overline{k}_\star^F + k) + \overline{l}_\star^F - l}$ satisfy:

$$\begin{cases} \tau_{l_\star^F \cdot k_\star^F + \overline{l}_\star^F \cdot (\overline{k}_\star^F + k) + \overline{l}_\star^F - l} = \text{sgn}(\tau_\star^F - N/2) \cdot k\Delta_T \\ v_{l_\star^F \cdot k_\star^F + \overline{l}_\star^F \cdot (\overline{k}_\star^F + k) + \overline{l}_\star^F - l} = v_\star^F - l\Delta_F \end{cases}$$

where $N$ represents the sequence length of the root sequence, $\Delta_T$ represents the maximum round-trip time, $\Delta_F$ represents the maximum Doppler frequency shift, $\langle \tau_\star^F, v_\star^F \rangle$ represents coordinates of the cyclic shift reference point of the root sequence, $l_\star^F$ represents the quantity of Doppler-domain complete cyclic shifts, $k_\star^F$ represents the quantity of delay-domain complete cyclic shifts, $\overline{l}_\star^F$ represents the quantity of Doppler-domain near-end residual cyclic shifts, $\overline{k}_\star^F$ represents the quantity of delay-domain near-end residual cyclic shifts, value ranges of $k$ and $l$ are $\{-\overline{k}_\star^F \leq k < 0, 0 < l \leq \overline{l}_\star^F\}$, and an operator sgn($\cdot$) represents a sign function.

In a design, determining the cyclic shift of the root sequence includes: determining the delay-domain cyclic shift $\tau_v$ and the Doppler-domain cyclic shift $v_v$ based on the quantity of delay-domain complete cyclic shifts, the quantity of Doppler-domain complete cyclic shifts, the quantity of delay-domain near-end residual cyclic shifts, the quantity of Doppler-domain near-end residual cyclic shifts, the quantity of delay-domain far-end residual cyclic shifts, and the quantity of Doppler-domain far-end residual cyclic shifts that correspond to the cyclic shift reference point of the root sequence; and determining the cyclic shift $C_v$ of the root sequence based on the delay-domain cyclic shift $\tau_v$ and the Doppler-domain cyclic shift $v_v$. $v$ represents the index of the cyclic shift of the root sequence, and a value range of $v$ is $0 \le v \le \Omega_\star^\dagger - 1$.

In a design, the cyclic shift reference point of the root sequence is the delay-domain cyclic shift reference point, and the delay-domain cyclic shift $\tau_{k_\star^T \cdot l_\star^T + \bar{k}_\star^T \cdot \bar{l}_\star^T + \bar{k}_\star^T \cdot (\bar{l}_\star^T + \bar{l}_\star^T + l) + \bar{k}_\star^T - k}$ and the Doppler-domain cyclic shift $v_{k_\star^T \cdot l_\star^T + \bar{k}_\star^T \cdot \bar{l}_\star^T + \bar{k}_\star^T \cdot (\bar{l}_\star^T + \bar{l}_\star^T + l) + \bar{k}_\star^T - k}$ satisfy:

$$\begin{cases} \tau_{k_\star^T \cdot l_\star^T + \bar{k}_\star^T \cdot \bar{l}_\star^T + \bar{k}_\star^T \cdot (\bar{l}_\star^T + \bar{l}_\star^T + l) + \bar{k}_\star^T - k} = \tau_\star^T - k\Delta_T \\ v_{k_\star^T \cdot l_\star^T + \bar{k}_\star^T \cdot \bar{l}_\star^T + \bar{k}_\star^T \cdot (\bar{l}_\star^T + \bar{l}_\star^T + l) + \bar{k}_\star^T - k} = \mathrm{sgn}(v_\star^T - N/2) \cdot l\Delta_F \end{cases}$$

where $N$ represents the sequence length of the root sequence, $\Delta_T$ represents the maximum round-trip time, $\Delta_F$ represents the maximum Doppler frequency shift, $\langle \tau_\star^T, v_\star^T \rangle$ represents coordinates of the cyclic shift reference point of the root sequence, $k_\star^T$ represents the quantity of delay-domain complete cyclic shifts, $l_\star^T$ represents the quantity of Doppler-domain complete cyclic shifts, $\bar{k}_\star^T$ represents the quantity of delay-domain near-end residual cyclic shifts, $\bar{l}_\star^T$ represents the quantity of Doppler-domain near-end residual cyclic shifts, $\bar{\bar{k}}_\star^T$ represents the quantity of delay-domain far-end residual cyclic shifts, $\bar{\bar{l}}_\star^T$ represents the quantity of Doppler-domain far-end residual cyclic shifts, value ranges of $k$ and $l$ are $\{0 < k \le \bar{\bar{k}}_\star^T, -\bar{l}_\star^T - \bar{\bar{l}}_\star^T \le l < -\bar{l}_\star^T\}$, and an operator $\mathrm{sgn}(\cdot)$ represents a sign function; and/or
the cyclic shift reference point of the root sequence is the Doppler-domain cyclic shift reference point, and the delay-domain cyclic shift $\tau_{l_\star^F \cdot k_\star^F + \bar{l}_\star^F \cdot \bar{k}_\star^F + \bar{l}_\star^F \cdot (\bar{k}_\star^F + \bar{k}_\star^F + k) + \bar{l}_\star^F - l}$ and the Doppler-domain cyclic shift $v_{l_\star^F \cdot k_\star^F + \bar{l}_\star^F \cdot \bar{k}_\star^F + \bar{l}_\star^F \cdot (\bar{k}_\star^F + \bar{k}_\star^F + k) + \bar{l}_\star^F - l}$ satisfy:

$$\begin{cases} \tau_{l_\star^F \cdot k_\star^F + \bar{l}_\star^F \cdot \bar{k}_\star^F + \bar{l}_\star^F \cdot (\bar{k}_\star^F + \bar{k}_\star^F + k) + \bar{l}_\star^F - l} = \mathrm{sgn}(\tau_\star^F - N/2) \cdot k\Delta_T \\ v_{l_\star^F \cdot k_\star^F + \bar{l}_\star^F \cdot \bar{k}_\star^F + \bar{l}_\star^F \cdot (\bar{k}_\star^F + \bar{k}_\star^F + k) + \bar{l}_\star^F - l} = v_\star^F - l\Delta_F \end{cases}$$

where $N$ represents the sequence length of the root sequence, $\Delta_T$ represents the maximum round-trip time, $\Delta_F$ represents the maximum Doppler frequency shift, $\langle \tau_\star^F, v_\star^F \rangle$ represents coordinates of the cyclic shift reference point of the root sequence, $l_\star^F$ represents the quantity of Doppler-domain complete cyclic shifts, $k_\star^F$ represents the quantity of delay-domain complete cyclic shifts, $\bar{l}_\star^F$ represents the quantity of Doppler-domain near-end residual cyclic shifts, $\bar{k}_\star^F$ represents the quantity of delay-domain near-end residual cyclic shifts, $\bar{\bar{l}}_\star^F$ represents the quantity of Doppler-domain far-end residual cyclic shifts, $\bar{\bar{k}}_\star^F$ represents the quantity of delay-domain far-end residual cyclic shifts, value ranges of $k$ and $l$ are $\{-\bar{k}_\star^F - \bar{\bar{k}}_\star^F \le k < -\bar{k}_\star^F, 0 < l \le \bar{\bar{l}}_\star^F\}$, and an operator $\mathrm{sgn}(\cdot)$ represents a sign function.

In a design, the method further includes: determining a first sequence from a sequence set, where the sequence set includes cyclic shift sequences of one or more root sequences; and outputting the first sequence.

According to a second aspect, a communication apparatus is provided. The communication apparatus may be an apparatus, or the communication apparatus is a module or unit (for example, a chip, a chip system, or a circuit) that is in one-to-one correspondence with the method (or referred to as an operation, a step, or an action) in the first aspect and the possible implementations of the first aspect in the apparatus, or an apparatus that can match the apparatus for use.

In an implementation, the apparatus may be a terminal, or a module or unit configured in the terminal (for example, the communication apparatus may be a chip, a chip system, or a circuit configured in the terminal), or an apparatus that matches the terminal for use. In another implementation, the apparatus may be an access network device, an internet of vehicles device, an aircraft, or the like. This is not limited in this application.

According to a third aspect, a computer-readable storage medium is provided, storing a computer program or instructions. When the computer program or the instructions are run on a computer, the computer is enabled to implement the method in the first aspect.

According to a fourth aspect, a computer program product is provided, including a computer program or instructions. When the computer program or the instructions are run by a computer, the method in the first aspect is performed.

According to a fifth aspect, a chip is provided, including a processor. The processor is coupled to a memory, and is configured to execute a computer program or instructions stored in the memory, to enable the chip to implement the method in the first aspect.

BRIEF DESCRIPTION OF DRAWINGS

FIG. 1 is a diagram of a system architecture according to an embodiment of this application;
FIG. 2 is a flowchart according to an embodiment of this application;
FIG. 3a is a diagram of a delay-domain cyclic shift reference point according to an embodiment of this application;
FIG. 3b is a diagram of a Doppler-domain cyclic shift reference point according to an embodiment of this application;
FIG. 4 is a diagram of a quantity of cyclic shifts corresponding to a Doppler-domain cyclic shift reference point according to an embodiment of this application;
FIG. 5, FIG. 6, FIG. 7, and FIG. 8 are diagrams of a delay-domain cyclic shift reference point and a Doppler-domain cyclic shift reference point according to an embodiment of this application; and
FIG. 9 and FIG. 10 are diagrams of structures of apparatuses according to an embodiment of this application.

DESCRIPTION OF EMBODIMENTS

To make the objectives, technical solutions, and advantages of this application clearer, the following further describes this application in detail with reference to the accompanying drawings. Specific operation methods, function descriptions, and the like in method embodiments may also be applied to apparatus embodiments or system embodiments.

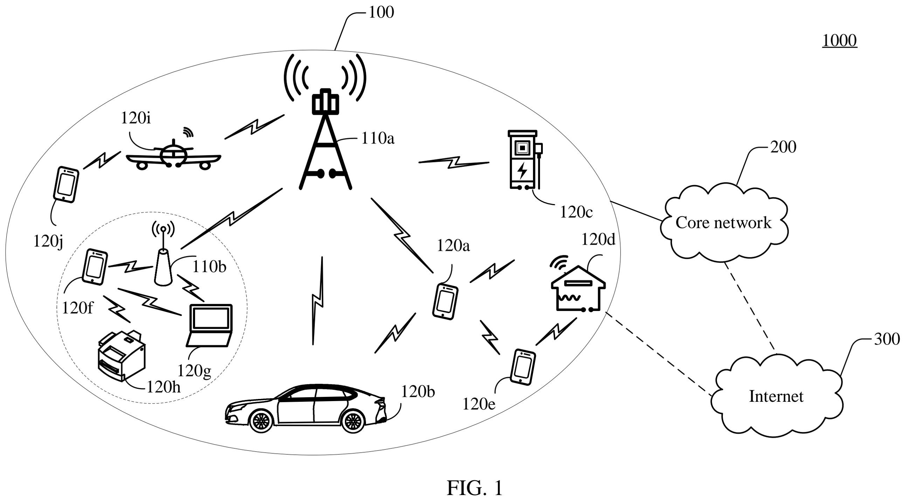

As shown in FIG. 1, a communication system 1000 is provided. The communication system 1000 includes a radio access network 100 and a core network 200. Optionally, the communication system 1000 may further include an internet 300.

The radio access network 100 may include at least one radio access network device, for example, 110a and 110b in FIG. 1, and may further include at least one terminal, for example, 120a to 120j in FIG. 1. The terminal is connected to the radio access network device in a wireless manner, and the radio access network device is connected to the core network in a wireless or wired manner. A core network device and the radio access network device may be different independent physical devices, or functions of the core network device and logical functions of the radio access network device may be integrated into a same physical device, or a part of functions of the core network device and a part of functions of the radio access network device may be integrated into one physical device. A wired or wireless manner may be used for connection between terminals and between radio access network devices. It may be understood that FIG. 1 is merely a diagram. The communication system 1000 may further include another device, for example, may further include a wireless relay device, a wireless backhaul device, and the like, which are not shown in FIG. 1.

The radio access network device may be referred to as an access network device for short. The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a wireless fidelity (wireless fidelity, Wi-Fi) system, or the like, or may be a module or unit that completes some functions of the base station, for example, may be a central unit (central unit, CU), or may be a distributed unit (distributed unit, DU). The CU completes functions of a radio resource control (radio resource control, RRC) protocol and a packet data convergence protocol (packet data convergence protocol, PDCP) of the base station, and may further complete a function of a service data adaptation protocol (service data adaptation protocol, SDAP). The DU completes functions of a radio link control (radio link control, RLC) layer and a medium access control (medium access control, MAC) layer of the base station, and may further complete a function of a part or all of a physical (physical, PHY) layer. For specific descriptions of the foregoing protocol layers, refer to related technical specifications of the 3rd generation partnership project (3rd generation partnership project, 3GPP). The radio access network device may be a macro base station (such as 110a in FIG. 1), or may be a micro base station or an indoor base station (such as 110b in FIG. 1), or may be a relay node or a donor node. Neither of a specific technology and a specific device form used for the radio access network device is limited in embodiments of this application. For ease of description, the following uses an example in which an access network device is used as the radio access network device for description.

The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearable, smart transportation, and smart city. The terminal may be a mobile phone, a tablet computer, a computer with wireless sending and receiving functions, a wearable device, a vehicle, an uncrewed aerial vehicle, a helicopter, an airplane, a ship, a robot, a robot arm, a smart home device, or the like. Neither of a specific technology and a specific device form used for the terminal is limited in embodiments of this application.

Communication may be performed between an access network device and a terminal, between access network devices, or between terminals by using a licensed spectrum, an unlicensed spectrum, or both a licensed spectrum and an unlicensed spectrum; may be performed by using a spectrum below 6 gigahertz (gigahertz, GHz); may be performed by using a spectrum above 6 GHz; or may be performed by using both a spectrum below 6 GHz and a spectrum above 6 GHz. In embodiments of this application, a spectrum resource used for wireless communication is not limited.

In embodiments of this application, roles of the access network device and the terminal may be relative. For example, a helicopter or an uncrewed aerial vehicle 120i in FIG. 1 may be configured as a mobile access network device, and for a terminal 120j accessing the radio access network 100 through 120i, the terminal 120i is an access network device. However, for the access network device 110a, 120i is a terminal. Communication between 110a and 120i is performed based on a radio air interface protocol. Certainly, 110a and 120i may alternatively communicate with each other by using an interface protocol between access network devices. In this case, compared with 110a, 120i is also an access network device. Therefore, in embodiments of this application, the access network device and the terminal may be collectively referred to as communication apparatuses. 110a and 110b in FIG. 1 may be referred to as communication apparatuses having a function of an access network device, and 120a to 120j in FIG. 1 may be referred to as communication apparatuses having a function of a terminal.

In embodiments of this application, application scenarios of the access network device and the terminal are not limited. For example, the access network device and the terminal may be at fixed locations, or may be movable. The access network device and the terminal may be deployed on land, including an indoor or outdoor device, a handheld device, or a vehicle-mounted device; or may be deployed on a water surface; or may be deployed on a plane, a balloon, and an artificial satellite in the air.

The solutions provided in embodiments of this application may be applied to a 5G communication system, a 6G communication system, an integrated sensing and communication system, or even another communication system in future evolution. This is not limited. In the following descriptions, communication between an access network device and a terminal is mainly used as an example for description. The solutions in embodiments of this application may also be applied to another application scenario, for example, communication between base stations, communication between terminals, and communication in an internet of vehicles, an internet of things, or an industrial internet. This is not limited.

In LTE and NR, different cyclic shifts of a Zadoff-Chu (Zadoff-Chu, ZC) root sequence may be used to form a zero correlation zone. The zero correlation zone means that a correlation function is equal to zero within a range of a maximum round-trip time (without a Doppler frequency shift). For example, a ZC root sequence is obtained, and a cyclic shift sequence whose correlation function is equal to zero may be obtained by restricting a cyclic shift of the ZC root sequence. A correlation function of any two sequences in the cyclic shift sequence is equal to zero.

To improve a capability of the ZC sequence to resist a Doppler frequency offset, the LTE and NR protocols further restrict the cyclic shift of the ZC root sequence. A zero ambiguity zone means that an ambiguity function is equal to zero within a range of a maximum round-trip time and a maximum Doppler frequency shift. For example, a ZC root sequence is obtained, and a cyclic shift sequence whose ambiguity function is equal to zero may be obtained by further restricting a cyclic shift of the ZC root sequence. An ambiguity function of any two sequences in the cyclic shift sequence is equal to zero. In release 8 (Release 8), a cyclic shift restricted set type A (Restricted Set Type A) is proposed to resist a frequency offset of $\pm 1$ subcarrier spacings, and an expression of 2 cyclic shifts is obtained based on a relationship between a sequence length, a root index number, and a maximum round-trip time. In release 14 (Release 14), a cyclic shift restricted set type B (Restricted Set Type B) is proposed to resist a frequency offset of $\pm 2$ subcarrier spacings, and an expression of 6 cyclic shifts is obtained based on a relationship between a sequence length, a root index number, and a maximum round-trip time.

In the foregoing solutions, methods for calculating a cyclic shift restricted set are different with respect to requirements for resisting different subcarrier spacing frequency offsets. The solution in the standard is difficult to extend to calculate a cyclic shift restricted set for resisting more subcarrier spacing frequency offsets.

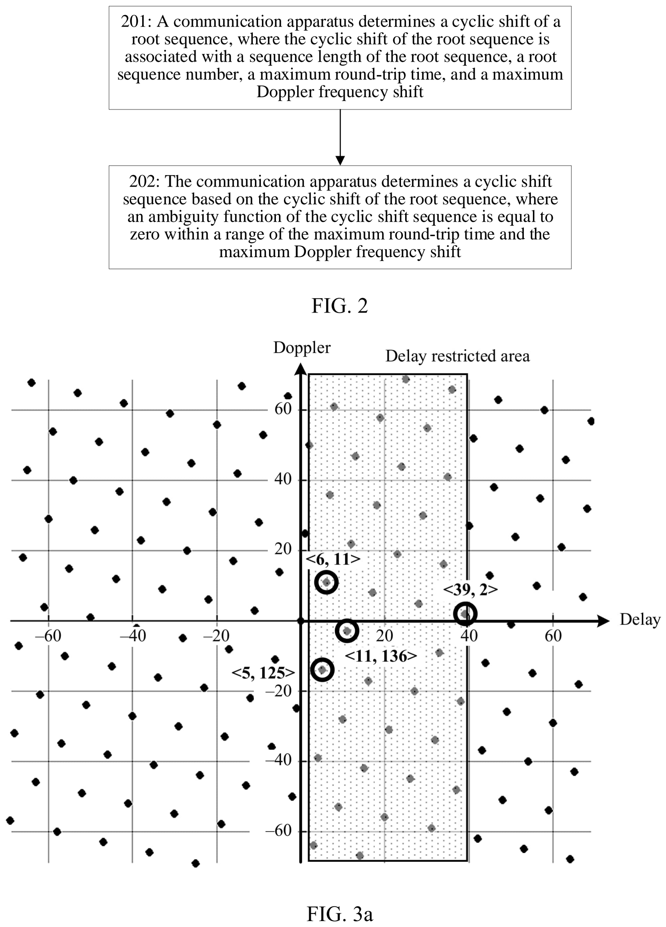

In embodiments of this application, a cyclic shift restricted set for resisting any subcarrier spacing frequency offset may be determined. For example, a subcarrier spacing frequency offset that needs to be resisted currently, that is, the maximum Doppler frequency shift $\Delta_F$, is input into the solution of this application, to obtain a corresponding cyclic shift restricted set, or obtain a corresponding cyclic shift sequence. For example, when there is no need to resist a frequency offset, the maximum Doppler frequency shift is $\Delta_F = 1$; when a frequency offset of $\pm 1$ subcarrier spacings is resisted, the maximum Doppler frequency shift is $\Delta_F = 3$; when a frequency offset of $\pm 2$ subcarrier spacings is resisted, the maximum Doppler frequency shift is $\Delta_F = 5$; or when a frequency offset of $+f$ subcarrier spacings is resisted, the maximum Doppler frequency shift is $\Delta_F = 2 \cdot f + 1$. As shown in FIG. 2, a procedure is provided, and the procedure includes the following steps.

Step 201: A communication apparatus determines a cyclic shift of a root sequence, where the cyclic shift of the root sequence is associated with a sequence length N of the root sequence, a root sequence number u, a maximum round-trip time $\Delta_T$, and a maximum Doppler frequency shift $\Delta_F$. Alternatively, a description is as follows: A communication apparatus determines a cyclic shift of a root sequence based on a sequence length $N$ of the root sequence, a root sequence number u, a maximum round-trip time $\Delta_T$, and a maximum Doppler frequency shift $\Delta_F$.

In a design, the communication apparatus may determine a delay-domain cyclic shift reference point and a Doppler-domain cyclic shift reference point based on the root sequence. The communication apparatus determines a quantity of cyclic shifts corresponding to the delay-domain cyclic shift reference point and a quantity of cyclic shifts corresponding to the Doppler-domain cyclic shift reference point. The communication apparatus selects a cyclic shift reference point with a largest quantity of cyclic shifts from the delay-domain cyclic shift reference point and the Doppler-domain cyclic shift reference point as a cyclic shift reference point of the root sequence. The communication apparatus determines the cyclic shift of the root sequence based on the cyclic shift reference point of the root sequence. It should be noted that when determining the delay-domain cyclic shift reference point, the communication apparatus needs to determine a delay restricted area. The delay restricted area is determined by the sequence length $N$ of the root sequence, the root sequence number $u$, the maximum round-trip time $\Delta_T$, and the maximum Doppler frequency shift $\Delta_F$. Similarly, when determining the Doppler-domain cyclic shift reference point, the communication apparatus needs to determine a Doppler restricted area. The Doppler restricted area is determined by the sequence length $N$ of the root sequence, the root sequence number $u$, the maximum round-trip time $\Delta_T$, and the maximum Doppler frequency shift $\Delta_F$. Further, when determining the quantity of cyclic shifts corresponding to the delay-domain cyclic shift reference point, the communication apparatus needs to determine parameters such as a quantity of delay-domain complete cyclic shifts, a quantity of Doppler-domain complete cyclic shifts, a quantity of delay-domain near-end residual cyclic shifts, a quantity of Doppler-domain near-end residual cyclic shifts, a quantity of delay-domain far-end residual cyclic shifts, and a quantity of Doppler-domain far-end residual cyclic shifts. The foregoing 6 parameters are associated with the sequence length $N$ of the root sequence, the root sequence number $u$, the maximum round-trip time $\Delta_T$, and the maximum Doppler frequency shift $\Delta_F$. For example, when the quantity of delay-domain complete cyclic shifts is determined, the factor maximum round-trip time $\Delta_T$ needs to be considered. When the quantity of Doppler-domain complete cyclic shifts is determined, the factor maximum Doppler frequency shift $\Delta_F$ needs to be considered. Similarly, when the quantity of cyclic shifts corresponding to the Doppler-domain cyclic shift reference point is determined, the foregoing 6 parameters also need to be determined. The 6 parameters are associated with the sequence length $N$ of the root sequence, the root sequence number $u$, the maximum round-trip time $\Delta_T$, and the maximum Doppler frequency shift $\Delta_F$. For a specific relationship, refer to descriptions in the following formulas. Further, when determining the cyclic shift of the root sequence based on the cyclic shift reference point of the root sequence, the communication apparatus also needs to consider factors such as the sequence length $N$ of the root sequence, the root sequence number $u$, the maximum round-trip time $\Delta_T$, and the maximum Doppler frequency shift $\Delta_F$. For a specific relationship, refer to the following formulas. Therefore, in this embodiment of this application, it may also be described as that the cyclic shift of the root sequence is associated with the sequence length N of the root sequence, the root sequence number $u$, the maximum round-trip time $\Delta_T$, and the maximum Doppler frequency shift $\Delta_F$.

Step 202: The communication apparatus determines a cyclic shift sequence based on the cyclic shift of the root sequence, where an ambiguity function of the cyclic shift sequence is equal to zero within a range of the maximum round-trip time $\Delta_T$ and the maximum Doppler frequency shift $\Delta_F$. Alternatively, it may be described as that the cyclic shift sequence determined in step 202 includes one or more sequences. When a plurality of sequences are included, ambiguity functions of any two of the plurality of sequences are equal to zero within the range of the maximum round-trip time $\Delta_T$ and the maximum Doppler frequency shift $\Delta_F$.

In this embodiment of this application, the root sequence satisfies:

$$s_{u,v}(n) = e^{-j\pi u(n+C_v)(n+C_v+1)/N}$$

$N$ represents the sequence length of the root sequence, $N$ is a prime number, $u$ represents the root sequence number, a value range of $u$ is $1 \leq u \leq N - 1$, n represents a symbol index of the cyclic shift sequence, a value range of n is $0 \leq n \leq N - 1$, $v$ represents an index of the cyclic shift of the root sequence, and $C_v$ represents the cyclic shift of the root sequence.

It should be noted that, in the foregoing expression of the root sequence, a value of the cyclic shift $C_v$ of the root sequence is equal to 0. In other words, when the cyclic shift of the root sequence is $C_v = 0$, the foregoing expression represents the root sequence.

In this embodiment of this application, the communication apparatus first obtains the root sequence. The communication apparatus may determine the value of the cyclic shift $C_v$ of the root sequence according to step 201. The communication apparatus may determine the cyclic shift sequence by substituting the value of the cyclic shift $C_v$ of the root sequence into the foregoing formula. The following describes in detail that the communication apparatus may obtain values of cyclic shifts $C_v$ of one or more root sequences, and substitute a value of a cyclic shift $C_v$ of each root sequence into the foregoing expression, to obtain a corresponding sequence. The cyclic shift sequence determined in step 202 includes one or more sequences. In a description, in step 202, the communication apparatus determines, based on the cyclic shift $C_v$ of the root sequence, that the cyclic shift sequence $s_{u,v}(n)$ satisfies the foregoing expression, that is, satisfies:

$$s_{u,v}(n) = e^{-j\pi u(n+C_v)(n+C_v+1)/N}$$

In a design, two sequences included in the cyclic shift sequence determined in the procedure in FIG. 2 may be respectively represented as $s_{u,v1}(n)$ and $s_{u,v2}(n)$. Ambiguity functions $A(\tau, v)$ of the two sequences are equal to zero within the range of the maximum round-trip time $\Delta_T$ and the maximum Doppler frequency shift $\Delta_F$, and satisfy:

$$A(\tau, v) = \sum_{n=0}^{N-1} s_{u,v_1}(n) s_{u,v_2}^*(n - \tau) e^{j2\pi n v/N} = \begin{cases} N, & v_1 = v_2, \tau = 0, v = 0 \\ 0, & (v_1 \neq v_2) \vee (\tau \neq 0) \vee (v \neq 0) \end{cases}$$

$N$ represents the sequence length of the root sequence, $u$ represents the root sequence number, $v_1$ and $v_2$ represent indexes of cyclic shifts of the root sequence, $\tau$ represents a delay coordinate of the ambiguity function, a value range of $\tau$ is $0 \leq \tau \leq \Delta_T - 1$, v represents a Doppler coordinate of the ambiguity function, a value range of v is $0 \leq \tau \leq \Delta_F - 1$, an operator $(\cdot)^*$ represents a complex conjugate, and an operator V represents conditional OR.

For example, the maximum round-trip time $\Delta_T$ is related to a location of a terminal, and the maximum Doppler frequency shift $\Delta_F$ is related to a moving speed of the terminal. Within a specific cell radius, if the moving speed of the terminal satisfies a limitation of the maximum Doppler frequency shift $\Delta_F$, mutual interference between any two sequences in the cyclic shift sequence is minimum, or mutual interference between any two sequences is equal to zero.

The following continues to describe a process in which the communication apparatus determines the cyclic shift $C_v$ of the root sequence, that is, an implementation process of step 201.

In a design, a specific implementation of step 201 includes: The communication apparatus determines a cyclic shift reference point of the root sequence based on a delay-domain cyclic shift reference point and a Doppler-domain cyclic shift reference point; and the communication apparatus determines the cyclic shift $C_v$ of the root sequence based on the cyclic shift reference point of the root sequence.

Optionally, an ambiguity function of the root sequence is at all peak points in a given area. If a delay spacing and a Doppler spacing between a peak point and an origin of coordinates are not both greater than a delay spacing and a Doppler spacing between any peak point of the ambiguity function other than the origin of coordinates on a two-dimensional plane and the origin of coordinates, the peak point is the cyclic shift reference point. Cyclic shift reference points are classified into a delay-domain cyclic shift reference point and a Doppler-domain cyclic shift reference point based on different given areas.

[Delay-domain cyclic shift reference point]

The communication apparatus determines the delay-domain cyclic shift reference point based on the ambiguity function of the root sequence. The delay-domain cyclic shift reference point includes one or more cyclic shift reference points.

In a design, the communication apparatus may determine a delay restricted area in a delay-Doppler coordinate system. A horizontal axis of the delay-Doppler coordinate system indicates a delay domain, and a vertical axis indicates a Doppler domain. The delay restricted area includes one or more peak points of the root sequence, and the peak point is determined based on the ambiguity function of the root sequence. The communication apparatus determines that the peak point of the root sequence included in the delay restricted area is the delay-domain cyclic shift reference point.

Optionally, the delay restricted area satisfies: a rectangular area including a start coordinate in the delay domain

being $\Delta_T$, an end coordinate in the delay domain being $\min_{v\in\{\pm 1,\pm 2,...,\pm(\Delta F-1)\}}\{u^{-1}v \bmod N\}$, a start coordinate in the Doppler domain being 0, and an end coordinate in the Doppler domain being $N$ - 1. $N$ represents the sequence length of the root sequence, $u$ represents the root sequence number, $\Delta_T$ represents the maximum round-trip time, $\Delta_F$ represents the maximum Doppler frequency shift, and an operator $(\cdot)^{-1}$ represents a multiplicative inverse.

In an implementation, the communication apparatus determines the delay restricted area; and the communication apparatus determines the peak point of the root sequence in the delay restricted area. For example, in the delay restricted area, the communication apparatus calculates the peak point of the root sequence based on the ambiguity function. The communication apparatus selects, from the peak point in the delay restricted area, a peak point that satisfies a condition, where the peak point that satisfies the condition is the delay-domain cyclic shift reference point. Optionally, in the delay restricted area, a peak point that satisfies the following condition may be considered as the delay-domain cyclic shift reference point: A delay spacing and a Doppler spacing between the peak point and the origin of coordinates are not both greater than a delay spacing and a Doppler spacing between any peak point other than the origin of coordinates on a two-dimensional plane and the origin of coordinates.

In a design, a set $\mathcal{S}_T$ including coordinates of the delay-domain cyclic shift reference point satisfies:

$$\mathcal{S}_T \triangleq \left\{ \langle \tau_1^T, v_1^T \rangle, \langle \tau_2^T, v_2^T \rangle, ..., \langle \tau_{|\mathcal{S}_T|}^T, v_{|\mathcal{S}_T|}^T \rangle \right\}$$

$$= \left\{ \langle \tau, u\tau \bmod N \rangle \,\middle|\, \min\{\pm u\tau \bmod N\} < \min_{n=1,2,...,\tau-1}\{\pm un \bmod N\}, \tau \in \left\{ \Delta_T, \Delta_T + 1, ..., \min_{v\in\{\pm 1,\pm 2,...,\pm(\Delta_F-1)\}}\{u^{-1}v \bmod N\} \right\} \right\}$$

$N$ represents the sequence length of the root sequence, $u$ represents the root sequence number, $\Delta_T$ represents the maximum round-trip time, $\Delta_F$ represents the maximum Doppler frequency shift, $\langle \tau_i^T, v_i^T \rangle$ represents coordinates of an $i$th delay-domain cyclic shift reference point, a value range of $i$ is $1 \le i \le |\mathcal{S}_T|$, an operator $(\cdot)^{-1}$ represents a multiplicative inverse, an operator $|\cdot|$ represents a cardinality of the set, and a mark "T" represents the delay domain.

[Doppler-domain cyclic shift reference point]

The communication apparatus determines the Doppler-domain cyclic shift reference point based on the ambiguity function of the root sequence. The Doppler-domain cyclic shift reference point includes one or more cyclic shift reference points.

In an implementation, the communication apparatus determines a Doppler restricted area in the delay-Doppler coordinate system, where the horizontal axis in the delay-Doppler coordinate system indicates the delay domain, and the vertical axis indicates the Doppler domain. The Doppler restricted area includes one or more peak points of the root sequence, and the peak point is determined based on the ambiguity function of the root sequence. The communication apparatus determines that the peak point of the root sequence included in the Doppler restricted area is the Doppler-domain cyclic shift reference point. The Doppler-domain cyclic shift reference point includes one or more cyclic shift reference points.

In a design, the Doppler restricted area satisfies: a rectangular area including a start coordinate in the delay domain being 0, an end coordinate in the delay domain being $N$ - 1, a start coordinate in the Doppler domain being $\Delta_F$, and an end coordinate in the Doppler domain being $\min_{\tau\in\{\pm 1,\pm 2,...,\pm(\Delta T-1)\}}\{u\tau \bmod N\}$. $N$ represents the sequence length of the root sequence, $u$ represents the root sequence number, $\Delta_T$ represents the maximum round-trip time, and $\Delta_F$ represents the maximum Doppler frequency shift.

In an implementation, the communication apparatus determines the Doppler restricted area; and the communication apparatus determines the peak point of the root sequence in the Doppler restricted area. For example, in the Doppler restricted area, the communication apparatus calculates the peak point of the root sequence based on the ambiguity function. The communication apparatus selects, from the peak point in the Doppler restricted area, a peak point that satisfies a condition, where the peak point that satisfies the condition may be considered as the Doppler-domain cyclic shift reference point. Optionally, in the Doppler restricted area, a peak point that satisfies the following condition may be considered as the Doppler-domain cyclic shift reference point: A delay spacing and a Doppler spacing between the peak point and the origin of coordinates are not both greater than a delay spacing and a Doppler spacing between any peak point other than the origin of coordinates on a two-dimensional plane and the origin of coordinates.

In a design, a set $\mathcal{S}_F$ including coordinates of the Doppler-domain cyclic shift reference point satisfies:

$$\mathcal{S}_F \triangleq \left\{\langle \tau_1^F, v_1^F \rangle, \langle \tau_2^F, v_2^F \rangle, ..., \langle \tau_{|\mathcal{S}_F|}^F, v_{|\mathcal{S}_F|}^F \rangle \right\}$$

$$= \left\{\langle u^{-1}v \bmod N, v \rangle \middle| \min\{\pm u^{-1}v \bmod N\} < \min_{n=1,2,...,v-1}\{\pm u^{-1}n \bmod N\}, v \in \left\{\Delta_F, \Delta_F + 1, ..., \min_{\tau \in \{\pm 1, \pm 2, ..., \pm(\Delta_T-1)\}}\{u\tau \bmod N\}\right\}\right\}$$

$N$ represents the sequence length of the root sequence, $u$ represents the root sequence number, $\Delta_T$ represents the maximum round-trip time, $\Delta_F$ represents the maximum Doppler frequency shift, $\langle \tau_i^F, v_i^F \rangle$ represents an $i^{th}$ Doppler-domain cyclic shift reference point, a value range of $i$ is $1 \leq i \leq |\mathcal{S}_F|$, an operator $(\cdot)^{-1}$ represents a multiplicative inverse, an operator $|\cdot|$ represents a cardinality of the set, and a mark "F" represents the Doppler domain.

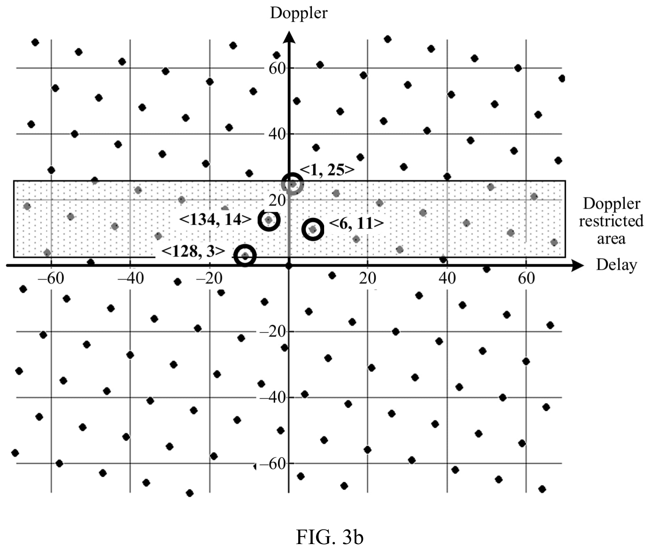

For example, FIG. 3a and FIG. 3b show diagrams of a delay-domain cyclic shift reference point and a Doppler-domain cyclic shift reference point when $N = 139$, $u = 25$, $\Delta_T \times \Delta_F = 2 \times 3$. As shown in FIG. 3a, in the delay restricted area, a start coordinate in the delay domain is 2, an end coordinate in the delay domain is 39, a start coordinate in the Doppler domain is 0, and an end coordinate in the Doppler domain is 138. The delay-domain cyclic shift reference point includes 4 cyclic shift reference points, and coordinates of the cyclic shift reference points are respectively (5,125), (6,11), (11,136), (39,2). As shown in FIG. 3b, in the Doppler restricted area, a start coordinate in the delay domain is 0, an end coordinate in the delay domain is 138, a start coordinate in the Doppler domain is 3, and an end coordinate in the Doppler domain is 25. The Doppler-domain cyclic shift reference point includes 4 cyclic shift reference points, and coordinates of the cyclic shift reference points are respectively (128,3), (6,11), (134,14), (1,25). Optionally, a quantity of delay-domain cyclic shift reference points is equal to a quantity of Doppler-domain cyclic shift reference points, that is, $|\mathcal{S}_T| = |\mathcal{S}_F|$.

It should be noted that, for some specific sequence lengths $N$, root sequence numbers $u$, maximum round-trip times $\Delta_T$, and maximum Doppler frequency shifts $\Delta_F$, according to the method in this embodiment of this application, there may be no delay-domain cyclic shift reference point or Doppler-domain cyclic shift reference point. In this case, a set that includes the delay-domain cyclic shift reference point and the Doppler-domain cyclic shift reference point determined in step 202 is an empty set, that is, no cyclic shift sequence satisfies a zero ambiguity zone condition, including the root sequence.

[Cyclic shift reference point of the root sequence]

In a design, the communication apparatus determines a quantity of cyclic shifts corresponding to the delay-domain cyclic shift reference point and a quantity of cyclic shifts corresponding to the Doppler-domain cyclic shift reference point. The communication apparatus selects a reference point with a largest quantity of cyclic shifts from the delay-domain cyclic shift reference point and the Doppler-domain cyclic shift reference point as a cyclic shift reference point of the root sequence. In a design, coordinates of the cyclic shift reference point of the root sequence are $\langle \tau_\star^\dagger, v_\star^\dagger \rangle$, and a quantity $\Omega_\star^\dagger$ of cyclic shifts corresponding to the cyclic shift reference point satisfies:

$$\Omega_\star^\dagger = \max\left\{\Omega_1^T, \Omega_2^T, ... \Omega_{|\mathcal{S}_T|}^T, \Omega_1^F, \Omega_2^F, ..., \Omega_{|\mathcal{S}_F|}^F\right\}$$

$\Omega_1^T, \Omega_2^T, ... \Omega_{|\mathcal{S}_T|}^T$   represents the quantity of cyclic shifts corresponding to the delay-domain cyclic shift reference point, $\Omega_1^F, \Omega_2^F, ..., \Omega_{|\mathcal{S}_F|}^F$ represents the quantity of cyclic shifts corresponding to the Doppler-domain cyclic shift reference point, and $\Omega_\star^\dagger$ represents the quantity of cyclic shifts corresponding to the cyclic shift reference point of the root sequence.

In other words, the communication apparatus selects a cyclic shift reference point with a largest quantity of cyclic shifts from the delay-domain cyclic shift reference point and the Doppler-domain cyclic shift reference point as a cyclic shift reference point of the root sequence. It should be noted that, in the foregoing expression, when $\dagger = T$, it indicates that the cyclic shift reference point of the root sequence is a $\star^{th}$ delay-domain cyclic shift reference point; or when $\dagger = F$, it indicates that the cyclic shift reference point of the root sequence is a $\star^{th}$ Doppler-domain cyclic shift reference point.

For example, when $N = 139$, $u = 25$, $\Delta_T \times \Delta_F = 2 \times 3$, the delay-domain cyclic shift reference point includes 4 cyclic shift reference points, and coordinates of the cyclic shift reference points are respectively $\langle \tau_1^T, v_1^T \rangle = \langle 5,125 \rangle, \langle \tau_2^T, v_2^T \rangle = \langle 6,11 \rangle, \langle \tau_3^T, v_3^T \rangle = \langle 11,136 \rangle, \langle \tau_4^T, v_4^T \rangle = \langle 39,2 \rangle$. Quantities of cyclic shifts corresponding to the 4 cyclic shift reference points are respectively

$\Omega_1^T = 21, \Omega_2^T = 20, \Omega_3^T = 19, \Omega_4^T = 19$. The Doppler-domain cyclic shift reference point includes 4 cyclic shift reference points, and coordinates of the cyclic shift reference points are respectively $\langle \tau_1^F, v_1^F \rangle = \langle 128,3 \rangle, \langle \tau_2^F, v_2^F \rangle = \langle 6,11 \rangle, \langle \tau_3^F, v_3^F \rangle = \langle 134,14 \rangle, \langle \tau_4^F, v_4^F \rangle = \langle 1,25 \rangle$. Quantities of cyclic shifts corresponding to the 4 cyclic shift reference points are respectively $\Omega_1^F = 19, \Omega_2^F = 20, \Omega_3^F = 20, \Omega_4^F = 21$. Based on a principle of selecting a cyclic shift reference point with a largest quantity of cyclic shifts as a cyclic shift reference point of the root sequence, the selected cyclic shift reference point of the root sequence is a delay-domain cyclic shift reference point, coordinates of the selected cyclic shift reference point are $\langle \tau_\star^\dagger, v_\star^\dagger \rangle = \langle \tau_1^T, v_1^T \rangle = \langle 5,125 \rangle$, and a corresponding quantity of cyclic shifts is $\Omega_\star^\dagger = \Omega_1^T = 21$.

It should be noted that coordinates of the delay-domain cyclic shift reference point determined by the communication apparatus are represented as $\{ \langle \tau_1^T, v_1^T \rangle, \langle \tau_2^T, v_2^T \rangle, ..., \langle \tau_{|\mathcal{S}_T|}^T, v_{|\mathcal{S}_T|}^T \rangle \}$. Each cyclic shift reference point in the delay-domain cyclic shift reference point corresponds to one quantity of cyclic shifts. In the foregoing expression, the quantity of cyclic shifts corresponding to the delay-domain cyclic shift reference point is represented as $\Omega_1^T, \Omega_2^T, ... \Omega_{|\mathcal{S}_T|}^T$. $|\mathcal{S}_T|$ is an integer greater than or equal to 0. A mark " ..." represents ellipsis, which indicates that quantities of cyclic shifts corresponding to a plurality of cyclic shift reference points with consecutive numbers or indexes are omitted. It may be understood that when a value of $|\mathcal{S}_T|$ is 1, the delay-domain cyclic shift reference point includes 1 cyclic shift reference point, and a quantity of cyclic shifts corresponding to the 1 cyclic shift reference point is represented as $\Omega_1^T$. When a value of $|\mathcal{S}_T|$ is 2, the delay-domain cyclic shift reference point includes 2 cyclic shift reference points, and quantities of cyclic shifts corresponding to the 2 cyclic shift reference points are respectively represented as $\Omega_1^T, \Omega_2^T$. It may be understood that a value of $|\mathcal{S}_T|$ may be 0, indicating that the delay-domain cyclic shift reference point does not include any cyclic shift reference point. In this case, it indicates that there is no peak point that satisfies a condition in the delay restricted area.

Similarly, coordinates of the Doppler-domain cyclic shift reference point determined by the communication apparatus are represented as $\langle \tau_1^F, v_1^F \rangle, \langle \tau_2^F, v_2^F \rangle, ..., \langle \tau_{|\mathcal{S}_F|}^F, v_{|\mathcal{S}_F|}^F \rangle$. Each cyclic shift reference point in the Doppler-domain cyclic shift reference point corresponds to one quantity of cyclic shifts. In the foregoing expression, the quantity of cyclic shifts corresponding to the Doppler-domain cyclic shift reference point is represented as $\Omega_1^F, \Omega_2^F, ..., \Omega_{|\mathcal{S}_F|}^F$. $|\mathcal{S}_F|$ is an integer greater than or equal to 0. A mark "..." represents ellipsis, which indicates that quantities of cyclic shifts corresponding to a plurality of cyclic shift reference points with consecutive numbers or indexes are omitted. It may be understood that when a value of $||$ is 1, the Doppler-domain cyclic shift reference point includes 1 cyclic shift reference point, and a quantity of cyclic shifts corresponding to the 1 cyclic shift reference point is represented as $\Omega_1^F$. When a value of $|\mathcal{S}_F|$ is 2, the Doppler-domain cyclic shift reference point includes 2 cyclic shift reference points, and quantities of cyclic shifts corresponding to the 2 cyclic shift reference points are represented as $\Omega_1^F, \Omega_2^F$. It may be understood that a value of $|\mathcal{S}_F|$ may be 0, indicating that the Doppler-domain cyclic shift reference point does not include any cyclic shift reference point. In this case, it indicates that there is no peak point that satisfies a condition in the Doppler restricted area.

[Quantity of cyclic shifts corresponding to the delay-domain cyclic shift reference point]

The delay-domain cyclic shift reference point includes one or more cyclic shift reference points. In the following description, coordinates of any cyclic shift reference point in the delay-domain cyclic shift reference point are represented as $\langle \tau_i^T, v_i^T \rangle$, a value range of $i$ is $1 \leq i \leq |\mathcal{S}_T|$, and a quantity of cyclic shifts corresponding to the cyclic shift reference point is represented as $\Omega_i^T$. For ease of description, the following description is used below: coordinates $\langle \tau_i^T, v_i^T \rangle$ of the

delay-domain cyclic shift reference point.

In a design, the communication apparatus determines a quantity $k_i^{\mathrm{T}}$ of delay-domain complete cyclic shifts, a quantity $l_i^{\mathrm{T}}$ of Doppler-domain complete cyclic shifts, a quantity $\bar{k}_i^{\mathrm{T}}$ of delay-domain near-end residual cyclic shifts, a quantity $\bar{l}_i^{\mathrm{T}}$ of Doppler-domain near-end residual cyclic shifts, a quantity kT of delay-domain far-end residual cyclic shifts, and a quantity $\bar{\bar{l}}_i^{\mathrm{T}}$ of Doppler-domain far-end residual cyclic shifts based on the coordinates $\langle \tau_i^{\mathrm{T}}, v_i^{\mathrm{T}} \rangle$ of the delay-domain cyclic shift reference point. The communication apparatus determines a quantity $k_i^{\mathrm{T}} \cdot l_i^{\mathrm{T}}$ of complete cyclic shifts based on the quantity $k_i^{\mathrm{T}}$ of delay-domain complete cyclic shifts and the quantity $l_i^{\mathrm{T}}$ of Doppler-domain complete cyclic shifts. The communication apparatus determines a quantity $\bar{k}_i^{\mathrm{T}} \cdot \bar{l}_i^{\mathrm{T}}$ of near-end residual cyclic shifts based on the quantity $\bar{k}_i^{\mathrm{T}}$ of delay-domain near-end residual cyclic shifts and the quantity $\bar{l}_i^{\mathrm{T}}$ of Doppler-domain near-end residual cyclic shifts. The communication apparatus determines a quantity $\bar{\bar{k}}_i^{\mathrm{T}} \cdot \bar{\bar{l}}_i^{\mathrm{T}}$ of far-end residual cyclic shifts based on the quantity $\bar{\bar{k}}_i^{\mathrm{T}}$ of delay-domain far-end residual cyclic shifts and the quantity $\bar{\bar{l}}_i^{\mathrm{T}}$ of Doppler-domain far-end residual cyclic shifts. The communication apparatus determines, based on the quantity $k_i^{\mathrm{T}} \cdot l_i^{\mathrm{T}}$ of complete cyclic shifts, the quantity $\bar{k}_i^{\mathrm{T}} \cdot \bar{l}_i^{\mathrm{T}}$ of near-end residual cyclic shifts, and the quantity $\bar{\bar{k}}_i^{\mathrm{T}} \cdot \bar{\bar{l}}_i^{\mathrm{T}}$ of far-end residual cyclic shifts, the quantity $\Omega_i^{\mathrm{T}}$ of cyclic shifts corresponding to the delay-domain cyclic shift reference point whose coordinates are $\langle \tau_i^{\mathrm{T}}, v_i^{\mathrm{T}} \rangle$. For example, the quantity $\Omega_i^{\mathrm{T}}$ of cyclic shifts corresponding to the coordinates $\langle \tau_i^{\mathrm{T}}, v_i^{\mathrm{T}} \rangle$ of the delay-domain cyclic shift reference point satisfies:

$$\Omega_i^{\mathrm{T}} = k_i^{\mathrm{T}} \cdot l_i^{\mathrm{T}} + \bar{k}_i^{\mathrm{T}} \cdot \bar{l}_i^{\mathrm{T}} + \bar{\bar{k}}_i^{\mathrm{T}} \cdot \bar{\bar{l}}_i^{\mathrm{T}}$$

$k_i^{\mathrm{T}}$ represents the quantity of delay-domain complete cyclic shifts, $l_i^{\mathrm{T}}$ represents the quantity of Doppler-domain complete cyclic shifts, $\bar{k}_i^{\mathrm{T}}$ represents the quantity of delay-domain near-end residual cyclic shifts, $\bar{l}_i^{\mathrm{T}}$ represents the quantity of Doppler-domain near-end residual cyclic shifts, $\bar{\bar{k}}_i^{\mathrm{T}}$ represents the quantity of delay-domain far-end residual cyclic shifts, and $\bar{\bar{l}}_i^{\mathrm{T}}$ represents the quantity of Doppler-domain far-end residual cyclic shifts.

In other words, the communication apparatus adds the quantity $k_i^{\mathrm{T}} \cdot l_i^{\mathrm{T}}$ of complete cyclic shifts, the quantity $\bar{k}_i^{\mathrm{T}} \cdot \bar{l}_i^{\mathrm{T}}$ of near-end residual cyclic shifts, and the quantity $\bar{\bar{k}}_i^{\mathrm{T}} \cdot \bar{\bar{l}}_i^{\mathrm{T}}$ of far-end residual cyclic shifts that are of the delay-domain cyclic shift reference point whose coordinates are $\langle \tau_i^{\mathrm{T}}, v_i^{\mathrm{T}} \rangle$, and uses a sum of the three as the quantity $\Omega_i^{\mathrm{T}}$ of cyclic shifts corresponding to the delay-domain cyclic shift reference point whose coordinates are $\langle \tau_i^{\mathrm{T}}, v_i^{\mathrm{T}} \rangle$.

[Quantity $k_i^{\mathrm{T}}$ of delay-domain complete cyclic shifts]

In a design, the communication apparatus may determine the quantity $k_i^{\mathrm{T}}$ of delay-domain complete cyclic shifts based on the coordinates $\langle \tau_i^{\mathrm{T}}, v_i^{\mathrm{T}} \rangle$ of the delay-domain cyclic shift reference point. For example, in an implementation, the quantity $k_i^{\mathrm{T}}$ of delay-domain complete cyclic shifts satisfies:

$$k_i^{\mathrm{T}} = \left\lfloor \tau_i^{\mathrm{T}}/\Delta_{\mathrm{T}} \right\rfloor$$

$\Delta_{\mathrm{T}}$ represents the maximum round-trip time, and an operator $\lfloor \cdot \rfloor$ represents rounding down.

[Quantity $l_i^{\mathrm{T}}$ of Doppler-domain complete cyclic shifts]

In a design, the communication apparatus may determine restriction coordinates $\langle \bar{\tau}_i^{\mathrm{T}}, \bar{v}_i^{\mathrm{T}} \rangle$ based on the coordinates $\langle \tau_i^{\mathrm{T}}, v_i^{\mathrm{T}} \rangle$ of the delay-domain cyclic shift reference point. For example, in an implementation, the restriction coordinates $\langle \bar{\tau}_i^{\mathrm{T}}, \bar{v}_i^{\mathrm{T}} \rangle$ satisfy:

$$\begin{cases} \bar{\tau}_i^{\mathrm{T}} = \min_{v \in \{1,2,\ldots,\max\{\Delta_{\mathrm{F}}-1,\min\{v_i^{\mathrm{T}},N-v_i^{\mathrm{T}}\}-1\}} \left\{ \mathrm{sgn}\left(v_i^{\mathrm{T}} - N/2\right) u^{-1} v \bmod N \right\} \\ \bar{v}_i^{\mathrm{T}} = u\bar{\tau}_i^{\mathrm{T}} \bmod N \end{cases}$$

$N$ represents the sequence length of the root sequence, $u$ represents the root sequence number, $\Delta_{\mathrm{F}}$ represents the maximum Doppler frequency shift, and an operator $(\cdot)^{-1}$ represents a multiplicative inverse.

The communication apparatus determines a Doppler spacing $d_i^{\mathrm{T}}$ based on the coordinates $\langle \tau_i^{\mathrm{T}}, v_i^{\mathrm{T}} \rangle$ of the delay-domain cyclic shift reference point and the restriction coordinates $\langle \bar{\tau}_i^{\mathrm{T}}, \bar{v}_i^{\mathrm{T}} \rangle$. In an implementation, the Doppler spacing $d_i^{\mathrm{T}}$ satisfies:

$$d_i^{\mathrm{T}} = \min \left\{ d \left| \tau_i^{\mathrm{T}} - \left( \left\lfloor \frac{d/\Delta_{\mathrm{F}}}{\lceil \min\{v_i^{\mathrm{T}},N-v_i^{\mathrm{T}}\}/\Delta_{\mathrm{F}} \rceil} \right\rfloor + 1 \right) \cdot \tau_i^{\mathrm{T}} \bmod \Delta_{\mathrm{T}} \geq \bar{\tau}_i^{\mathrm{T}} - \left\lfloor \frac{d - \min\{\bar{v}_i^{\mathrm{T}},N-\bar{v}_i^{\mathrm{T}}\}}{\min\{v_i^{\mathrm{T}},N-v_i^{\mathrm{T}}\}} \right\rfloor \cdot \tau_i^{\mathrm{T}} \right. \right\}$$

$N$ represents the sequence length of the root sequence, $\Delta_{\mathrm{T}}$ represents the maximum round-trip time, $\Delta_{\mathrm{F}}$ represents the maximum Doppler frequency shift, an operator $\lfloor \cdot \rfloor$ represents rounding down, and an operator $\lceil \cdot \rceil$ represents rounding up.

The communication apparatus determines the quantity $l_i^{\mathrm{T}}$ of Doppler-domain complete cyclic shifts based on the Doppler spacing $d_i^{\mathrm{T}}$. In an implementation, the quantity $l_i^{\mathrm{T}}$ of Doppler-domain complete cyclic shifts satisfies:

$$l_i^{\mathrm{T}} = \left\lfloor d_i^{\mathrm{T}}/\Delta_{\mathrm{F}} \right\rfloor$$

$\Delta_{\mathrm{F}}$ represents the maximum Doppler frequency shift, $d_i^{\mathrm{T}}$ represents the Doppler spacing, and an operator $\lfloor \cdot \rfloor$ represents rounding down.

[Quantity $\bar{k}_i^{\mathrm{T}}$ of delay-domain near-end residual cyclic shifts]

In a design, the communication apparatus may determine the quantity $\bar{k}_i^{\mathrm{T}}$ of delay-domain near-end residual cyclic shifts based on the coordinates $\langle \tau_i^{\mathrm{T}}, v_i^{\mathrm{T}} \rangle$ of the delay-domain cyclic shift reference point, the restriction coordinates $\langle \bar{\tau}_i^{\mathrm{T}}, \bar{v}_i^{\mathrm{T}} \rangle$, and the quantity $l_i^{\mathrm{T}}$ of Doppler-domain complete cyclic shifts. In an implementation, the quantity $\bar{k}_i^{\mathrm{T}}$ of delay-domain near-end residual cyclic shifts satisfies:

$$\bar{k}_i^{\mathrm{T}} = \max \left\{ \left\lfloor \left( \bar{\tau}_i^{\mathrm{T}} - \left\lfloor \frac{d_i^{\mathrm{T}} - \min\{\bar{v}_i^{\mathrm{T}},N-\bar{v}_i^{\mathrm{T}}\}}{\min\{v_i^{\mathrm{T}},N-v_i^{\mathrm{T}}\}} \right\rfloor \cdot \tau_i^{\mathrm{T}} + \left( \left\lfloor \frac{l_i^{\mathrm{T}} - 1}{\lceil \min\{v_i^{\mathrm{T}},N-v_i^{\mathrm{T}}\}/\Delta_{\mathrm{F}} \rceil} \right\rfloor + 1 \right) \cdot \tau_i^{\mathrm{T}} \bmod \Delta_{\mathrm{T}} \right)/\Delta_{\mathrm{T}} \right\rfloor, 0 \right\}$$

*N* represents the sequence length of the root sequence, $\Delta_\text{T}$ represents the maximum round-trip time, and $\Delta_\text{F}$ represents the maximum Doppler frequency shift. Optionally, the quantity $\overline{k}_i^\text{T}$ of delay-domain near-end residual cyclic shifts is less than the quantity $k_i^\text{T}$ of delay-domain complete cyclic shifts, an operator $\lfloor \cdot \rfloor$ represents rounding down, and an operator $\lceil \cdot \rceil$ represents rounding up.

[Quantity $\overline{l}_i^\text{T}$ of Doppler-domain near-end residual cyclic shifts]

In a design, the communication apparatus determines the quantity $\overline{l}_i^\text{T}$ of Doppler-domain near-end residual cyclic shifts based on the coordinates $\langle \tau_i^\text{T}, v_i^\text{T} \rangle$ of the delay-domain cyclic shift reference point and the quantity $l_i^\text{T}$ of Doppler-domain complete cyclic shifts. In an implementation, the quantity $\overline{l}_i^\text{T}$ of Doppler-domain near-end residual cyclic shifts satisfies:

$$\overline{l}_i^\text{T} = l_i^\text{T} - \left\lceil \min\{v_i^\text{T}, N - v_i^\text{T}\}/\Delta_\text{F} \right\rceil \cdot \left\lfloor \frac{l_i^\text{T}}{\left\lceil \min\{v_i^\text{T}, N - v_i^\text{T}\}/\Delta_\text{F} \right\rceil} \right\rfloor$$

*N* represents the sequence length of the root sequence, $\Delta_\text{F}$ represents the maximum Doppler frequency shift, an operator $\lfloor \cdot \rfloor$ represents rounding down, and an operator $\lceil \cdot \rceil$ represents rounding up.

[Quantity $\overline{\overline{k}}_i^\text{T}$ of delay-domain far-end residual cyclic shifts]

In a design, the communication apparatus determines the quantity $\overline{\overline{k}}_i^\text{T}$ of delay-domain far-end residual cyclic shifts based on the coordinates $\langle \tau_i^\text{T}, v_i^\text{T} \rangle$ ) of the delay-domain cyclic shift reference point, the restriction coordinates $\langle \overline{\tau}_i^\text{T}, \overline{v}_i^\text{T} \rangle$ , and the quantity $l_i^\text{T}$ of Doppler-domain complete cyclic shifts. In an implementation, the quantity $\overline{\overline{k}}_i^\text{T}$ of delay-domain far-end residual cyclic shifts satisfies:

$$\overline{\overline{k}}_i^\text{T} = \max\left\{ \left\lfloor \left( \overline{\tau}_i^\text{T} - \left\lceil \frac{d_i^\text{T} - \min\{\overline{v}_i^\text{T}, N - \overline{v}_i^\text{T}\}}{\min\{v_i^\text{T}, N - v_i^\text{T}\}} \right\rceil \cdot \tau_i^\text{T} + \left( \left\lfloor \frac{2l_i^\text{T} - \lfloor (d_i^\text{T} + \min\{v_i^\text{T}, N - v_i^\text{T}\})/\Delta_\text{F} \rfloor}{\lceil \min\{v_i^\text{T}, N - v_i^\text{T}\}/\Delta_\text{F} \rceil} \right\rfloor + 1 \right) \cdot \tau_i^\text{T} \bmod \Delta_\text{T} \right)/\Delta_\text{T} \right\rfloor, 0 \right\}$$

*N* represents the sequence length of the root sequence, $\Delta_\text{T}$ represents the maximum round-trip time, and $\Delta_\text{F}$ represents the maximum Doppler frequency shift. Optionally, the quantity $\overline{\overline{k}}_i^\text{T}$ of delay-domain far-end residual cyclic shifts is less than or equal to the quantity $\overline{k}_i^\text{T}$ of delay-domain near-end residual cyclic shifts, an operator $\lfloor \cdot \rfloor$ represents rounding down, and an operator $\lceil \cdot \rceil$ represents rounding up.

[Quantity $\overline{\overline{l}}_i^\text{T}$ of Doppler-domain far-end residual cyclic shifts]

In a design, the communication apparatus determines the quantity $\overline{\overline{l}}_i^\text{T}$ of Doppler-domain far-end residual cyclic shifts based on the coordinates $\langle \tau_i^\text{T}, v_i^\text{T} \rangle$ of the delay-domain cyclic shift reference point, the quantity $l_i^\text{T}$ of Doppler-domain complete cyclic shifts, and the quantity $\overline{l}_i^\text{T}$ of Doppler-domain near-end residual cyclic shifts. In an implementation, the quantity $\overline{\overline{l}}_i^\text{T}$ of Doppler-domain far-end residual cyclic shifts satisfies:

$$\overline{\overline{l}}_i^\text{T} = \left\lfloor (d_i^\text{T} + \min\{v_i^\text{T}, N - v_i^\text{T}\})/\Delta_\text{F} \right\rfloor - l_i^\text{T} - \overline{l}_i^\text{T}$$

$N$ represents the sequence length of the root sequence, $\Delta_F$ represents the maximum Doppler frequency shift, and an operator $\lfloor \cdot \rfloor$ represents rounding down.

[Quantity of cyclic shifts corresponding to the Doppler-domain cyclic shift reference point]

The Doppler-domain cyclic shift reference point includes one or more cyclic shift reference points. For any cyclic shift reference point in the Doppler-domain cyclic shift reference point, coordinates of the cyclic shift reference point may be represented as $\langle \tau_i^F, v_i^F \rangle$. For ease of description, in the following description, the coordinates $\langle \tau_i^F, v_i^F \rangle$ of the Doppler-domain cyclic shift reference point are used for description.

In a design, the quantity $\Omega_i^F$ of cyclic shifts corresponding to the Doppler-domain cyclic shift reference point satisfies:

$$\Omega_i^F = l_i^F \cdot k_i^F + \overline{l}_i^F \cdot \overline{k}_i^F + \overline{\overline{l}}_i^F \cdot \overline{\overline{k}}_i^F$$

$l_i^F$ represents a quantity of Doppler-domain complete cyclic shifts, $k_i^F$ represents a quantity of delay-domain complete cyclic shifts, $\overline{l}_i^F$ represents a quantity of Doppler-domain near-end residual cyclic shifts, $\overline{k}_i^F$ represents a quantity of delay-domain near-end residual cyclic shifts, $\overline{\overline{l}}_i^F$ represents a quantity of Doppler-domain far-end residual cyclic shifts, $\overline{\overline{k}}_i^F$ represents a quantity of delay-domain far-end residual cyclic shifts, and a value range of $i$ is $1 \leq i \leq |\mathcal{S}_F|$.

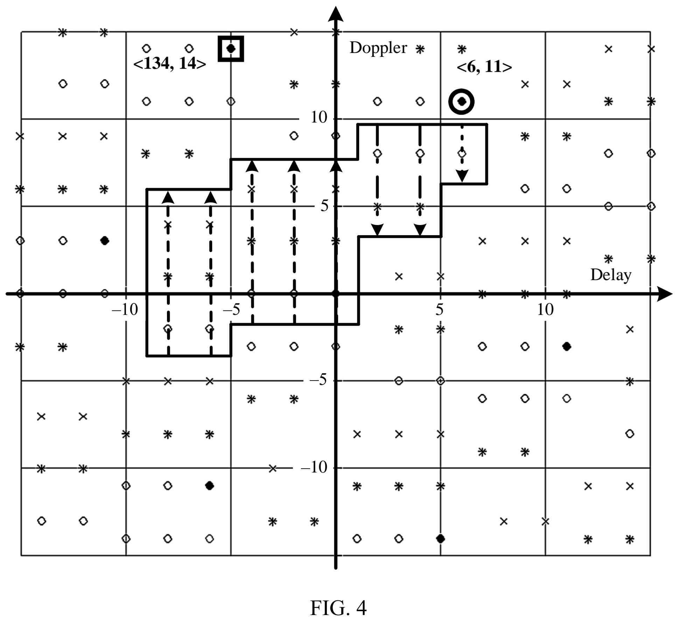

For example, when $N = 139$, $u = 25$, $\Delta_T \times \Delta_F = 2 \times 3$, coordinates of a 2nd cyclic shift reference point in the Doppler-domain cyclic shift reference point are $\langle \tau_2^F, v_2^F \rangle = \langle 6, 11 \rangle$. As shown in FIG. 4, restriction coordinates are $\langle \overline{\tau}_2^F, \overline{v}_2^F \rangle = \langle 134, 14 \rangle$, a delay spacing is $d_2^F = 11$, a quantity of delay-domain complete cyclic shifts is $k_2^F = 5$, a quantity of Doppler-domain complete cyclic shifts is $l_2^F = 3$, a quantity of delay-domain near-end residual cyclic shifts is $\overline{k}_2^F = 2$, a quantity of Doppler-domain near-end residual cyclic shifts is $\overline{l}_2^F = 2$, a quantity of delay-domain far-end residual cyclic shifts is $\overline{\overline{k}}_2^F = 1$, and a quantity of Doppler-domain far-end residual cyclic shifts is $\overline{\overline{l}}_2^F = 1$. A quantity of cyclic shifts corresponding to a Doppler-domain cyclic shift reference point whose coordinates are $\langle \tau_2^F, v_2^F \rangle$ is $\Omega_i^F = l_2^F \cdot k_2^F + \overline{l}_2^F \cdot \overline{k}_2^F + \overline{\overline{l}}_2^F \cdot \overline{\overline{k}}_2^F = 3 \cdot 5 + 2 \cdot 2 + 1 \cdot 1 = 20$.

[Quantity $l_i^F$ of Doppler-domain complete cyclic shifts]

In a design, the communication apparatus may determine the quantity $l_i^F$ of Doppler-domain complete cyclic shifts based on the coordinates $\langle \tau_i^F, v_i^F \rangle$ of the Doppler-domain cyclic shift reference point. In an implementation, the quantity $l_i^F$ of Doppler-domain complete cyclic shifts satisfies:

$$l_i^F = \lfloor v_i^F / \Delta_F \rfloor$$

$\Delta_F$ represents the maximum Doppler frequency shift, and an operator $\lfloor \cdot \rfloor$ represents rounding down.

[Quantity $k_i^F$ of delay-domain complete cyclic shifts]

In a design, the communication apparatus determines restriction coordinates $\langle \overline{\tau}_i^F, \overline{v}_i^F \rangle$ based on the

coordinates $\langle \tau_i^{\mathrm{F}}, v_i^{\mathrm{F}} \rangle$ of the Doppler-domain cyclic shift reference point. In an implementation, the restriction coordinates $\langle \bar{\tau}_i^{\mathrm{F}}, \bar{v}_i^{\mathrm{F}} \rangle$ satisfy:

$$\begin{cases} \bar{v}_i^{\mathrm{F}} = \min\limits_{\tau \in \{1,2,\ldots,\max\{\Delta_{\mathrm{T}}-1,\min\{\tau_i^{\mathrm{F}}, N-\tau_i^{\mathrm{F}}\}-1\}\}} \left\{ \mathrm{sgn}\left(\tau_i^{\mathrm{F}} - N/2\right) u\tau \bmod N \right\} \\ \bar{\tau}_i^{\mathrm{F}} = u^{-1} \bar{v}_i^{\mathrm{F}} \bmod N \end{cases}$$

*N* represents the sequence length of the root sequence, *u* represents the root sequence number, $\Delta_{\mathrm{T}}$ represents the maximum round-trip time, and an operator $(\cdot)^{-1}$ represents a multiplicative inverse.

The communication apparatus determines a delay spacing $d_i^{\mathrm{F}}$ based on the coordinates $\langle \tau_i^{\mathrm{F}}, v_i^{\mathrm{F}} \rangle$ of the Doppler-domain cyclic shift reference point and the restriction coordinates $\langle \bar{\tau}_i^{\mathrm{F}}, \bar{v}_i^{\mathrm{F}} \rangle$. In an implementation, the delay spacing $d_i^{\mathrm{F}}$ satisfies:

$$d_i^{\mathrm{F}} = \min\left\{ d \left| v_i^{\mathrm{F}} - \left( \left\lfloor \frac{d/\Delta_{\mathrm{T}}}{\lceil \min\{\tau_i^{\mathrm{F}}, N-\tau_i^{\mathrm{F}}\}/\Delta_{\mathrm{T}}\rceil} \right\rfloor + 1 \right) \cdot v_i^{\mathrm{F}} \bmod \Delta_{\mathrm{F}} \geq \bar{v}_i^{\mathrm{F}} - \left\lfloor \frac{d - \min\{\bar{\tau}_i^{\mathrm{F}}, N - \bar{\tau}_i^{\mathrm{F}}\}}{\min\{\tau_i^{\mathrm{F}}, N - \tau_i^{\mathrm{F}}\}} \right\rfloor \cdot v_i^{\mathrm{F}} \right. \right\}$$

*N* represents the sequence length of the root sequence, $\Delta_{\mathrm{T}}$ represents the maximum round-trip time, $\Delta_{\mathrm{F}}$ represents the maximum Doppler frequency shift, an operator $\lfloor \cdot \rfloor$ represents rounding down, and an operator $\lceil \cdot \rceil$ represents rounding up.

The communication apparatus determines the quantity $k_i^{\mathrm{F}}$ of delay-domain complete cyclic shifts based on the delay spacing $d_i^{\mathrm{F}}$. In an implementation, the quantity $k_i^{\mathrm{F}}$ of delay-domain complete cyclic shifts satisfies:

$$k_i^{\mathrm{F}} = \left\lfloor d_i^{\mathrm{F}}/\Delta_{\mathrm{T}} \right\rfloor$$

$\Delta_{\mathrm{T}}$ represents the maximum round-trip time, and an operator $\lfloor \cdot \rfloor$ represents rounding down.

[Quantity $\bar{l}_i^{\mathrm{F}}$ of Doppler-domain near-end residual cyclic shifts]

In a design, the communication apparatus determines the quantity $\bar{l}_i^{\mathrm{F}}$ of Doppler-domain near-end residual cyclic shifts based on the coordinates $\langle \tau_i^{\mathrm{F}}, v_i^{\mathrm{F}} \rangle$ of the Doppler-domain cyclic shift reference point and the quantity $k_i^{\mathrm{F}}$ of delay-domain complete cyclic shifts. In an implementation, the quantity $\bar{l}_i^{\mathrm{F}}$ of Doppler-domain near-end residual cyclic shifts satisfies:

$$\bar{l}_i^{\mathrm{F}} = \max\left\{ \left\lfloor \left( \bar{v}_i^{\mathrm{F}} - \left\lfloor \frac{d_i^{\mathrm{F}} - \min\{\bar{\tau}_i^{\mathrm{F}}, N - \bar{\tau}_i^{\mathrm{F}}\}}{\min\{\tau_i^{\mathrm{F}}, N - \tau_i^{\mathrm{F}}\}} \right\rfloor \cdot v_i^{\mathrm{F}} + \left( \left\lfloor \frac{k_i^{\mathrm{F}} - 1}{\lceil \min\{\tau_i^{\mathrm{F}}, N-\tau_i^{\mathrm{F}}\}/\Delta_{\mathrm{T}}\rceil} \right\rfloor + 1 \right) \cdot v_i^{\mathrm{F}} \bmod \Delta_{\mathrm{F}} \right) / \Delta_{\mathrm{F}} \right\rfloor, 0 \right\}$$

*N* represents the sequence length of the root sequence, $\Delta_{\mathrm{T}}$ represents the maximum round-trip time, and $\Delta_{\mathrm{F}}$ represents the maximum Doppler frequency shift. Optionally, the quantity $\bar{l}_i^{\mathrm{F}}$ of Doppler-domain near-end residual cyclic shifts is less than the quantity $l_i^{\mathrm{F}}$ of Doppler-domain complete cyclic shifts, an operator $\lfloor \cdot \rfloor$ represents rounding down, and an operator $\lceil \cdot \rceil$ represents rounding up.

[Quantity $\bar{k}_i^{\mathrm{F}}$ of delay-domain near-end residual cyclic shifts]

In a design, the communication apparatus determines the quantity $\bar{k}_i^{\mathrm{F}}$ of delay-domain near-end residual cyclic shifts based on the coordinates $\langle \tau_i^{\mathrm{F}}, v_i^{\mathrm{F}} \rangle$ of the Doppler-domain cyclic shift reference point and the quantity $k_i^{\mathrm{F}}$ of delay-domain complete cyclic shifts. In an implementation, the quantity $\bar{k}_i^{\mathrm{F}}$ of delay-domain near-end residual cyclic shifts satisfies:

$$\bar{k}_i^{\mathrm{F}} = k_i^{\mathrm{F}} - \lceil \min\{\tau_i^{\mathrm{F}}, N - \tau_i^{\mathrm{F}}\}/\Delta_{\mathrm{T}} \rceil \cdot \left\lfloor \frac{k_i^{\mathrm{F}}}{\lceil \min\{\tau_i^{\mathrm{F}}, N - \tau_i^{\mathrm{F}}\}/\Delta_{\mathrm{T}}\rceil} \right\rfloor$$

$N$ represents the sequence length of the root sequence, $\Delta_{\mathrm{T}}$ represents the maximum round-trip time, an operator $\lfloor \cdot \rfloor$ represents rounding down, and an operator $\lceil \cdot \rceil$ represents rounding up.

[Quantity $\bar{\bar{l}}_i^{\mathrm{F}}$ of Doppler-domain far-end residual cyclic shifts]

In a design, the communication apparatus determines the quantity $\bar{\bar{l}}_i^{\mathrm{F}}$ of Doppler-domain far-end residual cyclic shifts based on the coordinates $\langle \tau_i^{\mathrm{F}}, v_i^{\mathrm{F}} \rangle$ of the Doppler-domain cyclic shift reference point, the restriction coordinates $\langle \bar{\tau}_i^{\mathrm{F}}, \bar{v}_i^{\mathrm{F}} \rangle$, and the quantity $k_i^{\mathrm{F}}$ of delay-domain complete cyclic shifts. In an implementation, the quantity $\bar{\bar{l}}_i^{\mathrm{F}}$ of Doppler-domain far-end residual cyclic shifts satisfies:

$$\bar{\bar{l}}_i^{\mathrm{F}} = \max\left\{ \left\lfloor \left( \bar{v}_i^{\mathrm{F}} - \left\lceil \frac{d_i^{\mathrm{F}} - \min\{\bar{\tau}_i^{\mathrm{F}}, N - \bar{\tau}_i^{\mathrm{F}}\}}{\min\{\tau_i^{\mathrm{F}}, N - \tau_i^{\mathrm{F}}\}} \right\rceil \cdot v_i^{\mathrm{F}} + \left( \left\lceil \frac{2k_i^{\mathrm{F}} - \lfloor (d_i^{\mathrm{F}} + \min\{\tau_i^{\mathrm{F}}, N - \tau_i^{\mathrm{F}}\})/\Delta_{\mathrm{T}} \rfloor}{\lceil \min\{\tau_i^{\mathrm{F}}, N - \tau_i^{\mathrm{F}}\}/\Delta_{\mathrm{T}}\rceil} \right\rceil + 1 \right) \cdot v_i^{\mathrm{F}} \bmod \Delta_{\mathrm{F}} \right)/\Delta_{\mathrm{F}} \right\rfloor, 0 \right\}$$

$N$ represents the sequence length of the root sequence, $\Delta_{\mathrm{T}}$ represents the maximum round-trip time, and $\Delta_{\mathrm{F}}$ represents the maximum Doppler frequency shift. Optionally, the quantity $\bar{\bar{l}}_i^{\mathrm{F}}$ of Doppler-domain far-end residual cyclic shifts is less than or equal to the quantity $\bar{l}_i^{\mathrm{F}}$ of Doppler-domain near-end residual cyclic shifts, an operator $\lfloor \cdot \rfloor$ represents rounding down, and an operator $\lceil \cdot \rceil$ represents rounding up.

[Quantity $\bar{\bar{k}}_i^{\mathrm{F}}$ of delay-domain far-end residual cyclic shifts]

In a design, the communication apparatus determines the quantity $\bar{\bar{k}}_i^{\mathrm{F}}$ of delay-domain far-end residual cyclic shifts based on the coordinates $\langle \tau_i^{\mathrm{F}}, v_i^{\mathrm{F}} \rangle$ of the Doppler-domain cyclic shift reference point, the quantity $k_i^{\mathrm{F}}$ of delay-domain complete cyclic shifts, and the quantity $\bar{k}_i^{\mathrm{F}}$ of delay-domain near-end residual cyclic shifts. In an implementation, the quantity $\bar{\bar{k}}_i^{\mathrm{F}}$ of delay-domain far-end residual cyclic shifts satisfies:

$$\bar{\bar{k}}_i^{\mathrm{F}} = \lfloor (d_i^{\mathrm{F}} + \min\{\tau_i^{\mathrm{F}}, N - \tau_i^{\mathrm{F}}\})/\Delta_{\mathrm{T}} \rfloor - k_i^{\mathrm{F}} - \bar{k}_i^{\mathrm{F}}$$

$N$ represents the sequence length of the root sequence, $\Delta_{\mathrm{T}}$ represents the maximum round-trip time, and an operator $\lfloor \cdot \rfloor$ represents rounding down.

[Cyclic shift of the root sequence]

In a design, in step 201, the communication apparatus may determine the cyclic shift of the root sequence based on the cyclic shift reference point of the root sequence. For a process of determining the cyclic shift reference point of the root sequence, refer to the foregoing descriptions.

[Case 1]: The communication apparatus determines the cyclic shift of the root sequence based on the quantity of delay-domain complete cyclic shifts and the quantity of Doppler-domain complete cyclic shifts that correspond to the cyclic shift reference point of the root sequence.

In a design, the communication apparatus determines a delay-domain cyclic shift $\tau_v$ and a Doppler-domain cyclic shift $v_v$ based on the quantity of delay-domain complete cyclic shifts and the quantity of Doppler-domain complete cyclic shifts that correspond to the cyclic shift reference point of the root sequence. The communication apparatus determines the cyclic shift $C_v$ of the root sequence based on the delay-domain cyclic shift $\tau_v$ and the Doppler-domain cyclic shift $v_v$, where v represents the index of the cyclic shift of the root sequence, and a value range of v is $0 \leq v \leq \Omega_\star^\dagger - 1$.

In this embodiment of this application, the cyclic shift reference point of the root sequence may be a delay-domain cyclic shift reference point (†= T) or a Doppler-domain cyclic shift reference point (†= F). Based on different delay-domain cyclic shift reference points and Doppler-domain cyclic shift reference points, expressions corresponding to the delay-domain cyclic shift $\tau_v$ and the Doppler-domain cyclic shift $v_v$ are different.

For example, when the cyclic shift reference point of the root sequence is the delay-domain cyclic shift reference point, for example, if the cyclic shift reference point of the root sequence is a *th cyclic shift reference point in the delay domain (†= T), the delay-domain cyclic shift $\tau_{k_\star^T \cdot l+k}$ and the Doppler-domain cyclic shift $v_{k_\star^T \cdot l+k}$ satisfy:

$$\begin{cases} \tau_{k_\star^T \cdot l+k} = k\Delta_T - \left\lfloor \dfrac{l}{\lceil \min\{v_\star^T, N - v_\star^T\}/\Delta_F \rceil} \right\rfloor \cdot \tau_\star^T \bmod \Delta_T \\ v_{k_\star^T \cdot l+k} = \mathrm{sgn}(v_\star^T - N/2) \cdot l\Delta_F \end{cases}$$

$N$ represents the sequence length of the root sequence, $\Delta_T$ represents the maximum round-trip time, $\Delta_F$ represents the maximum Doppler frequency shift, $\langle \tau_\star^T, v_\star^T \rangle$ represents coordinates of the cyclic shift reference point of the root sequence, $k_\star^T$ represents the quantity of delay-domain complete cyclic shifts, $l_\star^T$ represents the quantity of Doppler-domain complete cyclic shifts, value ranges of $k$ and $l$ are $\{0 \leq k < k_\star^T, 0 \leq l < l_\star^T\}$, an operator sgn($\cdot$) represents a sign function, an operator $\lfloor \cdot \rfloor$ represents rounding down, and an operator $\lceil \cdot \rceil$ represents rounding up. It should be noted that, in the foregoing expression, $\tau_{k_\star^T \cdot l+k}$ is equivalent to the foregoing $\tau_v$, and $v_{k_\star^T \cdot l+k}$ is equivalent to the foregoing $v_v$, that is, the index of the cyclic shift of the root sequence is $v = k_\star^T \cdot l + k$.

In addition/Alternatively, when the cyclic shift reference point of the root sequence is the Doppler-domain cyclic shift reference point, for example, if the cyclic shift reference point of the root sequence is a *th cyclic shift reference point in the Doppler domain (†= F), the delay-domain cyclic shift $\tau_{l_\star^F \cdot k+l}$ and the Doppler-domain cyclic shift $v_{l_\star^F \cdot k+l}$ satisfy:

$$\begin{cases} \tau_{l_\star^F \cdot k+l} = \mathrm{sgn}(\tau_\star^F - N/2) \cdot k\Delta_T \\ v_{l_\star^F \cdot k+l} = l\Delta_F - \left\lfloor \dfrac{k}{\lceil \min\{\tau_\star^F, N - \tau_\star^F\}/\Delta_T \rceil} \right\rfloor \cdot v_\star^F \bmod \Delta_F \end{cases}$$

$N$ represents the sequence length of the root sequence, $\Delta_T$ represents the maximum round-trip time, $\Delta_F$ represents the maximum Doppler frequency shift, $\langle \tau_\star^F, v_\star^F \rangle$ represents coordinates of the cyclic shift reference point of the root sequence, $l_\star^F$ represents the quantity of Doppler-domain complete cyclic shifts, $k_\star^F$ represents the quantity of delay-domain complete cyclic shifts, value ranges of $k$ and $l$ are $\{0 \leq k < k_\star^F, 0 \leq l < l_\star^F\}$, an operator sgn($\cdot$) represents a sign function, an operator $\lfloor \cdot \rfloor$ represents rounding down, and an operator $\lceil \cdot \rceil$ represents rounding up. It should be noted that, in the foregoing expression, $\tau_{l_\star^F \cdot k+l}$ is equivalent to the foregoing $\tau_v$, and $v_{l_\star^F \cdot k+l}$ is equivalent to the foregoing $v_v$, that is, the index of the cyclic shift of the root sequence is $v = l_\star^F \cdot k + l$.

[Case 2]: The communication apparatus determines the cyclic shift of the root sequence based on the quantity of delay-domain complete cyclic shifts, the quantity of Doppler-domain complete cyclic shifts, the quantity of delay-domain near-end residual cyclic shifts, and the quantity of Doppler-domain near-end residual cyclic shifts that correspond to the cyclic shift reference point of the root sequence.

In a design, the communication apparatus determines a delay-domain cyclic shift $\tau_v$ and a Doppler-domain cyclic shift $v_v$ based on the quantity of delay-domain complete cyclic shifts, the quantity of Doppler-domain complete cyclic shifts, the quantity of delay-domain near-end residual cyclic shifts, and the quantity of Doppler-domain near-end residual cyclic shifts that correspond to the cyclic shift reference point of the root sequence. The communication apparatus determines the cyclic shift $C_v$ of the root sequence based on the delay-domain cyclic shift $\tau_v$ and the Doppler-domain cyclic shift $v_v$, where v represents the index of the cyclic shift of the root sequence, and a value range of v is $0 \leq v \leq \Omega_\star^\dagger - 1$.

In this embodiment of this application, the cyclic shift reference point of the root sequence may be a delay-domain cyclic shift reference point (†= T) or a Doppler-domain cyclic shift reference point (†= F). Based on different delay-domain cyclic shift reference points and Doppler-domain cyclic shift reference points, expressions corresponding to the delay-domain cyclic shift $\tau_v$ and the Doppler-domain cyclic shift $v_v$ are different.

For example, when the cyclic shift reference point of the root sequence is the delay-domain cyclic shift reference point, for example, if the cyclic shift reference point of the root sequence is a ★th cyclic shift reference point in the delay domain (†= T), the delay-domain cyclic shift $\tau_{k_\star^T \cdot l_\star^T + \bar{k}_\star^T \cdot (\bar{l}_\star^T + l) + \bar{k}_\star^T - k}$ and the Doppler-domain cyclic shift $v_{k_\star^T \cdot l_\star^T + \bar{k}_\star^T \cdot (\bar{l}_\star^T + l) + \bar{k}_\star^T - k}$ satisfy:

$$\begin{cases} \tau_{k_\star^T \cdot l_\star^T + \bar{k}_\star^T \cdot (\bar{l}_\star^T + l) + \bar{k}_\star^T - k} = \tau_\star^T - k\Delta_T \\ v_{k_\star^T \cdot l_\star^T + \bar{k}_\star^T \cdot (\bar{l}_\star^T + l) + \bar{k}_\star^T - k} = \text{sgn}(v_\star^T - N/2) \cdot l\Delta_F \end{cases}$$

$N$ represents the sequence length of the root sequence, $\Delta_T$ represents the maximum round-trip time, $\Delta_F$ represents the maximum Doppler frequency shift, $\langle \tau_\star^T, v_\star^T \rangle$ represents the coordinates of the cyclic shift reference point of the root sequence, $k_\star^T$ represents the quantity of delay-domain complete cyclic shifts, $l_\star^T$ represents the quantity of Doppler-domain complete cyclic shifts, $\bar{k}_\star^T$ represents the quantity of delay-domain near-end residual cyclic shifts, $\bar{l}_\star^T$ represents the quantity of Doppler-domain near-end residual cyclic shifts, value ranges of $k$ and $l$ are $\left\{ 0 < k \leq \bar{k}_\star^T, -\bar{l}_\star^T \leq l < 0 \right\}$, and an operator sgn($\cdot$) represents a sign function. It should be noted that, in the foregoing expression, $\tau_{k_\star^T \cdot l_\star^T + \bar{k}_\star^T \cdot (\bar{l}_\star^T + l) + \bar{k}_\star^T - k}$ is equivalent to the foregoing $\tau_v$, and $v_{k_\star^T \cdot l_\star^T + \bar{k}_\star^T \cdot (\bar{l}_\star^T + l) + \bar{k}_\star^T - k}$ is equivalent to the foregoing $v_v$, that is, the index of the cyclic shift of the root sequence is $v = k_\star^T \cdot l_\star^T + \bar{k}_\star^T \cdot \left( \bar{l}_\star^T + l \right) + \bar{k}_\star^T - k$.

In addition/Alternatively, when the cyclic shift reference point of the root sequence is the Doppler-domain cyclic shift reference point, for example, when the cyclic shift reference point of the root sequence is a *th cyclic shift reference point in the Doppler domain (†= F), the delay-domain cyclic shift $\tau_{l_\star^F \cdot k_\star^F + \bar{l}_\star^F \cdot (\bar{k}_\star^F + k) + \bar{l}_\star^F - l}$ and the Doppler-domain cyclic shift $v_{l_\star^F \cdot k_\star^F + \bar{l}_\star^F \cdot (\bar{k}_\star^F + k) + \bar{l}_\star^F - l}$ satisfy:

$$\begin{cases} \tau_{l_\star^F \cdot k_\star^F + \bar{l}_\star^F \cdot (\bar{k}_\star^F + k) + \bar{l}_\star^F - l} = \text{sgn}(\tau_\star^F - N/2) \cdot k\Delta_T \\ v_{l_\star^F \cdot k_\star^F + \bar{l}_\star^F \cdot (\bar{k}_\star^F + k) + \bar{l}_\star^F - l} = v_\star^F - l\Delta_F \end{cases}$$

$N$ represents the sequence length of the root sequence, $\Delta_T$ represents the maximum round-trip time, $\Delta_F$ represents the maximum Doppler frequency shift, $\langle \tau_\star^F, v_\star^F \rangle$ represents coordinates of the cyclic shift reference point of the root sequence, $l_\star^F$ represents the quantity of Doppler-domain complete cyclic shifts, $k_\star^F$ represents the quantity of delay-domain complete cyclic shifts, $\bar{l}_\star^F$ represents the quantity of Doppler-domain near-end residual cyclic shifts, $\bar{k}_\star^F$ represents the quantity of delay-domain near-end residual cyclic shifts, value ranges of $k$ and $l$ are

$\left\{ -\overline{k}_\star^{\mathrm F} \le k < 0, 0 < l \le \overline{l}_\star^{\mathrm F} \right\}$ , and an operator sgn($\cdot$) represents a sign function. It should be noted that, in the foregoing expression, $\tau_{l_\star^{\mathrm F}\cdot k_\star^{\mathrm F}+\overline{l}_\star^{\mathrm F}\cdot(\overline{k}_\star^{\mathrm F}+k)+\overline{l}_\star^{\mathrm F}-l}$ is equivalent to the foregoing $\tau_v$, and $v_{l_\star^{\mathrm F}\cdot k_\star^{\mathrm F}+\overline{l}_\star^{\mathrm F}\cdot(\overline{k}_\star^{\mathrm F}+k)+\overline{l}_\star^{\mathrm F}-l}$ is equivalent to the foregoing $v_v$, that is, the index of the cyclic shift of the root sequence is

$$v = l_\star^{\mathrm F} \cdot k_\star^{\mathrm F} + \overline{l}_\star^{\mathrm F} \cdot \left( \overline{k}_\star^{\mathrm F} + k \right) + \overline{l}_\star^{\mathrm F} - l .$$

[Case 3]: The communication apparatus determines the cyclic shift of the root sequence based on the quantity of delay-domain complete cyclic shifts, the quantity of Doppler-domain complete cyclic shifts, the quantity of delay-domain near-end residual cyclic shifts, the quantity of Doppler-domain near-end residual cyclic shifts, the quantity of delay-domain far-end residual cyclic shifts, and the quantity of Doppler-domain far-end residual cyclic shifts that correspond to the cyclic shift reference point of the root sequence.

In a design, the communication apparatus determines a delay-domain cyclic shift $\tau_v$ and a Doppler-domain cyclic shift $v_v$ based on the quantity of delay-domain complete cyclic shifts, the quantity of Doppler-domain complete cyclic shifts, the quantity of delay-domain near-end residual cyclic shifts, the quantity of Doppler-domain near-end residual cyclic shifts, the quantity of delay-domain far-end residual cyclic shifts, and the quantity of Doppler-domain far-end residual cyclic shifts that correspond to the cyclic shift reference point of the root sequence; and determines the cyclic shift $C_v$ of the root sequence based on the delay-domain cyclic shift $\tau_v$ and the Doppler-domain cyclic shift $v_v$. $v$ represents the index of the cyclic shift of the root sequence, and a value range of $v$ is $0 \le v \le \Omega_\star^\dagger - 1$.

In this embodiment of this application, the cyclic shift reference point of the root sequence may be a delay-domain cyclic shift reference point (†= T) or a Doppler-domain cyclic shift reference point (†= F). Based on different delay-domain cyclic shift reference points and Doppler-domain cyclic shift reference points, expressions corresponding to the delay-domain cyclic shift $\tau_v$ and the Doppler-domain cyclic shift $v_v$ are different.

For example, when the cyclic shift reference point of the root sequence is the delay-domain cyclic shift reference point, for example, if the cyclic shift reference point of the root sequence is a *th cyclic shift reference point in the delay domain (†= T), the delay-domain cyclic shift $\tau_{k_\star^{\mathrm T}\cdot l_\star^{\mathrm T}+\overline{k}_\star^{\mathrm T}\cdot\overline{l}_\star^{\mathrm T}+\overline{\overline{k}}_\star^{\mathrm T}\cdot(\overline{l}_\star^{\mathrm T}+\overline{\overline{l}}_\star^{\mathrm T}+l)+\overline{k}_\star^{\mathrm T}-k}$ and the Doppler-domain cyclic shift $v_{k_\star^{\mathrm T}\cdot l_\star^{\mathrm T}+\overline{k}_\star^{\mathrm T}\cdot\overline{l}_\star^{\mathrm T}+\overline{\overline{k}}_\star^{\mathrm T}\cdot(\overline{l}_\star^{\mathrm T}+\overline{\overline{l}}_\star^{\mathrm T}+l)+\overline{k}_\star^{\mathrm T}-k}$ satisfy:

$$\begin{cases} \tau_{k_\star^{\mathrm T}\cdot l_\star^{\mathrm T}+\overline{k}_\star^{\mathrm T}\cdot\overline{l}_\star^{\mathrm T}+\overline{\overline{k}}_\star^{\mathrm T}\cdot(\overline{l}_\star^{\mathrm T}+\overline{\overline{l}}_\star^{\mathrm T}+l)+\overline{k}_\star^{\mathrm T}-k} = \tau_\star^{\mathrm T} - k\Delta_{\mathrm T} \\ v_{k_\star^{\mathrm T}\cdot l_\star^{\mathrm T}+\overline{k}_\star^{\mathrm T}\cdot\overline{l}_\star^{\mathrm T}+\overline{\overline{k}}_\star^{\mathrm T}\cdot(\overline{l}_\star^{\mathrm T}+\overline{\overline{l}}_\star^{\mathrm T}+l)+\overline{k}_\star^{\mathrm T}-k} = \mathrm{sgn}(v_\star^{\mathrm T} - N/2) \cdot l\Delta_{\mathrm F} \end{cases}$$

$N$ represents the sequence length of the root sequence, $\Delta_{\mathrm T}$ represents the maximum round-trip time, $\Delta_{\mathrm F}$ represents the maximum Doppler frequency shift, $\left\langle \tau_\star^{\mathrm T}, v_\star^{\mathrm T} \right\rangle$ represents coordinates of the cyclic shift reference point of the root sequence, $k_\star^{\mathrm T}$ represents the quantity of delay-domain complete cyclic shifts, $l_\star^{\mathrm T}$ represents the quantity of Doppler-domain complete cyclic shifts, $\overline{k}_\star^{\mathrm T}$ represents the quantity of delay-domain near-end residual cyclic shifts, $\overline{l}_\star^{\mathrm T}$ represents the quantity of Doppler-domain near-end residual cyclic shifts, $\overline{\overline{k}}_\star^{\mathrm T}$ represents the quantity of delay-domain far-end residual cyclic shifts, $\overline{\overline{l}}_\star^{\mathrm T}$ represents the quantity of Doppler-domain far-end residual cyclic shifts, value ranges of $k$ and $l$ are $\left\{ 0 < k \le \overline{\overline{k}}_\star^{\mathrm T}, -\overline{l}_\star^{\mathrm T} - \overline{\overline{l}}_\star^{\mathrm T} \le l < -\overline{l}_\star^{\mathrm T} \right\}$ , and an operator sgn($\cdot$) represents a sign function. It should be noted that, in the foregoing expression, $\tau_{k_\star^{\mathrm T}\cdot l_\star^{\mathrm T}+\overline{k}_\star^{\mathrm T}\cdot\overline{l}_\star^{\mathrm T}+\overline{\overline{k}}_\star^{\mathrm T}\cdot(\overline{l}_\star^{\mathrm T}+\overline{\overline{l}}_\star^{\mathrm T}+l)+\overline{k}_\star^{\mathrm T}-k}$ is equivalent to the foregoing $\tau_v$, and $v_{k_\star^{\mathrm T}\cdot l_\star^{\mathrm T}+\overline{k}_\star^{\mathrm T}\cdot\overline{l}_\star^{\mathrm T}+\overline{\overline{k}}_\star^{\mathrm T}\cdot(\overline{l}_\star^{\mathrm T}+\overline{\overline{l}}_\star^{\mathrm T}+l)+\overline{k}_\star^{\mathrm T}-k}$ is equivalent to the foregoing $v_v$, that is, the index of the cyclic shift of the root sequence is $v = k_\star^{\mathrm T} \cdot l_\star^{\mathrm T} + \overline{k}_\star^{\mathrm T} \cdot \overline{l}_\star^{\mathrm T} + \overline{\overline{k}}_\star^{\mathrm T} \cdot \left( \overline{l}_\star^{\mathrm T} + \overline{\overline{l}}_\star^{\mathrm T} + l \right) + \overline{k}_\star^{\mathrm T} - k \cdot$

In addition/Alternatively, when the cyclic shift reference point of the root sequence is the Doppler-domain cyclic shift reference point, for example, when the cyclic shift reference point of the root sequence is a *th cyclic shift reference point in the Doppler domain (†= F), the delay-domain cyclic shift $\tau_{l_\star^{\mathrm F}\cdot k_\star^{\mathrm F}+\overline{l}_\star^{\mathrm F}\cdot\overline{k}_\star^{\mathrm F}+\overline{\overline{l}}_\star^{\mathrm F}\cdot(\overline{k}_\star^{\mathrm F}+\overline{\overline{k}}_\star^{\mathrm F}+k)+\overline{l}_\star^{\mathrm F}-l}$ and the Doppler-domain cyclic shift $v_{l_\star^{\mathrm F}\cdot k_\star^{\mathrm F}+\overline{l}_\star^{\mathrm F}\cdot\overline{k}_\star^{\mathrm F}+\overline{\overline{l}}_\star^{\mathrm F}\cdot(\overline{k}_\star^{\mathrm F}+\overline{\overline{k}}_\star^{\mathrm F}+k)+\overline{l}_\star^{\mathrm F}-l}$ satisfy:

$$\begin{cases} \tau_{l_\star^F \cdot k_\star^F + \bar{l}_\star^F \cdot \bar{k}_\star^F + \bar{\bar{l}}_\star^F \cdot (\bar{k}_\star^F + \bar{\bar{k}}_\star^F + k) + \bar{\bar{l}}_\star^F - l} = \mathrm{sgn}(\tau_\star^F - N/2) \cdot k\Delta_T \\ \nu_{l_\star^F \cdot k_\star^F + \bar{l}_\star^F \cdot \bar{k}_\star^F + \bar{\bar{l}}_\star^F \cdot (\bar{k}_\star^F + \bar{\bar{k}}_\star^F + k) + \bar{\bar{l}}_\star^F - l} = \nu_\star^F - l\Delta_F \end{cases}$$

$N$ represents the sequence length of the root sequence, $\Delta_T$ represents the maximum round-trip time, $\Delta_F$ represents the maximum Doppler frequency shift, $\langle \tau_\star^F, \nu_\star^F \rangle$ represents coordinates of the cyclic shift reference point of the root sequence, $l_\star^F$ represents the quantity of Doppler-domain complete cyclic shifts, $k_\star^F$ represents the quantity of delay-domain complete cyclic shifts, $\bar{l}_\star^F$ represents the quantity of Doppler-domain near-end residual cyclic shifts, $\bar{k}_\star^F$ represents the quantity of delay-domain near-end residual cyclic shifts, $\bar{\bar{l}}_\star^F$ represents the quantity of Doppler-domain far-end residual cyclic shifts, $\bar{\bar{k}}_\star^F$ represents the quantity of delay-domain far-end residual cyclic shifts, value ranges of $k$ and $l$ are $\{-\bar{k}_\star^F - \bar{\bar{k}}_\star^F \le k < -\bar{k}_\star^F, 0 < l \le \bar{\bar{l}}_\star^F\}$, and an operator $\mathrm{sgn}(\cdot)$ represents a sign function. It should be noted that, in the foregoing expression, $\tau_{l_\star^F \cdot k_\star^F + \bar{l}_\star^F \cdot \bar{k}_\star^F + \bar{\bar{l}}_\star^F \cdot (\bar{k}_\star^F + \bar{\bar{k}}_\star^F + k) + \bar{\bar{l}}_\star^F - l}$ is equivalent to the foregoing $\tau_v$, and $\nu_{l_\star^F \cdot k_\star^F + \bar{l}_\star^F \cdot \bar{k}_\star^F + \bar{\bar{l}}_\star^F \cdot (\bar{k}_\star^F + \bar{\bar{k}}_\star^F + k) + \bar{\bar{l}}_\star^F - l}$ is equivalent to the foregoing $v_v$, that is, the index of the cyclic shift of the root sequence is $v = l_\star^F \cdot k_\star^F + \bar{l}_\star^F \cdot \bar{k}_\star^F + \bar{\bar{l}}_\star^F \cdot (\bar{k}_\star^F + \bar{\bar{k}}_\star^F + k) + \bar{\bar{l}}_\star^F - l$.

In [Case 1] to [Case 3], the communication apparatus may determine the cyclic shift $C_v$ of the root sequence based on the delay-domain cyclic shift $\tau_v$ and the Doppler-domain cyclic shift $v_v$. The cyclic shift $C_v$ of the root sequence satisfies:

$$C_v = (\tau_v - u^{-1}v_v) \bmod N$$

$N$ represents the sequence length of the root sequence, $u$ represents the root sequence number, $v$ represents the index of the cyclic shift of the root sequence, $\tau_v$ represents the delay-domain cyclic shift, $v_v$ represents the Doppler-domain cyclic shift, an operator $(\cdot)^{-1}$ represents a multiplicative inverse, and $v$ represents the index of the cyclic shift of the root sequence.

That is, the communication apparatus may substitute the delay-domain cyclic shift $\tau_v$ and the Doppler-domain cyclic shift $v_v$ that are obtained in any one of the foregoing Case 1 to Case 3 into the foregoing expression, to obtain the corresponding cyclic shift $C_v$ of the root sequence. In a design, the communication apparatus may obtain a union set of the delay-domain cyclic shifts $\tau_v$ and the Doppler-domain cyclic shifts $\tau_v$ that are respectively obtained in the foregoing Case 1 to Case 3, and substitute each group of the delay-domain cyclic shift $\tau_v$ and the Doppler-domain cyclic shift $v_v$ in the set into the foregoing expression of the cyclic shift of the root sequence, to obtain the corresponding cyclic shift $C_v$ of the root sequence. For example, the communication apparatus obtains 15 groups of parameters by using Case 1, and each group of parameters in the 15 groups of parameters includes a delay-domain cyclic shift $\tau_v$ and a Doppler-domain cyclic shift $v_v$. The communication apparatus obtains 4 groups of parameters by using Case 2, and obtains 1 group of parameters by using Case 3. The communication apparatus obtains a union set of the foregoing plurality of groups of parameters to obtain 20 groups of parameters. The communication apparatus separately substitutes delay-domain cyclic shifts $\tau_v$ and Doppler-domain cyclic shifts $v_v$ in the 20 groups of parameters into the foregoing expression of the cyclic shift $C_v$ of the root sequence, and the communication apparatus may obtain cyclic shifts $C_v$ of 20 root sequences. Further, the communication apparatus may obtain 20 sequences by substituting the cyclic shifts $C_v$ of the 20 root sequences into the expression of the root sequence, and the 20 sequences may form a cyclic shift sequence. Ambiguity functions of any two sequences in the 20 sequences within the range of the maximum round-trip time and the maximum Doppler frequency shift are equal to zero.

For example, when $N = 139$, $u = 25$, $\Delta_T \times \Delta_F = 2 \times 3$, the cyclic shift reference point of the root sequence is a delay-domain cyclic shift reference point, the cyclic shift reference point of the root sequence is $\langle \tau_\star^\dagger, v_\star^\dagger \rangle = \langle \tau_1^T, v_1^T \rangle = \langle 5, 125 \rangle$, and a corresponding quantity of cyclic shifts is $\Omega_\star^\dagger = \Omega_1^T = 21$. It should be noted that the quantity of cyclic shifts of the root sequence is consistent with a quantity of subsequently obtained cyclic shifts $C_v$ of the root sequence. That is, if the quantity of cyclic shifts of the root sequence is 21, a quantity of subsequently obtained cyclic shifts $C_v$ of the root sequence is also 21. Further, a finally obtained cyclic shift sequence also includes 21 sequences. Therefore, in this embodiment of this application, the communication apparatus selects, from the delay-domain cyclic shift reference point and the Doppler-domain cyclic shift reference point, a cyclic shift reference point with a largest quantity of cyclic shifts as the cyclic shift reference point of the root sequence, so that a maximum capacity of an obtained cyclic shift sequence can be ensured.

Still using the foregoing example for description, the communication apparatus may separately obtain delay-domain cyclic shifts $\tau_v$ and Doppler-domain cyclic shifts $v_v$ according to the descriptions in the foregoing Case 1 to Case 3. The communication apparatus obtains a union set of the delay-domain cyclic shifts $\tau_v$ and the Doppler-domain cyclic shifts $v_v$ that are respectively obtained in Case 1 to Case 3, and may obtain 21 groups of delay-domain cyclic shifts $\tau_v$ and Doppler-domain cyclic shifts $v_v$, which may be expressed as:

$$\langle \tau_v, v_v \rangle \in \left\{ \begin{array}{l} \langle 0,0 \rangle, \langle 2,0 \rangle, \langle 0,3 \rangle, \langle 2,3 \rangle, \langle 0,6 \rangle, \langle 2,6 \rangle, \langle 0,9 \rangle, \langle 2,9 \rangle, \langle 0,12 \rangle, \langle 2,12 \rangle, \langle -1,15 \rangle, \langle 1,15 \rangle, \\ \langle -1,18 \rangle, \langle 1,18 \rangle, \langle -1,21 \rangle, \langle 1,21 \rangle, \langle 3,-3 \rangle, \langle 3,-6 \rangle, \langle 3,-9 \rangle, \langle 3,-12 \rangle, \langle 3,-15 \rangle \end{array} \right\}$$

The communication apparatus substitutes the 21 groups of delay-domain cyclic shifts $\tau_v$ and Doppler-domain cyclic shifts $v_v$ into the expression of the cyclic shift $C_v$ of the root sequence, and may obtain values of cyclic shifts $C_v$ of 21 root sequences, which may be expressed as:

$$C_v \in \{0,2,11,13,22,24,33,35,44,46,54,56,65,67,76,78,131,120,109,98,87\}.$$

[Example 1]

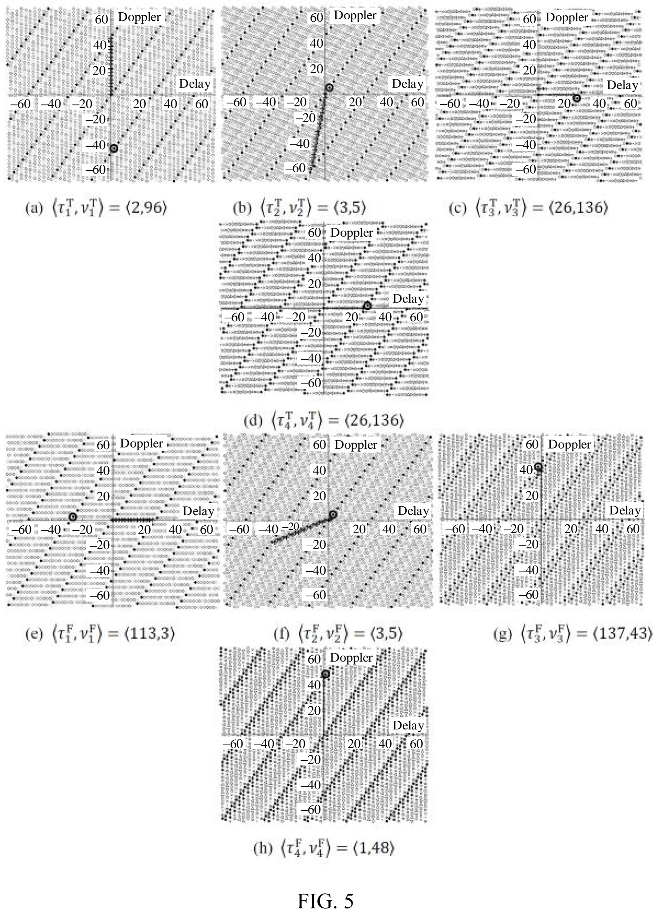

For example, when $N = 139$, $u = 48$, $\Delta_T \times \Delta_F = 2 \times 3$, as shown in FIG. 5, delay-domain cyclic shift reference points determined by using the method in this embodiment of this application are $\langle \tau_1^T, v_1^T \rangle = \langle 2,96 \rangle, \langle \tau_2^T, v_2^T \rangle = \langle 3,5 \rangle, \langle \tau_3^T, v_3^T \rangle = \langle 26,136 \rangle, \langle \tau_4^T, v_4^T \rangle = \langle 29,2 \rangle$. Determined Doppler-domain cyclic shift reference points are $\langle \tau_1^F, v_1^F \rangle = \langle 113,3 \rangle, \langle \tau_2^F, v_2^F \rangle = \langle 3,5 \rangle, \langle \tau_3^F, v_3^F \rangle = \langle 137,43 \rangle, \langle \tau_4^F, v_4^F \rangle = \langle 1,48 \rangle$. Quantities of cyclic shifts corresponding to the delay-domain cyclic shift reference points are respectively $\Omega_1^T = 16, \Omega_2^T = 21, \Omega_3^T = 14, \Omega_4^T = 14$. Quantities of cyclic shifts corresponding to the Doppler-domain cyclic shift reference points are respectively $\Omega_1^F = 14, \Omega_2^F = 20, \Omega_3^F = 16, \Omega_4^F = 16$. Based on a principle of using a cyclic shift reference point with a largest quantity of cyclic shifts as a cyclic shift reference point of the root sequence, the cyclic shift reference point of the root sequence is $\langle \tau_\star^\dagger, v_\star^\dagger \rangle = \langle \tau_2^T, v_2^T \rangle = \langle 3,5 \rangle$, and a quantity of cyclic shifts corresponding to the cyclic shift reference point is $\Omega_\star^\dagger = \Omega_2^T = 21$. In other words, according to the method in this embodiment of this application, the determined cyclic shift sequence includes 21 sequences, and a capacity of the cyclic shift sequence is 21. Alternatively, a description is as follows: Cyclic shifts of 21 sequences may be supported by using the method in this embodiment of this application, and cyclic shifts $C_v$ of root sequences corresponding to the cyclic shifts of the 21 sequences are represented as {0,7,13,20,26,33,40,46,53,60,66,73,79,86,93,99,106,113,119,126,132}.

Under a limitation of $N = 139$, $u = 48$, $\Delta_T \times \Delta_F = 2 \times 3$, in an existing solution, a determined cyclic shift sequence includes 14 sequences. For example, in the existing solution, cyclic shifts of 14 root sequences corresponding to the 14 sequences may be represented as {0,2,4,6,8,10,12,14,16,18,20,22,24,26}.

It can be learned from comparison that, under a same condition, a capacity of a cyclic shift sequence obtained by using the method in this embodiment of this application is greater than a capacity of a cyclic shift sequence obtained in the conventional technology.

[Example 2]

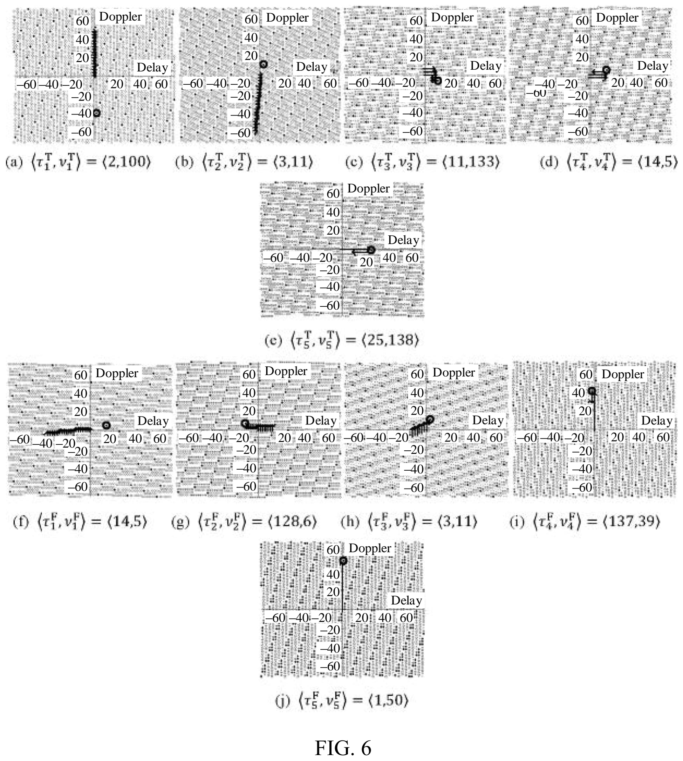

When $N = 139$, $u = 50$, $\Delta_T \times \Delta_F = 2 \times 3$, as shown in FIG. 6, delay-domain cyclic shift reference points determined by using the method in this embodiment of this application are $\langle \tau_1^T, v_1^T \rangle = \langle 2,100 \rangle, \langle \tau_2^T, v_2^T \rangle = \langle 3,11 \rangle, \langle \tau_3^T, v_3^T \rangle = \langle 11,133 \rangle, \langle \tau_4^T, v_4^T \rangle = \langle 14,5 \rangle, \langle \tau_5^T, v_5^T \rangle = \langle 25,138 \rangle$. Doppler-domain cyclic shift reference points are $\langle \tau_1^F, v_1^F \rangle = \langle 14,5 \rangle, \langle \tau_2^F, v_2^F \rangle = \langle 128,6 \rangle, \langle \tau_3^F, v_3^F \rangle = \langle 3,11 \rangle, \langle \tau_4^F, v_4^F \rangle = \langle 137,39 \rangle, \langle \tau_5^F, v_5^F \rangle = \langle 1,50 \rangle$. Quantities of cyclic shifts corresponding to the delay-domain cyclic shift reference points are respectively

$\Omega_1^T = 16, \Omega_2^T = 20, \Omega_3^T = 19, \Omega_4^T = 19, \Omega_5^T = 19$ . Quantities of cyclic shifts corresponding to the Doppler-domain cyclic shift reference points are respectively $\Omega_1^F = 19, \Omega_2^F = 19, \Omega_3^F = 22, \Omega_4^F = 16, \Omega_5^F = 16$ . Based on a principle of using a cyclic shift reference point with a largest quantity of cyclic shifts as a cyclic shift reference point of the root sequence, the determined cyclic shift reference point of the root sequence is $\langle \tau_\star^\dagger, v_\star^\dagger \rangle = \langle \tau_3^F, v_3^F \rangle = \langle 3,11 \rangle$ , and a quantity of cyclic shifts corresponding to the cyclic shift reference point is $\Omega_\star^\dagger = \Omega_3^F = 22$ . Therefore, according to the solution in this embodiment of this application, the determined cyclic shift sequence includes 22 sequences, and cyclic shifts $C_v$ of root sequences corresponding to the 22 sequences are respectively {0,9,11,19,21,29,31,40,42,52,63,73,75,83,85,94,96,104,106,116,127,137}.

Under a limitation of N = 139, u = 50, $\Delta_T \times \Delta_F$= 2 × 3, a cyclic shift sequence determined by using an existing solution includes 19 sequences. For example, in the existing solution, cyclic shifts of 19 root sequences corresponding to the 19 sequences are represented as {0,2,4,6,8,10,12,14,16,18,20,22,75,77,79,81,83,85,87}.

It can be learned from comparison that, under a same condition, a capacity of a cyclic shift sequence obtained by using the method in this embodiment of this application is greater than a capacity of a cyclic shift sequence obtained in the conventional technology.

[Example 3]

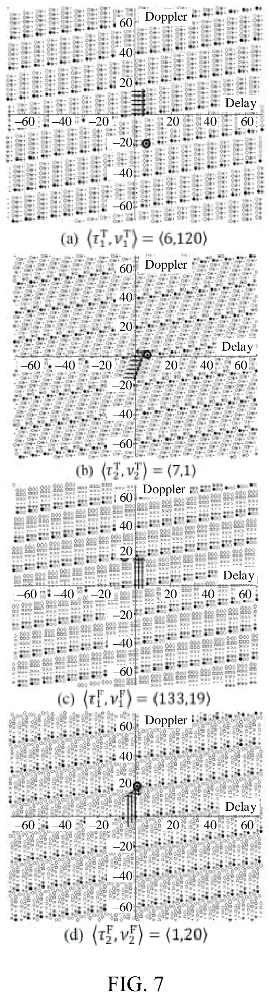

For example, when N = 139, u = 20, $\Delta_T \times \Delta_F$= 2 × 3, as shown in FIG. 7, delay-domain cyclic shift reference points determined by using the method in this embodiment of this application are $\langle \tau_1^T, v_1^T \rangle = \langle 6,120 \rangle, \langle \tau_2^T, v_2^T \rangle = \langle 7,1 \rangle$ . Determined Doppler-domain cyclic shift reference points are $\langle \tau_1^F, v_1^F \rangle = \langle 133,19 \rangle, \langle \tau_2^F, v_2^F \rangle = \langle 1,20 \rangle$ . Quantities of cyclic shifts corresponding to the delay-domain cyclic shift reference points are respectively $\Omega_1^T = 18, \Omega_2^T = 20$ . Quantities of cyclic shifts corresponding to the Doppler-domain cyclic shift reference points are respectively $\Omega_1^F = 18, \Omega_2^F = 19$ . Based on a principle of using a cyclic shift reference point with a largest quantity of cyclic shifts as a cyclic shift reference point of the root sequence, the determined cyclic shift reference point of the root sequence is $\langle \tau_\star^\dagger, v_\star^\dagger \rangle = \langle \tau_2^T, v_2^T \rangle = \langle 7,1 \rangle$ , and a quantity of cyclic shifts corresponding to the cyclic shift reference point is $\Omega_\star^\dagger = \Omega_2^T = 20$ . In other words, according to the method in this embodiment of this application, the determined cyclic shift sequence includes 20 sequences, and a capacity of the cyclic shift sequence is 20. Alternatively, a description is as follows: Cyclic shifts of 20 sequences may be supported by using the method in this embodiment of this application, and cyclic shifts $C_v$ of root sequences corresponding to the cyclic shifts of the 20 sequences are respectively {0,2,4,20,22,24,40,42,44,60,62,64,80,82,84,100,102,104,121,123}.

Similarly, under a limitation of N = 139, u = 20, $\Delta_T \times \Delta_F$= 2 × 3, in an existing solution, a determined cyclic shift sequence includes 20 sequences. For example, in the existing solution, cyclic shifts of 20 root sequences corresponding to the 20 sequences may be represented as {0,2,4,20,22,24,40,42,44,60,62,64,80,82,84,100,102,104,121,123}.

It can be learned from comparison that, under a same condition, a capacity of a cyclic shift sequence obtained by using the method in this embodiment of this application is equal to a capacity of a cyclic shift sequence obtained in the conventional technology.

[Example 4]

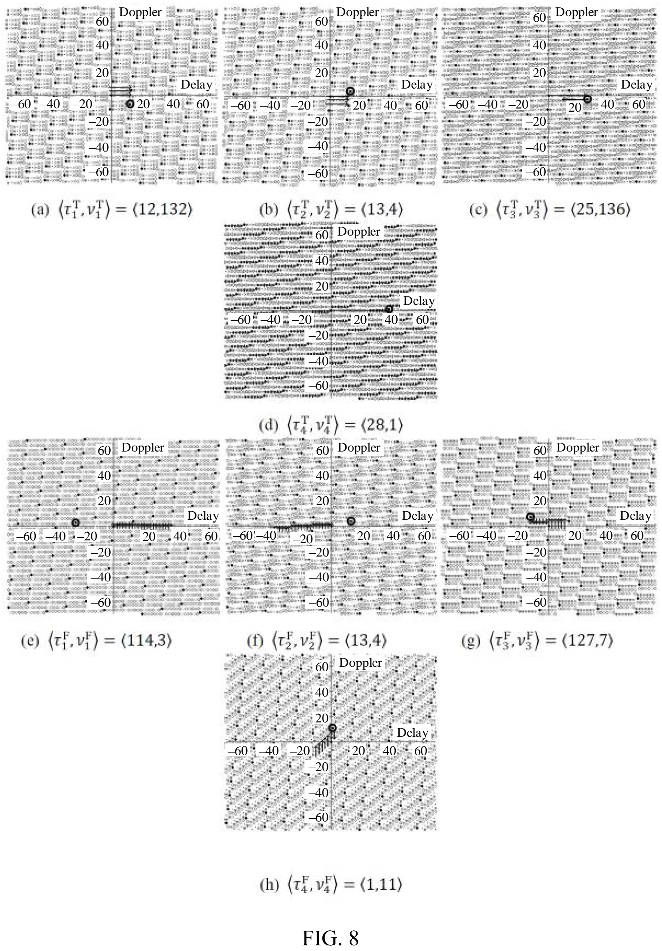

For example, when N = 139, u = 11, $\Delta_T \times \Delta_F$= 2 × 3, as shown in FIG. 8, delay-domain cyclic shift reference points determined by using the method in this embodiment of this application are $\langle \tau_1^T, v_1^T \rangle = \langle 12,132 \rangle, \langle \tau_2^T, v_2^T \rangle = \langle 13,4 \rangle, \langle \tau_3^T, v_3^T \rangle = \langle 25,136 \rangle, \langle \tau_4^T, v_4^T \rangle = \langle \tau_4^T, v_4^T \rangle = \langle 38,1 \rangle$ . Determined Doppler-domain cyclic shift reference points are $\langle \tau_1^F, v_1^F \rangle = \langle 114,3 \rangle, \langle \tau_2^F, v_2^F \rangle = \langle 13,4 \rangle, \langle \tau_3^F, v_3^F \rangle = \langle 127,7 \rangle, \langle \tau_4^F, v_4^F \rangle = \langle 1,11 \rangle$ . Quantities of cyclic shifts corresponding to the delay-domain cyclic shift reference points are respectively $\Omega_1^T = 18, \Omega_2^T = 18, \Omega_3^T = 19, \Omega_4^T = 19$ . Quantities of cyclic shifts corresponding to the Doppler-domain cyclic shift reference points are respectively $\Omega_1^F = 19, \Omega_2^F = 19, \Omega_3^F = 18, \Omega_4^F = 20$. Based on a principle of using a cyclic shift reference point with a largest quantity of cyclic shifts as a cyclic shift reference point of the root sequence, the cyclic shift reference point of the root sequence is $\langle \tau_\star^\dagger, v_\star^\dagger \rangle = \langle \tau_4^F, v_4^F \rangle = \langle 1,11 \rangle$, and a quantity of cyclic shifts corresponding to the cyclic shift reference point is $\Omega_\star^\dagger = \Omega_4^F = 20$. In other words, according to the method in this embodiment of this application, the determined cyclic shift sequence includes 20 sequences, and a capacity of the cyclic shift sequence is 20. Alternatively, a description is as follows: Cyclic shifts of 20 sequences may be supported by using the method in this embodiment of this application, and cyclic shifts $C_v$ of root sequences corresponding to the 20 sequences are respectively {0,3,9,18,25,34,43,50,59,68,74,83,90,92,99,108,115,117,124,133}.

Similarly, under a limitation of $N = 139$, $u = 11$, $\Delta_T \times \Delta_F = 2 \times 3$, in an existing solution, a determined cyclic shift sequence includes 19 sequences. For example, in the existing solution, cyclic shifts of 19 root sequences corresponding to the 19 sequences may be represented as {0,2,4,6,8,10,12,14,16,18,20,22,24,26,28,30,32,34,36}.

It can be learned from comparison that, under a same condition, a capacity of a cyclic shift sequence obtained by using the method in this embodiment of this application is greater than a capacity of a cyclic shift sequence obtained in the conventional technology.

Optionally, the method in the procedure in FIG. 2 further includes: The communication apparatus determines a first sequence from a sequence set, where the sequence set includes cyclic shift sequences of one or more root sequences; and the communication apparatus outputs the first sequence. For example, the communication apparatus may determine the sequence set based on the cyclic shift sequences of the one or more root sequences. For example, the sequence set includes 64 sequences. The communication apparatus determines the first sequence from the sequence set. There are one or more first sequences. For example, the communication apparatus uses the first sequence as a random access preamble Preamble. The communication apparatus outputs the first sequence, and performs random access by using the first sequence. Alternatively, the communication apparatus may use the first sequence in a sensing scenario, and the communication apparatus outputs the first sequence, and uses the first sequence as a sensing signal. The sensing includes but is not limited to identifying a target object and/or positioning a target object. Positioning the target object includes at least one of the following: determining a distance from the target object, a moving speed of the target object, a moving angle of the target object, or the like.

In a design, the communication apparatus in the procedure in FIG. 2 may be a terminal, or a chip, a circuit, or the like used in the terminal. The terminal may determine the cyclic shift sequence of the root sequence by using the method in the procedure in FIG. 2, for example, based on the sequence length of the root sequence, the root sequence number, the maximum round-trip time, and the maximum Doppler frequency shift. The determined cyclic shift sequence may be used in a scenario such as random access or sensing. This is not limited. For example, in a random access scenario, the terminal may construct a random access preamble (Preamble) by using the cyclic shift sequence. For example, the cyclic shift sequence determined in step 202 may be used to construct 64 random access preambles. The 64 random access preamble may include a cyclic shift sequence of one root sequence, cyclic shift sequences of a plurality of root sequences, or the like. This is not limited. In a design, the terminal may select one random access preamble from the 64 random access preambles, and send the selected random access preamble to an access network device. In a design, the terminal may communicate with the access network device by using a plurality of beams. Different beams are corresponding to different sequence sets, and random access preambles in different sequence sets may indicate different beam directions. In other words, when the terminal communicates with the access network device by using a plurality of beams, the terminal selects a plurality of random access preambles corresponding to the plurality of beams, and sends corresponding random access preambles on different beams. For example, the terminal sends one random access preamble to the access network device. When receiving the random access preamble, the access network device may perform correlation processing on the random access preamble and a locally generated sequence. If the correlation processing succeeds, it is considered that synchronization between the terminal and the access network device succeeds. The access network device may determine a location (related to a speed of the terminal) and/or a moving speed (related to a Doppler frequency shift of the terminal) of the terminal based on the random access preamble, to determine a timing advance (timing advance, TA) and/or a carrier offset. The access network device may send a message 2 to the terminal based on the TA and/or the carrier offset. It may be understood that, in a coverage area of the access network device, a plurality of terminals may simultaneously perform random access in one cell. In other words, in a radius of one cell, a plurality of terminals may simultaneously send random access preambles to the access network device. In the procedure in FIG. 2, ambiguity functions of cyclic shift sequences constructed from a same root sequence within the range of the maximum round-trip time and the maximum Doppler frequency shift are equal to zero, and ambiguity functions of cyclic shift sequences constructed from different root sequences within the range of the maximum round-trip time and the maximum Doppler frequency shift are equal to a square root of a sequence length. Therefore, cyclic shift sequences of a same root sequence are preferentially traversed, and cyclic shift sequences of different root sequences are introduced on this basis to form a sequence set of 64 random access preambles, so that mutual interference between random access preambles of different terminals can be avoided to a maximum extent. Alternatively, the terminal may use the cyclic shift sequences determined in the procedure in FIG. 2 for sensing. For example, the terminal may send a sensing signal. The sensing signal arrives at a target object. After the target object reflects the sensing signal, the terminal may receive the reflected sensing signal, and analyze the received sensing signal, to recognize the target object, position the target object, and/or the like. For example, the terminal may select one cyclic shift sequence from the cyclic shift sequences determined in the procedure in FIG. 2 as a sensing signal.

In another design, the communication apparatus in the procedure in FIG. 2 may be an access network device, or a chip, a circuit, or the like used in the access network device. The access network device may determine the cyclic shift sequence of the root sequence by using the method in the procedure in FIG. 2, for example, based on the sequence length of the root sequence, the root sequence number, the maximum round-trip time, and the maximum Doppler frequency shift. The determined cyclic shift sequence may be used in a scenario such as random access or sensing. This is not limited. For example, in a random access scenario, the access network device may construct a random access preamble by using the method in the procedure in FIG. 2. For example, the cyclic shift sequence determined in step 202 may be used to construct 64 random access preambles. Similarly, the 64 random access preambles may include a cyclic shift sequence of one root sequence, cyclic shift sequences of a plurality of root sequences, or the like. This is not limited. Optionally, the access network device may configure the 64 constructed random access preambles for the terminal. The terminal selects one or more random access preambles from the 64 random access preambles configured by the access network device, for random access and the like. Alternatively, the access network device and the terminal may separately determine a cyclic shift sequence by using the method in the procedure in FIG. 2, and construct 64 random access preambles by using the determined cyclic shift sequence. The terminal selects one random access preamble from the 64 random access preambles determined by the terminal, and sends the selected random access preamble to the access network device. The access network device may perform related processing on the random access preamble received from the terminal and any one of the 64 locally constructed random access preambles. If a preset threshold is exceeded, it is considered that synchronization of the terminal succeeds. Alternatively, the access network device may use the cyclic shift sequences determined in the procedure in FIG. 2 for sensing or the like. In addition to the foregoing terminal, the access network device may also be configured to perform sensing. For example, the access network device may determine the cyclic shift sequence by using the procedure in FIG. 2. The access network device selects a sequence from the determined cyclic shift sequence as a sensing signal, and may recognize a target object, position the target object, and/or the like by sending the sensing signal.

It should be noted that in embodiments of this application:

1. Appropriate modifications to the cyclic shift method for a root sequence provided in embodiments of this application also fall within the protection scope of embodiments of this application. For example, the cyclic shift method for a root sequence provided in embodiments of this application is appropriately modified, but a quantity of cyclic shifts of the root sequence determined by using a modified method is the same as a quantity of cyclic shifts of the root sequence determined by using the method in embodiments of this application. The modification also falls within the protection scope of embodiments of this application.

For example, when $N = 139$, $u = 25$, $\Delta_T \times \Delta_F = 2 \times 3$, a cyclic shift of a root sequence is further provided:

$$C_v \in \{0,2,11,13,22,24,33,35,44,46,54,56,65,67,76,78,130,119,108,98,87\}$$

2. The cyclic shift sequence provided in embodiments of this application is not limited. Subsequent modifications to the cyclic shift sequence provided in embodiments of this application also fall within the protection scope of embodiments of this application. For example, phase shift performed on the cyclic shift sequence provided in embodiments of this application does not change performance of the ambiguity function of the root sequence, and also falls within the protection scope of embodiments of this application. For example, an expression of a cyclic shift sequence is further provided:

$$s_{u,v}(n) = e^{-j\pi[u(n+\tau_v)(n+\tau_v+1)-2nv_v]/N}$$

Alternatively, another expression of a cyclic shift sequence is further provided:

$$s_{u,v}(n) = e^{-j\pi[un^2+2n(u\tau_v-v_v)]/N}$$

3. In the descriptions of embodiments of this application, an execution sequence of different steps is not limited. In addition, the procedure in FIG. 2 may include fewer steps or more steps than those in the schematic flowchart or the text descriptions. This is not limited.

4. In the descriptions of this application, "at least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists. A and B may be singular or plural. In the text descriptions of this application, the character "/" generally represents an "or" relationship between associated objects. "Including at least one of A, B, or C" may represent: including A; including B; including C; including A and B; including A and C; including B and C; or including A, B, and C.

5. Various numbers in embodiments of this application are merely used for differentiation for ease of description, and are not used to limit the scope of embodiments of this application. Sequence numbers of the foregoing processes do not mean a sequence of execution. The sequence of execution of the processes should be determined according to functions and internal logic of the processes.

In the foregoing embodiments provided in this application, the methods provided in embodiments of this application are separately described from a perspective of interaction between the devices. To implement functions in the foregoing method provided in embodiments of this application, the foregoing communication apparatus may include a hardware structure and/or a software module, and the foregoing functions are implemented in a form of a hardware structure, a software module, or a combination of a hardware structure and a software module. Whether a function in the foregoing functions is performed in a manner of a hardware structure, a software module, or a hardware structure and a software module depends on specific applications and design constraints of the technical solutions.

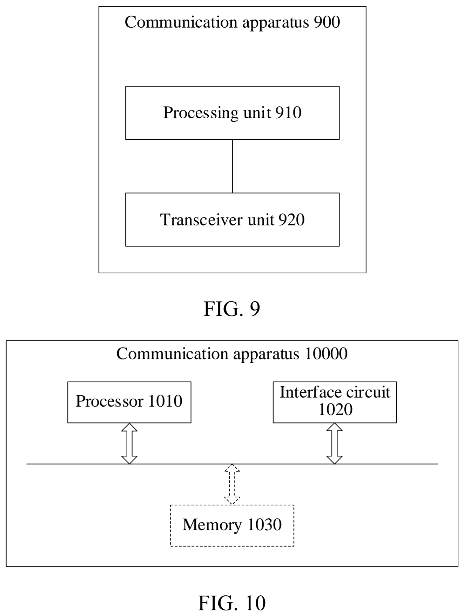

FIG. 9 and FIG. 10 are diagrams of structures of possible apparatuses according to embodiments of this application. These communication apparatuses may implement one or more corresponding functions in the foregoing method embodiments. For example, functions implemented by the foregoing communication apparatus may be implemented. Therefore, beneficial effects of the foregoing method embodiments may be achieved.

As shown in FIG. 9, a communication apparatus 900 includes a processing unit 910 and a transceiver unit 920.

For example, the processing unit 910 may also be referred to as a processor, a processing board, a processing module, a processing apparatus, or the like. The transceiver unit 920 may also be referred to as a transceiver, a transceiver machine, a transceiver module, a transceiver apparatus, a communication unit, or the like. Further, the transceiver unit 920 may include at least one of a sending unit or a receiving unit. The sending unit and the receiving unit may be integrated together, or may be two independent units, or the like.

In a design, the communication apparatus 900 is configured to implement the function of the communication apparatus in FIG. 2. Details are as follows.

The processing unit 910 is configured to: determine a cyclic shift of a root sequence, where the cyclic shift of the root sequence is associated with a sequence length of the root sequence, a root sequence number, a maximum round-trip time, and a maximum Doppler frequency shift; and determine a cyclic shift sequence based on the cyclic shift of the root sequence, where an ambiguity function of the cyclic shift sequence is equal to zero within a range of the maximum round-trip time and the maximum Doppler frequency shift.

Optionally, the transceiver unit 920 is configured to send indication information of the cyclic shift sequence and the like to another communication apparatus.

For more detailed descriptions of the processing unit 910 and the transceiver unit 920, refer to the descriptions in FIG. 2 in the foregoing method embodiments. Details are not described herein again.

It may be understood that, in embodiments of this application, division into the units is an example, and is merely logical function division. During actual implementation, another division manner may be used. In addition, functional units in embodiments of this application may be integrated into one physical device (for example, a processor), or each functional unit may be an independent physical device, or two or more units may be integrated into one unit for implementation. The integrated unit may be implemented in a form of hardware, or implemented in a form of a software functional module, or the like.

FIG. 10 is a diagram of another structure of a communication apparatus 10000 according to an embodiment of this application. For example, the communication apparatus 10000 shown in FIG. 10 may be an implementation of a hardware circuit of the communication apparatus 900 shown in FIG. 9. For ease of description, FIG. 10 shows only a main part of the communication apparatus.

As shown in FIG. 10, the communication apparatus 10000 includes a processor 1010 and an interface circuit 1020. The processor 1010 and the interface circuit 1020 are coupled to each other.

For example, the processor 1010 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor, or the like. The interface circuit 1020 may be a transceiver, an input/output circuit, or the like.

Optionally, the communication apparatus 10000 may further include a memory 1030, configured to: store instructions executed by the processor 1010, or store input data required for running instructions by the processor 1010, or store data generated after the processor 1010 runs instructions. For example, the instructions may also be referred to as a computer program, computer program code, or the like.

For example, the memory 1030 may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well known in the art.

When the communication apparatus 10000 is configured to implement the method of the communication apparatus in FIG. 2, the processor 1010 is configured to implement a function of the processing unit 910, and the interface circuit 1020 is configured to implement a function of the transceiver unit 920.

In a design, the interface circuit 1020 is configured to receive a signal from a communication apparatus other than the communication apparatus 10000 and transmit the signal to the processor 1010, or send a signal from the processor 1010 to a communication apparatus other than the communication apparatus. The processor 1010 is configured to implement a function of the communication apparatus in FIG. 2 by using a logic circuit or executing code instructions.

An embodiment of this application further provides a communication apparatus. The communication apparatus includes a processor and a memory. The processor is coupled to the memory, and the processor is configured to implement a function of the communication apparatus in FIG. 2. For example, the processor may execute instructions in the memory, so that the communication apparatus implements one or more functions in the foregoing method embodiments, for example, a function implemented by the communication apparatus in FIG. 2. An example storage medium is coupled to a processor, so that the processor can read information from the storage medium and can write information into the storage medium. Certainly, the storage medium may alternatively be a part of the processor. The processor and the storage medium may be located in an ASIC. In addition, the ASIC may be located in the communication apparatus in FIG. 2. The processor and the storage medium may alternatively exist in the communication apparatus in FIG. 2 as discrete components.

An embodiment of this application further provides a computer-readable storage medium. The computer-readable storage medium stores instructions, and the instructions may also be referred to as a computer program, computer program code, or the like. The instructions are run on a computer, so that the computer performs a function of the communication apparatus in FIG. 2 in the foregoing method embodiments.

Optionally, the computer may be a general-purpose computer, a dedicated computer, a computer network, a network device, user equipment, or another programmable apparatus. The computer programs or the instructions may be stored in a computer-readable storage medium or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by a computer, or a data storage device such as a server or a data center integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

An embodiment of this application further provides a computer program product, including a computer program or instructions. When the computer program or the instructions are run on a computer, the method of the communication apparatus in FIG. 2 is performed. For example, the computer program product includes one or more computer programs or instructions. When the computer programs or the instructions are loaded and executed on a computer, all or some of the procedures or functions of the communication apparatus in FIG. 2 in embodiments of this application are executed.

It may be understood that all or some of the methods in embodiments of this application may be implemented by using software, hardware, firmware, or any other combination. When software is used to implement the methods, all or some of the methods may be implemented in a form of a computer program product.

An embodiment of this application further provides a chip. The chip includes a processor, the processor is coupled to a memory, and the processor is configured to execute a computer program or instructions stored in the memory, so that the chip implements a function of the communication apparatus in FIG. 2.

An embodiment of this application further provides a communication system, including a first communication apparatus and a second communication apparatus.

The first communication apparatus may implement a function of the communication apparatus in FIG. 2. A function that can be implemented by the second communication apparatus is not limited. For a specific structure of the first communication apparatus, refer to the foregoing descriptions, for example, the structure descriptions in FIG. 9 or FIG. 10.

It is clear that a person skilled in the art may make various modifications and variations to this application without departing from the scope of this application. Thus, this application is intended to cover these modifications and variations, provided that they fall within the scope of the claims of this application and their equivalent technologies.

**Claims**

1. A cyclic shift method for a root sequence, comprising:

   determining a cyclic shift of the root sequence, wherein the cyclic shift of the root sequence is associated with a sequence length of the root sequence, a root sequence number, a maximum round-trip time, and a maximum Doppler frequency shift; and
   determining a cyclic shift sequence based on the cyclic shift of the root sequence, wherein an ambiguity function of the cyclic shift sequence is equal to zero within a range of the maximum round-trip time and the maximum Doppler frequency shift.

2. The method according to claim 1, wherein determining the cyclic shift sequence $s_{u,v}(n)$ based on the cyclic shift $C_v$ of the root sequence satisfies:

$$s_{u,v}(n) = e^{-j\pi u(n+C_v)(n+C_v+1)/N}$$

   wherein $N$ represents the sequence length of the root sequence, $N$ is a prime number, $u$ represents the root sequence number, a value range of $u$ is $1 \leq u \leq N - 1$, $n$ represents a symbol index of the cyclic shift sequence, a value range of $n$ is $0 \leq n \leq N - 1$, and $v$ represents an index of the cyclic shift of the root sequence.

3. The method according to claim 1 or 2, wherein ambiguity functions $A(\tau, v)$ of cyclic shift sequences $s_{u,v1}(n)$ and $s_{u,v2}(n)$ are equal to zero within the range of the maximum round-trip time $\Delta_T$ and the maximum Doppler frequency shift $\Delta_F$, and satisfy:

$$A(\tau, v) = \sum_{n=0}^{N-1} s_{u,v_1}(n)s_{u,v_2}^*(n - \tau)e^{j2\pi nv/N} = \begin{cases} N, & v_1 = v_2, \tau = 0, v = 0 \\ 0, & (v_1 \neq v_2) \vee (\tau \neq 0) \vee (v \neq 0) \end{cases}$$

   wherein $N$ represents the sequence length of the root sequence, $u$ represents the root sequence number, $v_1$ and $v_2$ represent indexes of cyclic shifts of the root sequence, $\tau$ represents a delay coordinate of the ambiguity function, a value range of $\tau$ is $0 \leq \tau \leq \Delta_T - 1$, v represents a Doppler coordinate of the ambiguity function, a value range of $v$ is $0 \leq \tau \leq \Delta_F - 1$, an operator $(\cdot)^*$ represents a complex conjugate, and an operator V represents conditional OR.

4. The method according to any one of claims 1 to 3, wherein the cyclic shift $C_v$ of the root sequence satisfies:

$$C_v = (\tau_v - u^{-1}v_v) \bmod N$$

   wherein $N$ represents the sequence length of the root sequence, $u$ represents the root sequence number, $v$ represents the index of the cyclic shift of the root sequence, $\tau_v$ represents a delay-domain cyclic shift, $v_v$ represents a Doppler-domain cyclic shift, an operator $(\cdot)^{-1}$ represents a multiplicative inverse, and $v$ represents the index of the cyclic shift of the root sequence.

5. The method according to any one of claims 1 to 4, wherein determining the cyclic shift of the root sequence comprises:

   determining a cyclic shift reference point of the root sequence based on a delay-domain cyclic shift reference point and a Doppler-domain cyclic shift reference point; and
   determining the cyclic shift of the root sequence based on the cyclic shift reference point of the root sequence.

6. The method according to claim 5, further comprising:

   determining a delay restricted area in a delay-Doppler coordinate system, wherein a horizontal axis of the delay-Doppler coordinate system indicates a delay domain, a vertical axis indicates a Doppler domain, the delay restricted area comprises one or more peak points of the root sequence, and the peak point is determined based on an ambiguity function of the root sequence; and

determining that the peak point of the root sequence comprised in the delay restricted area is the delay-domain cyclic shift reference point.

7. The method according to claim 6, wherein the delay restricted area satisfies:

a rectangular area comprising a start coordinate in the delay domain being $\Delta_T$, an end coordinate in the delay domain being $\min_{v \in \{\pm 1, \pm 2, ..., \pm (\Delta F-1)\}} \{u^{-1} v \bmod N\}$, a start coordinate in the Doppler domain being 0, and an end coordinate in the Doppler domain being $N - 1$, wherein

$N$ represents the sequence length of the root sequence, $u$ represents the root sequence number, $\Delta_T$ represents the maximum round-trip time, $\Delta_F$ represents the maximum Doppler frequency shift, and an operator $(\cdot)^{-1}$ represents a multiplicative inverse.

8. The method according to any one of claims 5 to 7, wherein a set $\mathcal{S}_T$ comprising coordinates of the delay-domain cyclic shift reference point satisfies:

$$\mathcal{S}_T \triangleq \left\{ \langle \tau_1^T, v_1^T \rangle, \langle \tau_2^T, v_2^T \rangle, ..., \langle \tau_{|\mathcal{S}_T|}^T, v_{|\mathcal{S}_T|}^T \rangle \right\}$$

$$= \left\{ \langle \tau, u\tau \bmod N \rangle \middle| \min\{\pm u\tau \bmod N\} < \min_{n=1,2,...,\tau-1} \{\pm un \bmod N\}, \tau \in \left\{ \Delta_T, \Delta_T + 1, ..., \min_{v \in \{\pm 1, \pm 2, ..., \pm (\Delta_F-1)\}} \{u^{-1} v \bmod N\} \right\} \right\}$$

wherein $N$ represents the sequence length of the root sequence, $u$ represents the root sequence number, $\Delta_T$ represents the maximum round-trip time, $\Delta_F$ represents the maximum Doppler frequency shift, $\langle \tau_i^T, v_i^T \rangle$ represents coordinates of an $i^{th}$ delay-domain cyclic shift reference point, a value range of $i$ is $1 \leq i \leq |\mathcal{S}_T|$, an operator $(\cdot)^{-1}$ represents a multiplicative inverse, and an operator $|\cdot|$ represents a cardinality of the set.

9. The method according to any one of claims 5 to 8, further comprising:

determining a Doppler restricted area in the delay-Doppler coordinate system, wherein the horizontal axis of the delay-Doppler coordinate system indicates the delay domain, the vertical axis indicates the Doppler domain, the Doppler restricted area comprises one or more peak points of the root sequence, and the peak point is determined based on the ambiguity function of the root sequence; and

determining that the peak point of the root sequence comprised in the Doppler restricted area is the Doppler-domain cyclic shift reference point.

10. The method according to claim 9, wherein the Doppler restricted area satisfies:

a rectangular area comprising a start coordinate in the delay domain being 0, an end coordinate in the delay domain being $N - 1$, a start coordinate in the Doppler domain being $\Delta_F$, and an end coordinate in the Doppler domain being $\min_{\tau \in \{\pm 1, \pm 2, ..., \pm (\Delta T-1)\}} \{u\tau \bmod N\}$, wherein

$N$ represents the sequence length of the root sequence, $u$ represents the root sequence number, $\Delta_T$ represents the maximum round-trip time, and $\Delta_F$ represents the maximum Doppler frequency shift.

11. The method according to any one of claims 5 to 10, wherein a set $\mathcal{S}_F$ comprising coordinates of the Doppler-domain cyclic shift reference point satisfies:

$$\mathcal{S}_F \triangleq \left\{ \langle \tau_1^F, v_1^F \rangle, \langle \tau_2^F, v_2^F \rangle, ..., \langle \tau_{|\mathcal{S}_F|}^F, v_{|\mathcal{S}_F|}^F \rangle \right\}$$

$$= \left\{ \langle u^{-1} v \bmod N, v \rangle \middle| \min\{\pm u^{-1} v \bmod N\} < \min_{n=1,2,...,v-1} \{\pm u^{-1} n \bmod N\}, v \in \left\{ \Delta_F, \Delta_F + 1, ..., \min_{\tau \in \{\pm 1, \pm 2, ..., \pm (\Delta_T-1)\}} \{u\tau \bmod N\} \right\} \right\}$$

wherein $N$ represents the sequence length of the root sequence, $u$ represents the root sequence number, $\Delta_T$

represents the maximum round-trip time, $\Delta_F$ represents the maximum Doppler frequency shift, $\langle \tau_i^F, v_i^F \rangle$ represents an $i^{th}$ Doppler-domain cyclic shift reference point, a value range of $i$ is $1 \leq i \leq |\mathcal{S}_F|$, an operator $(\cdot)^{-1}$ represents a multiplicative inverse, and an operator $|\cdot|$ represents a cardinality of the set.

12. The method according to any one of claims 5 to 11, wherein a quantity $\Omega_\star^\dagger$ of cyclic shifts corresponding to the cyclic shift reference point $\langle \tau_\star^\dagger, v_\star^\dagger \rangle$ of the root sequence satisfies:

$$\Omega_\star^\dagger = \max\{\Omega_1^T, \Omega_2^T, \dots \Omega_{|\mathcal{S}_T|}^T, \Omega_1^F, \Omega_2^F, \dots, \Omega_{|\mathcal{S}_F|}^F\}$$

wherein $\Omega_1^T, \Omega_2^T, \dots \Omega_{|\mathcal{S}_T|}^T$ represents a quantity of cyclic shifts corresponding to the delay-domain cyclic shift reference point, $\Omega_1^F, \Omega_2^F, \dots, \Omega_{|\mathcal{S}_F|}^F$ represents a quantity of cyclic shifts corresponding to the Doppler-domain cyclic shift reference point, and $\Omega_\star^\dagger$ represents the quantity of cyclic shifts corresponding to the cyclic shift reference point of the root sequence.

13. The method according to any one of claims 5 to 12, wherein the quantity $\Omega_i^T$ of cyclic shifts corresponding to the delay-domain cyclic shift reference point satisfies:

$$\Omega_i^T = k_i^T \cdot l_i^T + \bar{k}_i^T \cdot \bar{l}_i^T + \bar{\bar{k}}_i^T \cdot \bar{\bar{l}}_i^T$$

wherein $k_i^T$ represents a quantity of delay-domain complete cyclic shifts, $l_i^T$ represents a quantity of Doppler-domain complete cyclic shifts, $\bar{k}_i^T$ represents a quantity of delay-domain near-end residual cyclic shifts, $\bar{l}_i^T$ represents a quantity of Doppler-domain near-end residual cyclic shifts, $\bar{\bar{k}}_i^T$ represents a quantity of delay-domain far-end residual cyclic shifts, $\bar{\bar{l}}_i^T$ represents a quantity of Doppler-domain far-end residual cyclic shifts, and a value range of $i$ is $1 \leq i \leq |\mathcal{S}_T|$.

14. The method according to claim 13, wherein the quantity $k_i^T$ of delay-domain complete cyclic shifts satisfies:

$$k_i^T = \lfloor \tau_i^T / \Delta_T \rfloor$$

wherein $\Delta_T$ represents the maximum round-trip time, $\langle \tau_i^T, v_i^T \rangle$ represents the coordinates of the delay-domain cyclic shift reference point, and an operator $\lfloor \cdot \rfloor$ represents rounding down;

the quantity $l_i^T$ of Doppler-domain complete cyclic shifts satisfies:

restriction coordinates $\langle \bar{\tau}_i^T, \bar{v}_i^T \rangle$ are determined based on the coordinates $\langle \tau_i^T, v_i^T \rangle$ of the delay-domain cyclic shift reference point, and satisfy:

$$\begin{cases} \bar{\tau}_i^T = \min_{v \in \{1,2,\dots,\max\{\Delta_F-1,\min\{v_i^T, N-v_i^T\}-1\}\}} \{\text{sgn}(v_i^T - N/2) u^{-1} v \bmod N\} \\ \bar{v}_i^T = u\bar{\tau}_i^T \bmod N \end{cases}$$

wherein $N$ represents the sequence length of the root sequence, $u$ represents the root sequence number, $\Delta_F$

represents the maximum Doppler frequency shift, and an operator $(\cdot)^{-1}$ represents a multiplicative inverse; a Doppler spacing $d_i^{\mathrm{T}}$ is determined based on the coordinates $\langle \tau_i^{\mathrm{T}}, v_i^{\mathrm{T}} \rangle$ of the delay-domain cyclic shift reference point and the restriction coordinates $\langle \bar{\tau}_i^{\mathrm{T}}, \bar{v}_i^{\mathrm{T}} \rangle$, and satisfies:

$$d_i^{\mathrm{T}} = \min\left\{ d \left| \tau_i^{\mathrm{T}} - \left( \left\lceil \frac{d/\Delta_{\mathrm{F}}}{\lceil \min\{v_i^{\mathrm{T}}, N - v_i^{\mathrm{T}}\}/\Delta_{\mathrm{F}}\rceil} \right\rceil + 1 \right) \cdot \tau_i^{\mathrm{T}} \bmod \Delta_{\mathrm{T}} \geq \bar{\tau}_i^{\mathrm{T}} - \left\lfloor \frac{d - \min\{\bar{v}_i^{\mathrm{T}}, N - \bar{v}_i^{\mathrm{T}}\}}{\min\{v_i^{\mathrm{T}}, N - v_i^{\mathrm{T}}\}} \right\rfloor \cdot \tau_i^{\mathrm{T}} \right. \right\}$$

wherein $N$ represents the sequence length of the root sequence, $\Delta_{\mathrm{T}}$ represents the maximum round-trip time, $\Delta_{\mathrm{F}}$ represents the maximum Doppler frequency shift, an operator $\lfloor \cdot \rfloor$ represents rounding down, and an operator $\lceil \cdot \rceil$ represents rounding up; and

the quantity $l_i^{\mathrm{T}}$ of Doppler-domain complete cyclic shifts is determined based on the Doppler spacing $d_i^{\mathrm{T}}$, and satisfies:

$$l_i^{\mathrm{T}} = \left\lfloor d_i^{\mathrm{T}}/\Delta_{\mathrm{F}} \right\rfloor$$

wherein $\Delta_{\mathrm{F}}$ represents the maximum Doppler frequency shift, $d_i^{\mathrm{T}}$ represents the Doppler spacing, and $\lfloor \cdot \rfloor$ represents rounding down;

the quantity $\bar{k}_i^{\mathrm{T}}$ of delay-domain near-end residual cyclic shifts satisfies:

$$\bar{k}_i^{\mathrm{T}} = \max\left\{ \left\lfloor \left( \bar{\tau}_i^{\mathrm{T}} - \left\lfloor \frac{d_i^{\mathrm{T}} - \min\{\bar{v}_i^{\mathrm{T}}, N - \bar{v}_i^{\mathrm{T}}\}}{\min\{v_i^{\mathrm{T}}, N - v_i^{\mathrm{T}}\}} \right\rfloor \cdot \tau_i^{\mathrm{T}} + \left( \left\lceil \frac{l_i^{\mathrm{T}} - 1}{\lceil \min\{v_i^{\mathrm{T}}, N - v_i^{\mathrm{T}}\}/\Delta_{\mathrm{F}}\rceil} \right\rceil + 1 \right) \cdot \tau_i^{\mathrm{T}} \bmod \Delta_{\mathrm{T}} \right) / \Delta_{\mathrm{T}} \right\rfloor, 0 \right\}$$

wherein $N$ represents the sequence length of the root sequence, $\Delta_{\mathrm{T}}$ represents the maximum round-trip time, $\Delta_{\mathrm{F}}$ represents the maximum Doppler frequency shift, $\langle \tau_i^{\mathrm{T}}, v_i^{\mathrm{T}} \rangle$ represents the coordinates of the delay-domain cyclic shift reference point, $\langle \bar{\tau}_i^{\mathrm{T}}, \bar{v}_i^{\mathrm{T}} \rangle$ represents the restriction coordinates, $l_i^{\mathrm{T}}$ represents the quantity of Doppler-domain complete cyclic shifts, an operator $\lfloor \cdot \rfloor$ represents rounding down, and an operator $\lceil \cdot \rceil$ represents rounding up;

the quantity $\bar{l}_i^{\mathrm{T}}$ of Doppler-domain near-end residual cyclic shifts satisfies:

$$\bar{l}_i^{\mathrm{T}} = l_i^{\mathrm{T}} - \left\lceil \min\{v_i^{\mathrm{T}}, N - v_i^{\mathrm{T}}\}/\Delta_{\mathrm{F}} \right\rceil \cdot \left\lfloor \frac{l_i^{\mathrm{T}}}{\lceil \min\{v_i^{\mathrm{T}}, N - v_i^{\mathrm{T}}\}/\Delta_{\mathrm{F}}\rceil} \right\rfloor$$

wherein $N$ represents the sequence length of the root sequence, $\Delta_{\mathrm{F}}$ represents the maximum Doppler frequency shift, $\langle \tau_i^{\mathrm{T}}, v_i^{\mathrm{T}} \rangle$ represents the coordinates of the delay-domain cyclic shift reference point, $l_i^{\mathrm{T}}$ represents the quantity of Doppler-domain complete cyclic shifts, an operator $\lfloor \cdot \rfloor$ represents rounding down, and an operator $\lceil \cdot \rceil$ represents rounding up;

the quantity $\bar{\bar{k}}_i^{\mathrm{T}}$ of delay-domain far-end residual cyclic shifts satisfies:

$$\bar{\bar{k}}_i^{\mathrm{T}} = \max\left\{ \left\lfloor \left( \bar{\tau}_i^{\mathrm{T}} - \left\lfloor \frac{d_i^{\mathrm{T}} - \min\{\bar{v}_i^{\mathrm{T}}, N - \bar{v}_i^{\mathrm{T}}\}}{\min\{v_i^{\mathrm{T}}, N - v_i^{\mathrm{T}}\}} \right\rfloor \cdot \tau_i^{\mathrm{T}} + \left( \left\lceil \frac{2l_i^{\mathrm{T}} - \lfloor (d_i^{\mathrm{T}} + \min\{v_i^{\mathrm{T}}, N - v_i^{\mathrm{T}}\})/\Delta_{\mathrm{F}} \rfloor}{\lceil \min\{v_i^{\mathrm{T}}, N - v_i^{\mathrm{T}}\}/\Delta_{\mathrm{F}}\rceil} \right\rceil + 1 \right) \cdot \tau_i^{\mathrm{T}} \bmod \Delta_{\mathrm{T}} \right) / \Delta_{\mathrm{T}} \right\rfloor, 0 \right\}$$

wherein $N$ represents the sequence length of the root sequence, $\Delta_{\mathrm{T}}$ represents the maximum round-trip time, $\Delta_{\mathrm{F}}$ represents the maximum Doppler frequency shift, $\langle \tau_i^{\mathrm{T}}, v_i^{\mathrm{T}} \rangle$ represents the coordinates of the delay-domain cyclic shift reference point, $\langle \bar{\tau}_i^{\mathrm{T}}, \bar{v}_i^{\mathrm{T}} \rangle$ represents the restriction coordinates, $l_i^{\mathrm{T}}$ represents the

quantity of Doppler-domain complete cyclic shifts, an operator $\lfloor \cdot \rfloor$ represents rounding down, and an operator $\lceil \cdot \rceil$ represents rounding up; and

the quantity $\bar{\bar{l}}_i^{\mathrm{T}}$ of Doppler-domain far-end residual cyclic shifts satisfies:

$$\bar{\bar{l}}_i^{\mathrm{T}} = \left\lfloor \left( d_i^{\mathrm{T}} + \min\{v_i^{\mathrm{T}}, N - v_i^{\mathrm{T}}\} \right)/\Delta_{\mathrm{F}} \right\rfloor - l_i^{\mathrm{T}} - \bar{l}_i^{\mathrm{T}}$$

wherein $N$ represents the sequence length of the root sequence, $\Delta_{\mathrm{F}}$ represents the maximum Doppler frequency shift, $\langle \tau_i^{\mathrm{T}}, v_i^{\mathrm{T}} \rangle$ represents the coordinates of the delay-domain cyclic shift reference point, $l_i^{\mathrm{T}}$ represents the quantity of Doppler-domain complete cyclic shifts, $\bar{l}_i^{\mathrm{T}}$ represents the quantity of Doppler-domain near-end residual cyclic shifts, and an operator $\lfloor \cdot \rfloor$ represents rounding down.

15. The method according to any one of claims 5 to 14, wherein the quantity $\Omega_i^{\mathrm{F}}$ of cyclic shifts corresponding to the Doppler-domain cyclic shift reference point satisfies:

$$\Omega_i^{\mathrm{F}} = l_i^{\mathrm{F}} \cdot k_i^{\mathrm{F}} + \bar{l}_i^{\mathrm{F}} \cdot \bar{k}_i^{\mathrm{F}} + \bar{\bar{l}}_i^{\mathrm{F}} \cdot \bar{\bar{k}}_i^{\mathrm{F}}$$

wherein $l_i^{\mathrm{F}}$ represents a quantity of Doppler-domain complete cyclic shifts, $k_i^{\mathrm{F}}$ represents a quantity of delay-domain complete cyclic shifts, $\bar{l}_i^{\mathrm{F}}$ represents a quantity of Doppler-domain near-end residual cyclic shifts, $\bar{k}_i^{\mathrm{F}}$ represents a quantity of delay-domain near-end residual cyclic shifts, $\bar{\bar{l}}_i^{\mathrm{F}}$ represents a quantity of Doppler-domain far-end residual cyclic shifts, $\bar{\bar{k}}_i^{\mathrm{F}}$ represents a quantity of delay-domain far-end residual cyclic shifts, and a value range of $i$ is $1 \leq i \leq | \mathcal{S}_{\mathrm{F}} |$.

16. The method according to claim 15, wherein the quantity $l_i^{\mathrm{F}}$ of Doppler-domain complete cyclic shifts satisfies:

$$l_i^{\mathrm{F}} = \left\lfloor v_i^{\mathrm{F}}/\Delta_{\mathrm{F}} \right\rfloor$$

wherein $\Delta_{\mathrm{F}}$ represents the maximum Doppler frequency shift, $\langle \tau_i^{\mathrm{F}}, v_i^{\mathrm{F}} \rangle$ represents the coordinates of the Doppler-domain cyclic shift reference point, and an operator $\lfloor \cdot \rfloor$ represents rounding down;

the quantity $k_i^{\mathrm{F}}$ of delay-domain complete cyclic shifts satisfies:

restriction coordinates $\langle \bar{\tau}_i^{\mathrm{F}}, \bar{v}_i^{\mathrm{F}} \rangle$ are determined based on the coordinates $\langle \tau_i^{\mathrm{F}}, v_i^{\mathrm{F}} \rangle$ of the Doppler-domain cyclic shift reference point, and satisfy:

$$\begin{cases} \bar{v}_i^{\mathrm{F}} = \displaystyle\min_{\tau \in \{1,2,\ldots,\max\{\Delta_{\mathrm{T}}-1,\min\{\tau_i^{\mathrm{F}},N-\tau_i^{\mathrm{F}}\}-1\}\}} \left\{ \mathrm{sgn}\left(\tau_i^{\mathrm{F}} - N/2\right) u\tau \bmod N \right\} \\ \bar{\tau}_i^{\mathrm{F}} = u^{-1} \bar{v}_i^{\mathrm{F}} \bmod N \end{cases}$$

wherein $N$ represents the sequence length of the root sequence, $u$ represents the root sequence number, $\Delta_{\mathrm{T}}$ represents the maximum round-trip time, $\langle \tau_i^{\mathrm{F}}, v_i^{\mathrm{F}} \rangle$ represents the coordinates of the Doppler-domain cyclic shift reference point, and an operator $(\cdot)^{-1}$ represents a multiplicative inverse;

a delay spacing $d_i^{\mathrm{F}}$ is determined based on the coordinates $\langle \tau_i^{\mathrm{F}}, v_i^{\mathrm{F}} \rangle$ of the Doppler-domain cyclic shift reference point and the restriction coordinates $\langle \bar{\tau}_i^{\mathrm{F}}, \bar{v}_i^{\mathrm{F}} \rangle$:

$$d_i^{\mathrm{F}} = \min\left\{ d \left| v_i^{\mathrm{F}} - \left( \left\lceil \frac{d/\Delta_{\mathrm{T}}}{\lceil \min\{\tau_i^{\mathrm{F}}, N - \tau_i^{\mathrm{F}}\}/\Delta_{\mathrm{T}} \rceil} \right\rceil + 1 \right) \cdot v_i^{\mathrm{F}} \bmod \Delta_{\mathrm{F}} \geq \bar{v}_i^{\mathrm{F}} - \left\lfloor \frac{d - \min\{\bar{\tau}_i^{\mathrm{F}}, N - \bar{\tau}_i^{\mathrm{F}}\}}{\min\{\tau_i^{\mathrm{F}}, N - \tau_i^{\mathrm{F}}\}} \right\rfloor \cdot v_i^{\mathrm{F}} \right. \right\}$$

wherein $N$ represents the sequence length of the root sequence, $\Delta_{\mathrm{T}}$ represents the maximum round-trip time, $\Delta_{\mathrm{F}}$ represents the maximum Doppler frequency shift, $\langle \tau_i^{\mathrm{F}}, v_i^{\mathrm{F}} \rangle$ represents the coordinates of the Doppler-domain cyclic shift reference point, $\langle \bar{\tau}_i^{\mathrm{F}}, \bar{v}_i^{\mathrm{F}} \rangle$ represents the restriction coordinates, an operator $\lfloor \cdot \rfloor$ represents rounding down, and an operator $\lceil \cdot \rceil$ represents rounding up; and

the quantity $k_i^{\mathrm{F}}$ of delay-domain complete cyclic shifts is determined based on the delay spacing $d_i^{\mathrm{F}}$, and satisfies:

$$k_i^{\mathrm{F}} = \left\lfloor d_i^{\mathrm{F}} / \Delta_{\mathrm{T}} \right\rfloor$$

wherein $\Delta_{\mathrm{T}}$ represents the maximum round-trip time, $d_i^{\mathrm{F}}$ represents the delay spacing, and an operator $\lfloor \cdot \rfloor$ represents rounding down;

the quantity $\bar{l}_i^{\mathrm{F}}$ of Doppler-domain near-end residual cyclic shifts satisfies:

$$\bar{l}_i^{\mathrm{F}} = \max\left\{ \left\lfloor \left( \left( \bar{v}_i^{\mathrm{F}} - \left\lfloor \frac{d_i^{\mathrm{F}} - \min\{\bar{\tau}_i^{\mathrm{F}}, N - \bar{\tau}_i^{\mathrm{F}}\}}{\min\{\tau_i^{\mathrm{F}}, N - \tau_i^{\mathrm{F}}\}} \right\rfloor \cdot v_i^{\mathrm{F}} + \left( \left\lceil \frac{k_i^{\mathrm{F}} - 1}{\lceil \min\{\tau_i^{\mathrm{F}}, N - \tau_i^{\mathrm{F}}\}/\Delta_{\mathrm{T}} \rceil} \right\rceil + 1 \right) \cdot v_i^{\mathrm{F}} \bmod \Delta_{\mathrm{F}} \right) / \Delta_{\mathrm{F}} \right\rfloor, 0 \right\}$$

wherein $N$ represents the sequence length of the root sequence, $\Delta_{\mathrm{T}}$ represents the maximum round-trip time, $\Delta_{\mathrm{F}}$ represents the maximum Doppler frequency shift, $\langle \tau_i^{\mathrm{F}}, v_i^{\mathrm{F}} \rangle$ represents the coordinates of the Doppler-domain cyclic shift reference point, $\langle \bar{\tau}_i^{\mathrm{T}}, \bar{v}_i^{\mathrm{T}} \rangle$ represents the restriction coordinates, $k_i^{\mathrm{F}}$ represents the quantity of delay-domain complete cyclic shifts, an operator $\lfloor \cdot \rfloor$ represents rounding down, and an operator $\lceil \cdot \rceil$ represents rounding up;

the quantity $\bar{k}_i^{\mathrm{F}}$ of delay-domain near-end residual cyclic shifts satisfies:

$$\bar{k}_i^{\mathrm{F}} = k_i^{\mathrm{F}} - \left\lceil \min\{\tau_i^{\mathrm{F}}, N - \tau_i^{\mathrm{F}}\}/\Delta_{\mathrm{T}} \right\rceil \cdot \left\lfloor \frac{k_i^{\mathrm{F}}}{\lceil \min\{\tau_i^{\mathrm{F}}, N - \tau_i^{\mathrm{F}}\}/\Delta_{\mathrm{T}} \rceil} \right\rfloor$$

wherein $N$ represents the sequence length of the root sequence, $\Delta_{\mathrm{T}}$ represents the maximum round-trip time, $\langle \tau_i^{\mathrm{F}}, v_i^{\mathrm{F}} \rangle$ represents the coordinates of the Doppler-domain cyclic shift reference point, $k_i^{\mathrm{F}}$ represents the quantity of delay-domain complete cyclic shifts, an operator $\lfloor \cdot \rfloor$ represents rounding down, and an operator $\lceil \cdot \rceil$ represents rounding up;

the quantity $\bar{\bar{l}}_i^{\mathrm{F}}$ of Doppler-domain far-end residual cyclic shifts satisfies:

$$\bar{\bar{l}}_i^{\mathrm{F}} = \max\left\{ \left\lfloor \left( \left( \bar{v}_i^{\mathrm{F}} - \left\lfloor \frac{d_i^{\mathrm{F}} - \min\{\bar{\tau}_i^{\mathrm{F}}, N - \bar{\tau}_i^{\mathrm{F}}\}}{\min\{\tau_i^{\mathrm{F}}, N - \tau_i^{\mathrm{F}}\}} \right\rfloor \cdot v_i^{\mathrm{F}} + \left( \left\lceil \frac{2k_i^{\mathrm{F}} - \lfloor (d_i^{\mathrm{F}} + \min\{\tau_i^{\mathrm{F}}, N - \tau_i^{\mathrm{F}}\})/\Delta_{\mathrm{T}} \rfloor}{\lceil \min\{\tau_i^{\mathrm{F}}, N - \tau_i^{\mathrm{F}}\}/\Delta_{\mathrm{T}} \rceil} \right\rceil + 1 \right) \cdot v_i^{\mathrm{F}} \bmod \Delta_{\mathrm{F}} \right) / \Delta_{\mathrm{F}} \right\rfloor, 0 \right\}$$

wherein $N$ represents the sequence length of the root sequence, $\Delta_{\mathrm{T}}$ represents the maximum round-trip time, $\Delta_{\mathrm{F}}$ represents the maximum Doppler frequency shift, $\langle \tau_i^{\mathrm{F}}, v_i^{\mathrm{F}} \rangle$ represents the coordinates of the Doppler-domain cyclic shift reference point, $\langle \bar{\tau}_i^{\mathrm{F}}, \bar{v}_i^{\mathrm{F}} \rangle$ represents the restriction coordinates, $k_i^{\mathrm{F}}$ represents the

quantity of delay-domain complete cyclic shifts, an operator $\lfloor \cdot \rfloor$ represents rounding down, and an operator $\lceil \cdot \rceil$ represents rounding up; and

the quantity $\overline{\overline{k}}_i^F$ of delay-domain far-end residual cyclic shifts satisfies:

$$\overline{\overline{k}}_i^F = \lfloor (d_i^F + \min\{\tau_i^F, N - \tau_i^F\})/\Delta_T \rfloor - k_i^F - \overline{k}_i^F$$

wherein $N$ represents the sequence length of the root sequence, $\Delta_T$ represents the maximum round-trip time, $\langle \tau_i^F, v_i^F \rangle$ represents the coordinates of the Doppler-domain cyclic shift reference point, $k_i^F$ represents the quantity of delay-domain complete cyclic shifts, $\overline{k}_i^F$ represents the quantity of delay-domain near-end residual cyclic shifts, and an operator $\lfloor \cdot \rfloor$ represents rounding down.

17. The method according to any one of claims 1 to 16, wherein determining the cyclic shift of the root sequence comprises:

   determining the delay-domain cyclic shift $\tau_v$ and the Doppler-domain cyclic shift $v_v$ based on the quantity of delay-domain complete cyclic shifts and the quantity of Doppler-domain complete cyclic shifts that correspond to the cyclic shift reference point of the root sequence; and
   determining the cyclic shift $C_v$ of the root sequence based on the delay-domain cyclic shift $\tau_v$ and the Doppler-domain cyclic shift $v_v$, wherein

   $v$ represents the index of the cyclic shift of the root sequence, and a value range of $v$ is $0 \leq v \leq \Omega_\star^\dagger - 1$.

18. The method according to claim 17, wherein the cyclic shift reference point of the root sequence is the delay-domain cyclic shift reference point, and the delay-domain cyclic shift $\tau_{k_\star^T \cdot l + k}$ and the Doppler-domain cyclic shift $v_{k_\star^T \cdot l + k}$ satisfy:

$$\begin{cases} \tau_{k_\star^T \cdot l + k} = k\Delta_T - \left\lfloor \dfrac{l}{\lceil \min\{v_\star^T, N - v_\star^T\}/\Delta_F \rceil} \right\rfloor \cdot \tau_\star^T \bmod \Delta_T \\ v_{k_\star^T \cdot l + k} = \mathrm{sgn}(v_\star^T - N/2) \cdot l\Delta_F \end{cases}$$

wherein $N$ represents the sequence length of the root sequence, $\Delta_T$ represents the maximum round-trip time, $\Delta_F$ represents the maximum Doppler frequency shift, $\langle \tau_\star^T, v_\star^T \rangle$ represents coordinates of the cyclic shift reference point of the root sequence, $k_\star^T$ represents the quantity of delay-domain complete cyclic shifts, $l_\star^T$ represents the quantity of Doppler-domain complete cyclic shifts, value ranges of $k$ and $l$ are $\{0 \leq k < k_\star^T, 0 \leq l < l_\star^T\}$,

an operator $\mathrm{sgn}(\cdot)$ represents a sign function, an operator $\lfloor \cdot \rfloor$ represents rounding down, and an operator $\lceil \cdot \rceil$ represents rounding up; and/or
the cyclic shift reference point of the root sequence is the Doppler-domain cyclic shift reference point, and the delay-domain cyclic shift $\tau_{l_\star^F \cdot k + l}$ and the Doppler-domain cyclic shift $v_{l_\star^F \cdot k + l}$ satisfy:

$$\begin{cases} \tau_{l_\star^F \cdot k + l} = \mathrm{sgn}(\tau_\star^F - N/2) \cdot k\Delta_T \\ v_{l_\star^F \cdot k + l} = l\Delta_F - \left\lfloor \dfrac{k}{\lceil \min\{\tau_\star^F, N - \tau_\star^F\}/\Delta_T \rceil} \right\rfloor \cdot v_\star^F \bmod \Delta_F \end{cases}$$

wherein $N$ represents the sequence length of the root sequence, $\Delta_T$ represents the maximum round-trip time, $\Delta_F$ represents the maximum Doppler frequency shift, $\langle \tau_\star^F, v_\star^F \rangle$ represents coordinates of the cyclic shift reference point of the root sequence, $l_\star^{\mathrm{F}}$ represents the quantity of Doppler-domain complete cyclic shifts, $k_\star^{\mathrm{F}}$ represents the quantity of delay-domain complete cyclic shifts, value ranges of $k$ and $l$ are $\{0 \le k < k_\star^{\mathrm{F}}, 0 \le l < l_\star^{\mathrm{F}}\}$, an operator sgn($\cdot$) represents a sign function, an operator $\lfloor \cdot \rfloor$ represents rounding down, and an operator $\lceil \cdot \rceil$ represents rounding up.

19. The method according to any one of claims 1 to 16, wherein determining the cyclic shift of the root sequence comprises:

determining the delay-domain cyclic shift $\tau_v$ and the Doppler-domain cyclic shift $v_v$ based on the quantity of delay-domain complete cyclic shifts, the quantity of Doppler-domain complete cyclic shifts, the quantity of delay-domain near-end residual cyclic shifts, and the quantity of Doppler-domain near-end residual cyclic shifts that correspond to the cyclic shift reference point of the root sequence; and
determining the cyclic shift $C_v$ of the root sequence based on the delay-domain cyclic shift $\tau_v$ and the Doppler-domain cyclic shift $v_v$, wherein

v represents the index of the cyclic shift of the root sequence, and a value range of v is $0 \le v \le \Omega_\star^\dagger - 1$.

20. The method according to claim 19, wherein the cyclic shift reference point of the root sequence is the delay-domain cyclic shift reference point, and the delay-domain cyclic shift $\tau_{k_\star^{\mathrm{T}} \cdot l_\star^{\mathrm{T}} + \overline{k}_\star^{\mathrm{T}} \cdot (\overline{l}_\star^{\mathrm{T}} + l) + \overline{k}_\star^{\mathrm{T}} - k}$ and the Doppler-domain cyclic shift $v_{k_\star^{\mathrm{T}} \cdot l_\star^{\mathrm{T}} + \overline{k}_\star^{\mathrm{T}} \cdot (\overline{l}_\star^{\mathrm{T}} + l) + \overline{k}_\star^{\mathrm{T}} - k}$ satisfy:

$$\begin{cases} \tau_{k_\star^{\mathrm{T}} \cdot l_\star^{\mathrm{T}} + \overline{k}_\star^{\mathrm{T}} \cdot (\overline{l}_\star^{\mathrm{T}} + l) + \overline{k}_\star^{\mathrm{T}} - k} = \tau_\star^{\mathrm{T}} - k\Delta_{\mathrm{T}} \\ v_{k_\star^{\mathrm{T}} \cdot l_\star^{\mathrm{T}} + \overline{k}_\star^{\mathrm{T}} \cdot (\overline{l}_\star^{\mathrm{T}} + l) + \overline{k}_\star^{\mathrm{T}} - k} = \mathrm{sgn}(v_\star^{\mathrm{T}} - N/2) \cdot l\Delta_{\mathrm{F}} \end{cases}$$

wherein $N$ represents the sequence length of the root sequence, $\Delta_{\mathrm{T}}$ represents the maximum round-trip time, $\Delta_{\mathrm{F}}$ represents the maximum Doppler frequency shift, $\langle \tau_\star^{\mathrm{T}}, v_\star^{\mathrm{T}} \rangle$ represents coordinates of the cyclic shift reference point of the root sequence, $k_\star^{\mathrm{T}}$ represents the quantity of delay-domain complete cyclic shifts, $l_\star^{\mathrm{T}}$ represents the quantity of Doppler-domain complete cyclic shifts, $\overline{k}_\star^{\mathrm{T}}$ represents the quantity of delay-domain near-end residual cyclic shifts, $\overline{l}_\star^{\mathrm{T}}$ represents the quantity of Doppler-domain near-end residual cyclic shifts, value ranges of $k$ and $l$ are $\{0 < k \le \overline{k}_\star^{\mathrm{T}}, -\overline{l}_\star^{\mathrm{T}} \le l < 0\}$, and an operator sgn($\cdot$) represents a sign function; and/or
the cyclic shift reference point of the root sequence is the Doppler-domain cyclic shift reference point, and the delay-domain cyclic shift $\tau_{l_\star^{\mathrm{F}} \cdot k_\star^{\mathrm{F}} + \overline{l}_\star^{\mathrm{F}} \cdot (\overline{k}_\star^{\mathrm{F}} + k) + \overline{l}_\star^{\mathrm{F}} - l}$ and the Doppler-domain cyclic shift $v_{l_\star^{\mathrm{F}} \cdot k_\star^{\mathrm{F}} + \overline{l}_\star^{\mathrm{F}} \cdot (\overline{k}_\star^{\mathrm{F}} + k) + \overline{l}_\star^{\mathrm{F}} - l}$ satisfy:

$$\begin{cases} \tau_{l_\star^{\mathrm{F}} \cdot k_\star^{\mathrm{F}} + \overline{l}_\star^{\mathrm{F}} \cdot (\overline{k}_\star^{\mathrm{F}} + k) + \overline{l}_\star^{\mathrm{F}} - l} = \mathrm{sgn}(\tau_\star^{\mathrm{F}} - N/2) \cdot k\Delta_{\mathrm{T}} \\ v_{l_\star^{\mathrm{F}} \cdot k_\star^{\mathrm{F}} + \overline{l}_\star^{\mathrm{F}} \cdot (\overline{k}_\star^{\mathrm{F}} + k) + \overline{l}_\star^{\mathrm{F}} - l} = v_\star^{\mathrm{F}} - l\Delta_{\mathrm{F}} \end{cases}$$

wherein $N$ represents the sequence length of the root sequence, $\Delta_{\mathrm{T}}$ represents the maximum round-trip time, $\Delta_{\mathrm{F}}$ represents the maximum Doppler frequency shift, $\langle \tau_\star^{\mathrm{F}}, v_\star^{\mathrm{F}} \rangle$ represents coordinates of the cyclic shift reference point of the root sequence, $l_\star^{\mathrm{F}}$ represents the quantity of Doppler-domain complete cyclic shifts, $k_\star^{\mathrm{F}}$ represents the quantity of delay-domain complete cyclic shifts, $\overline{l}_\star^{\mathrm{F}}$ represents the quantity of Doppler-domain near-end residual cyclic shifts, $\overline{k}_\star^{\mathrm{F}}$ represents the quantity of delay-domain near-end residual cyclic shifts, value ranges of $k$ and $l$ are $\{-\overline{k}_\star^{\mathrm{F}} \le k < 0, 0 < l \le \overline{l}_\star^{\mathrm{F}}\}$, and an operator sgn($\cdot$) represents a sign function.

**21.** The method according to any one of claims 1 to 16, wherein determining the cyclic shift of the root sequence comprises:

determining the delay-domain cyclic shift $\tau_v$ and the Doppler-domain cyclic shift $v_v$ based on the quantity of delay-domain complete cyclic shifts, the quantity of Doppler-domain complete cyclic shifts, the quantity of delay-domain near-end residual cyclic shifts, the quantity of Doppler-domain near-end residual cyclic shifts, the quantity of delay-domain far-end residual cyclic shifts, and the quantity of Doppler-domain far-end residual cyclic shifts that correspond to the cyclic shift reference point of the root sequence; and

determining the cyclic shift $C_v$ of the root sequence based on the delay-domain cyclic shift $\tau_v$ and the Doppler-domain cyclic shift $v_v$, wherein

v represents the index of the cyclic shift of the root sequence, and a value range of v is $0 \leq v \leq \Omega_\star^\dagger - 1$ .

**22.** The method according to claim 21, wherein the cyclic shift reference point of the root sequence is the delay-domain cyclic shift reference point, and the delay-domain cyclic shift $\tau_{k_\star^T \cdot l_\star^T + \bar{k}_\star^T \cdot \bar{l}_\star^T + \bar{\bar{k}}_\star^T \cdot (\bar{l}_\star^T + \bar{\bar{l}}_\star^T + l) + \bar{\bar{k}}_\star^T - k}$ and the Doppler-domain cyclic shift $v_{k_\star^T \cdot l_\star^T + \bar{k}_\star^T \cdot \bar{l}_\star^T + \bar{\bar{k}}_\star^T \cdot (\bar{l}_\star^T + \bar{\bar{l}}_\star^T + l) + \bar{\bar{k}}_\star^T - k}$ satisfy:

$$\begin{cases} \tau_{k_\star^T \cdot l_\star^T + \bar{k}_\star^T \cdot \bar{l}_\star^T + \bar{\bar{k}}_\star^T \cdot (\bar{l}_\star^T + \bar{\bar{l}}_\star^T + l) + \bar{\bar{k}}_\star^T - k} = \tau_\star^T - k\Delta_T \\ v_{k_\star^T \cdot l_\star^T + \bar{k}_\star^T \cdot \bar{l}_\star^T + \bar{\bar{k}}_\star^T \cdot (\bar{l}_\star^T + \bar{\bar{l}}_\star^T + l) + \bar{\bar{k}}_\star^T - k} = \mathrm{sgn}(v_\star^T - N/2) \cdot l\Delta_F \end{cases}$$

wherein N represents the sequence length of the root sequence, $\Delta_T$ represents the maximum round-trip time, $\Delta_F$ represents the maximum Doppler frequency shift, $\langle \tau_\star^T, v_\star^T \rangle$ represents coordinates of the cyclic shift reference point of the root sequence, $k_\star^T$ represents the quantity of delay-domain complete cyclic shifts, $l_\star^T$ represents the quantity of Doppler-domain complete cyclic shifts, $\bar{k}_\star^T$ represents the quantity of delay-domain near-end residual cyclic shifts, $\bar{l}_\star^T$ represents the quantity of Doppler-domain near-end residual cyclic shifts, $\bar{\bar{k}}_\star^T$ represents the quantity of delay-domain far-end residual cyclic shifts, $\bar{\bar{l}}_\star^T$ represents the quantity of Doppler-domain far-end residual cyclic shifts, value ranges of k and l are $\{0 < k \leq \bar{\bar{k}}_\star^T, -\bar{l}_\star^T - \bar{\bar{l}}_\star^T \leq l < -\bar{l}_\star^T\}$ , and an operator sgn($\cdot$) represents a sign function; and/or

the cyclic shift reference point of the root sequence is the Doppler-domain cyclic shift reference point, and the delay-domain cyclic shift $\tau_{l_\star^F \cdot k_\star^F + \bar{l}_\star^F \cdot \bar{k}_\star^F + \bar{\bar{l}}_\star^F \cdot (\bar{k}_\star^F + \bar{\bar{k}}_\star^F + k) + \bar{\bar{l}}_\star^F - l}$ and the Doppler-domain cyclic shift $v_{l_\star^F \cdot k_\star^F + \bar{l}_\star^F \cdot \bar{k}_\star^F + \bar{\bar{l}}_\star^F \cdot (\bar{k}_\star^F + \bar{\bar{k}}_\star^F + k) + \bar{\bar{l}}_\star^F - l}$ satisfy:

$$\begin{cases} \tau_{l_\star^F \cdot k_\star^F + \bar{l}_\star^F \cdot \bar{k}_\star^F + \bar{\bar{l}}_\star^F \cdot (\bar{k}_\star^F + \bar{\bar{k}}_\star^F + k) + \bar{\bar{l}}_\star^F - l} = \mathrm{sgn}(\tau_\star^F - N/2) \cdot k\Delta_T \\ v_{l_\star^F \cdot k_\star^F + \bar{l}_\star^F \cdot \bar{k}_\star^F + \bar{\bar{l}}_\star^F \cdot (\bar{k}_\star^F + \bar{\bar{k}}_\star^F + k) + \bar{\bar{l}}_\star^F - l} = v_\star^F - l\Delta_F \end{cases}$$

wherein N represents the sequence length of the root sequence, $\Delta_T$ represents the maximum round-trip time, $\Delta_F$ represents the maximum Doppler frequency shift, $\langle \tau_\star^F, v_\star^F \rangle$ represents coordinates of the cyclic shift reference point of the root sequence, $l_\star^F$ represents the quantity of Doppler-domain complete cyclic shifts, $k_\star^F$ represents the quantity of delay-domain complete cyclic shifts, $\bar{l}_\star^F$ represents the quantity of Doppler-domain near-end residual cyclic shifts, $\bar{k}_\star^F$ represents the quantity of delay-domain near-end residual cyclic shifts, $\bar{\bar{l}}_\star^F$ represents the quantity of Doppler-domain far-end residual cyclic shifts, $\bar{\bar{k}}_\star^F$ represents the quantity of delay-domain far-end residual cyclic shifts, value ranges of k and l are $\{-\bar{k}_\star^F - \bar{\bar{k}}_\star^F \leq k < -\bar{k}_\star^F, 0 < l \leq \bar{\bar{l}}_\star^F\}$ , and an operator sgn($\cdot$) represents a sign function.

23. The method according to any one of claims 1 to 22, further comprising:

   determining a first sequence from a sequence set, wherein the sequence set comprises cyclic shift sequences of one or more root sequences; and
   outputting the first sequence.

24. An apparatus, comprising a unit configured to implement the method according to any one of claims 1 to 23.

25. An apparatus, comprising a processor and a memory, wherein the processor is coupled to the memory, and the processor is configured to implement the method according to any one of claims 1 to 23.

26. An apparatus, comprising a processor and an interface circuit, wherein the interface circuit is configured to receive a signal from an apparatus other than the apparatus and transmit the signal to the processor, or send a signal from the processor to an apparatus other than the apparatus, and the processor is configured to implement the method according to any one of claims 1 to 23 by using a logic circuit or executing code instructions.

27. A computer-readable storage medium, wherein the computer-readable storage medium stores instructions, and the instructions are run on a computer, to enable the computer to perform the method according to any one of claims 1 to 23.

28. A computer program product, comprising a computer program or instructions, wherein when the computer program or the instructions are run by an apparatus, the method according to any one of claims 1 to 23 is performed.

29. A chip, comprising a processor, wherein the processor is coupled to a memory, and is configured to execute a computer program or instructions stored in the memory, to enable the chip to implement the method according to any one of claims 1 to 23.

FIG. 1

201: A communication apparatus determines a cyclic shift of a root sequence, where the cyclic shift of the root sequence is associated with a sequence length of the root sequence, a root sequence number, a maximum round-trip time, and a maximum Doppler frequency shift

202: The communication apparatus determines a cyclic shift sequence based on the cyclic shift of the root sequence, where an ambiguity function of the cyclic shift sequence is equal to zero within a range of the maximum round-trip time and the maximum Doppler frequency shift

FIG. 2

FIG. 3a

FIG. 3b

FIG. 4

(a) $\langle \tau_1^T, \nu_1^T \rangle = \langle 2, 96 \rangle$

(b) $\langle \tau_2^T, \nu_2^T \rangle = \langle 3, 5 \rangle$

(c) $\langle \tau_3^T, \nu_3^T \rangle = \langle 26, 136 \rangle$

(d) $\langle \tau_4^T, \nu_4^T \rangle = \langle 26, 136 \rangle$

(e) $\langle \tau_1^F, \nu_1^F \rangle = \langle 113, 3 \rangle$

(f) $\langle \tau_2^F, \nu_2^F \rangle = \langle 3, 5 \rangle$

(g) $\langle \tau_3^F, \nu_3^F \rangle = \langle 137, 43 \rangle$

(h) $\langle \tau_4^F, \nu_4^F \rangle = \langle 1, 48 \rangle$

FIG. 5

(a) $\langle \tau_1^T, v_1^T \rangle = \langle 2,100 \rangle$    (b) $\langle \tau_2^T, v_2^T \rangle = \langle 3,11 \rangle$    (c) $\langle \tau_3^T, v_3^T \rangle = \langle 11,133 \rangle$    (d) $\langle \tau_4^T, v_4^T \rangle = \langle 14,5 \rangle$

(e) $\langle \tau_5^T, v_5^T \rangle = \langle 25,138 \rangle$

(f) $\langle \tau_1^F, v_1^F \rangle = \langle 14,5 \rangle$    (g) $\langle \tau_2^F, v_2^F \rangle = \langle 128,6 \rangle$    (h) $\langle \tau_3^F, v_3^F \rangle = \langle 3,11 \rangle$    (i) $\langle \tau_4^F, v_4^F \rangle = \langle 137,39 \rangle$

(j) $\langle \tau_5^F, v_5^F \rangle = \langle 1,50 \rangle$

FIG. 6

(a) $\langle \tau_1^T, \nu_1^T \rangle = \langle 6, 120 \rangle$

(b) $\langle \tau_2^T, \nu_2^T \rangle = \langle 7, 1 \rangle$

(c) $\langle \tau_1^F, \nu_1^F \rangle = \langle 133, 19 \rangle$

(d) $\langle \tau_2^F, \nu_2^F \rangle = \langle 1, 20 \rangle$

FIG. 7

(a) $\langle \tau_1^T, \nu_1^T \rangle = \langle 12, 132 \rangle$

(b) $\langle \tau_2^T, \nu_2^T \rangle = \langle 13, 4 \rangle$

(c) $\langle \tau_3^T, \nu_3^T \rangle = \langle 25, 136 \rangle$

(d) $\langle \tau_4^T, \nu_4^T \rangle = \langle 28, 1 \rangle$

(e) $\langle \tau_1^F, \nu_1^F \rangle = \langle 114, 3 \rangle$

(f) $\langle \tau_2^F, \nu_2^F \rangle = \langle 13, 4 \rangle$

(g) $\langle \tau_3^F, \nu_3^F \rangle = \langle 127, 7 \rangle$

(h) $\langle \tau_4^F, \nu_4^F \rangle = \langle 1, 11 \rangle$

FIG. 8

Communication apparatus 900

Processing unit 910

Transceiver unit 920

FIG. 9

Communication apparatus 10000

Processor 1010

Interface circuit 1020

Memory 1030

FIG. 10

## INTERNATIONAL SEARCH REPORT

| | International application No. |
| --- | --- |
| | **PCT/CN2023/111043** |

| A. | CLASSIFICATION OF SUBJECT MATTER |
| --- | --- |

H04J 13/00(2011.01)i

According to International Patent Classification (IPC) or to both national classification and IPC

| B. | FIELDS SEARCHED |
| --- | --- |

Minimum documentation searched (classification system followed by classification symbols)

IPC: H04J

Documentation searched other than minimum documentation to the extent that such documents are included in the fields searched

Electronic data base consulted during the international search (name of data base and, where practicable, search terms used)

CNABS; CNTXT; VEN; WOTXT; EPTXT; USTXT; CNKI; 3GPP: 根序列, 循环移位, 序列长度, 根序列号, 最大往返时延, 最大多普勒频移, 模糊函数, 索引, root sequence, cyclic shift, length, number, maximum RTT, maximum doppler shift, ambiguity function, index, zadoff-chu, ZC

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 112752351 A (HUAWEI TECHNOLOGIES CO., LTD.) 04 May 2021 (2021-05-04) description, paragraphs [0073]-[0260] | 1-29 |
| A | CN 112822786 A (HUAWEI TECHNOLOGIES CO., LTD.) 18 May 2021 (2021-05-18) entire document | 1-29 |
| A | CN 115720380 A (HUAWEI TECHNOLOGIES CO., LTD.) 28 February 2023 (2023-02-28) entire document | 1-29 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 December 2023** | **11 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/111043**

| Patent document cited in search report | | | Publication date (day/month/year) | Patent family member(s) | Publication date (day/month/year) |
|---|---|---|---|---|---|
| CN | 112752351 | A | 04 May 2021 | None | |
| CN | 112822786 | A | 18 May 2021 | None | |
| CN | 115720380 | A | 28 February 2023 | None | |

Form PCT/ISA/210 (patent family annex) (July 2022)